# EUROPEAN PATENT SPECIFICATION

(11) **EP 2 784 862 B1**
(45) Date of publication and mention of the grant of the patent: **23.11.2016**
(21) Application number: 14162013.8
(22) Date of filing: 27.03.2014
(51) Int. Cl.: H01M 8/04089, H01M 8/04223, H01M 8/0438, H01M 8/0444, H01M 8/04492, H01M 8/04746, H01M 8/04791, H01M 8/0612, H01M 8/1004, H01M 8/0432, H01M 8/04664, H01M 8/124, H01M 8/12

(54) **SOLID OXIDE FUEL CELL**
FESTOXID-BRENNSTOFFZELLE
PILE À COMBUSTIBLE À OXYDE SOLIDE

(30) Priority: 28.03.2013 JP 2013070064; 28.03.2013 JP 2013070065
(43) Date of publication of application: 01.10.2014
(73) Proprietor: Toto Ltd., Fukuoka 802-8601 (JP)
(72) Inventor: Matsuo, Takuya, Kitakyushu-shi, Fukuoka 8028601 (JP); Akagi, Yousuke, Kitakyushu-shi, Fukuoka 8028601 (JP); Shimazu, Megumi, Kitakyushu-shi, Fukuoka 8028601 (JP); Kobayashi, Chihiro, Kitakyushu-shi, Fukuoka 8028601 (JP); Shiono, Mitsunobu, Kitakyushu-shi, Fukuoka 8028601 (JP); Omoshiki, Koji, Kitakyushu-shi, Fukuoka 8028601 (JP); Ishiguro, Akira, Kitakyushu-shi, Fukuoka 8028601 (JP); Kakinuma, Yasuo, Kitakyushu-shi, Fukuoka 8028601 (JP)
(74) Representative: Witte, Weller & Partner Patentanwälte mbB

(56) References cited:
- EP-A2- 1 447 874
- WO-A1-2013/141402
- WO-A1-2013/141403
- ETTLER M ET AL: "Durability of Ni anodes during reoxidation cycles", JOURNAL OF POWER SOURCES, ELSEVIER SA, CH, vol. 195, no. 17, 1 September 2010 (2010-09-01), - 30 September 2010 (2010-09-30), pages 5452-5467, XP027046712, ISSN: 0378-7753 [retrieved on 2010-03-19]

## Description

### Technical Field

0001 The present invention pertains to a solid oxide fuel cell, and more particularly to a solid oxide fuel cell in which the fuel cell electrodes comprise composite material containing nickel.

### Background Art

0002 Solid oxide fuel cells ("SOFCs" below) are fuel cells which operate at a relatively high temperature in which, using an oxide ion-conducting solid electrolyte as the electrolyte, with electrodes attached to both sides thereof, fuel gas is supplied to one side thereof and oxidant (air, oxygen, or the like) or oxidizing agent is supplied to the other side thereof.

0003 Japanese Published Unexamined Patent Application No. 2012-3850 (Patent Document 1) sets forth a solid oxide fuel cell. In this solid oxide fuel cell, when a fuel cell operating at a high temperature is turned off, air is supplied to the air electrode side of the fuel cell stack while continuing to supply a small amount of fuel and fuel-reforming water, and the temperature inside the fuel cell module is reduced by the cooling effect of this air. I.e., in this fuel cell, during the stopping step fuel continues to be supplied even after the extraction of power from the fuel cell module is stopped, while at the same time the fuel cell stack is cooled by delivering a large volume of cooling air. Next, when the cell stack temperature has been reduced to less than the fuel cell oxidation temperature, the supply of fuel is stopped, after which only the supply of cooling air is continued until the temperature drops sufficiently, thereby safely turning off the fuel cell.

0004 Fuel cells are also known in which a "shutdown" stop is performed, wherein power extraction and the supply of fuel, fuel-reforming water, and generating air (air fed to the air electrode) is completely stopped in a short time period.

Japanese Published Unexamined Patent Application No. 2010-27579 (Patent Document 2) sets forth a fuel cell system. In this fuel cell system, during an emergency stop the feed pump for supplying fuel to the reformer, the reform water pump for supplying water for steam reforming, and the air blower for feeding air to the air electrode side of the cell stack are stopped. Thereafter, when the feed pump and reforming water pump are restarted under emergency stop operation control, fuel gas which had been adsorbed by the adsorber is fed to the reformer and steam reforming is carried out using water supplied from the reform water pump, even if the supply of fuel gas from the fuel supply source is cut off. Reforming fuel is thus supplied to the cell stack over a predetermined period even after the supply of fuel gas is cut off, and oxidation of fuel electrodes by reverse flow of air is prevented.

0005 Furthermore, Japanese Published Unexamined Patent Application No. 2012-138186 (Patent Document 3) sets forth a high temperature operation fuel cell system. In this high temperature operation fuel cell system, during an emergency stop the feed pump for supplying fuel gas is stopped and the reforming pump for supplying water to the reformer is activated. When the reforming water pump is activated, the water supplied expands in volume due to vaporization inside the reformer. Therefore even if the supply of raw fuel gas from the fuel supply source is cut off, the fuel gas remaining in the fuel gas supply line downstream of the reformer is pushed toward the fuel cell (cell stack) side by the pressure of the volumetrically expanded steam. Oxidation of the fuel electrode by a reverse flow of air is thus prevented.

### Prior Art References

### Patent Documents

0006
Patent Document 1: Japanese Published Unexamined Patent Application No. 2012-3850
Patent Document 2: Japanese Published Unexamined Patent Application No. 2010-27579
Patent Document 3: Japanese Published Unexamined Patent Application No. 2012-138186

### Summary of the Invention

### Problems the Invention Seeks to Resolve

0007 It is known that in the fuel cell stopping step when air contacts the fuel electrode in a high temperature fuel cell stack, the fuel electrode oxidatively expands, resulting in damage to the individual fuel cell units.

0008 In the fuel cell set forth in Japanese Published Unexamined Patent Application No. 2012-3850 (Patent Document 1) described above, a reverse flow of cooling air supplied to the air electrode side of the fuel cell cells is prevented in the stopping state as well by supplying fuel until the fuel cell stack falls to a predetermined temperature, thereby preventing fuel electrode oxidation in the fuel cell.

0009 In the fuel cell system set forth in Japanese Published Unexamined Patent Application No. 2010-27579 (Patent Document 2), as well, fuel gas which had been adsorbed by the adsorber is fed to the cell stack for a certain period of time and oxidation of the fuel electrode is prevented by operating the feed pump even after the supply from the fuel gas supply source is cut off.

0010 In addition, in the high temperature operation fuel cell system set forth in Japanese Published Unexamined Patent Application No. 2012-138186 (Patent Document 3), the reforming water pump is activated immediately after the raw fuel pump stops, so oxidation of the fuel electrode is prevented by pushing out residual fuel to the cell stack side with steam vaporized and expanded inside the reformer. Also, in Japanese Published Unexamined Patent Application No. 2012-138186 (Patent Document 3), the temperature at which fuel electrodes oxidize is normally 400°C or greater.

0011 The present inventors, however, discovered a phenomenon wherein in the fuel cell stopping step, when air is introduced to the fuel cell stack fuel electrode side at a temperature below 400°C, damage to a number of fuel cells occurs, notwithstanding that the temperature is a low one at which oxidative expansion of the fuel electrode is not supposed to occur. The inventors, as a result of various experiments and investigations to reveal the cause of said occurrences, discovered a surprising phenomenon wherein, as explained below, in a specific temperature range within a low temperature region in which fuel electrode oxidation was previously not believed to occur, there is shrinkage rather than expansion, due to fuel electrode oxidation.

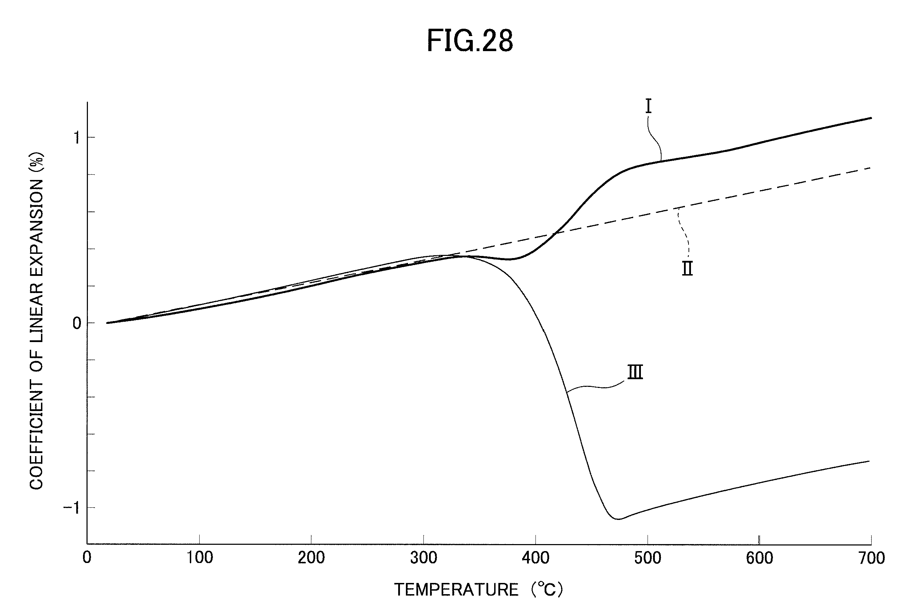

0012 Referring to Fig. 28, we explain the nickel-bearing composite material forming fuel electrodes is shrunk by oxidation in a certain temperature range.

The horizontal axis of the graph in Fig. 28 shows temperature (°C), while the vertical axis shows percentage linear expansion (%). The heavy line I in the graph indicates the linear expansion rate when the reduced form material of the fuel electrodes in fuel cells is gradually heated in an air atmosphere. The fuel electrode comprises a nickel-bearing composite material formed of a mixture of nickel and zirconium doped with yttrium (NiYSZ). The broken line II in the graph shows the linear expansion rate when the temperature of a NiYSZ oxidation body is similarly increased. The fine line III in the graph shows the linear expansion rate when the temperature of a reduced form nickel is similarly raised. The fuel electrode material and the nickel were both raised from room temperature (25°C) to 700°C at a temperature rise rate of 0.5°C/minute. The linear expansion rates of the fuel electrode material and of nickel were measured using thermo-mechanical analysis (TMA) based on their volumes at room temperature.

0013 The fuel electrode material used for measurement is a nickel-bearing reduced form composite material formed of a mixture of nickel and zirconium doped with yttrium (NiYSZ). The mixture ratio of Ni and the YSZ oxide is 50:50.

Note that because hydrogen is supplied during operation of the fuel cell, the fuel electrode material has reduced form when the fuel cell is stopped.

0014 Focusing first on broken line II in the graph, the length of the composite material oxide body expands monotonically at an essentially fixed proportion to the rise in temperature. Because the composite body oxidation body is already oxidized, this volumetric increase is believed to be caused by thermal expansion, which is unaffected by oxidation.

0015 Next, focusing on the heavy line I in the graph, heavy line I and broken line II are approximately parallel, so it is believed that the volume increase in the region from room temperature to around 350°C, and in the 480°C to high temperature region are caused by thermal expansion. In contrast, the length of the reduced form composite material at first declines slightly in the region from approximately 350°C to approximately 400°C, diminishes in the extreme in the region of 380°C, then suddenly increases from the 400°C region to the 480°C region. Thus the reduced form composite material was formerly believed to expand by oxidation only, but in fact it has been discovered that to shrink in the temperature region from approximately 350°C to approximately 400°C.

0016 In addition, focusing on the fine line III in the graph, it can be seen that from approximately 350°C to approximately 480°C, there is a decline in volume as the temperature rises. Because of these effects, the unique volumetric changes in the reduced form composite material from the 350°C region to the 480°C region shown by heavy line I are believed to be caused not by the already oxidized YSZ oxide, but by the nickel among the reduced form composite materials.

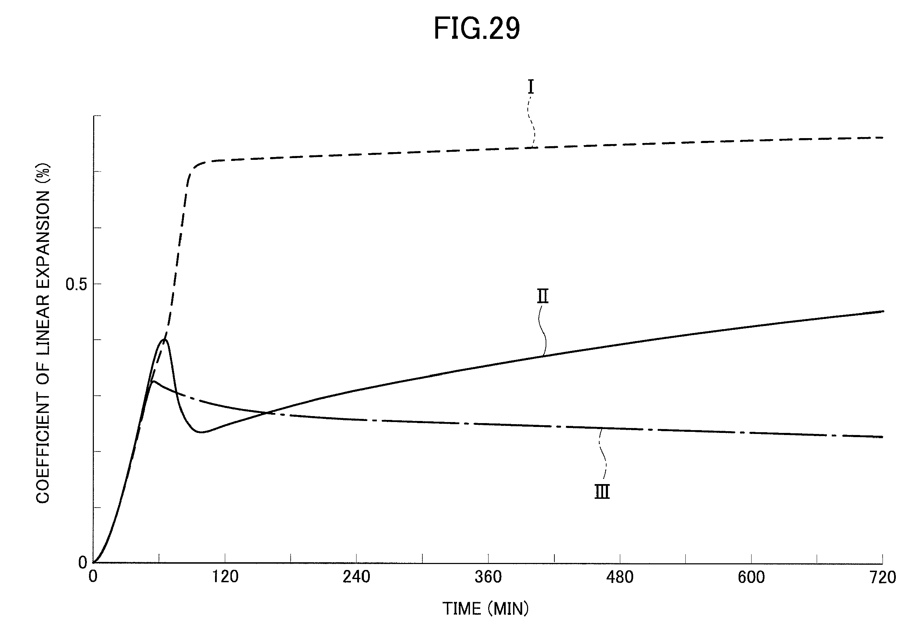

0017 Next, referring to Fig. 29, we explain in more detail the shrinking by oxidation of the nickel-bearing composite material forming the fuel electrode in a predetermined temperature range. Note that the fuel electrode material used for measurement shown in Fig. 29 has the same constituents as the material used for measurement shown in Fig. 28.

0018 The horizontal axis of the graph in Fig. 29 shows elapsed time (minutes) from the start of the temperature rise, while the vertical axis shows percentage linear expansion (%). The broken line I in the graph shows the change over time in the fuel electrode length when the temperature of a reduced form fuel electrode material is suddenly raised to 500°C at a temperature rise rate of 6°C/minute in an air atmosphere, and the 500°C temperature is maintained. As shown by broken line I, the fuel electrode material suddenly thermally expands until it reaches 500°C approximately 100 minutes after the start of heating, growing in length by approximately 0.7%. Next, after approximately 100 minutes, the length of the fuel electrode material grows gradually with the passage of time in a 500°C air atmosphere. In this case, the fuel electrode material is substantially oxidized at 500°C. It can therefore be seen that when oxidized at 500°C, the fuel electrode material expands in the way formerly thought.

0019 Next, the solid line II in the graph shows the change over time in the fuel electrode length when the temperature of a reduced form fuel electrode material is suddenly raised to 400°C at a temperature rise rate of 6°C/minute in an air atmosphere, and the 400°C temperature is maintained. In this case, the fuel electrode material is substantially oxidized at 400°C. As shown by solid line II, the fuel electrode material suddenly thermally expands until reaching 400°C approximately 60 minutes after the start of heating, growing in length by approximately 0.4%.

0020 However, after some time between approximately 60 and 100 minutes, the length of the fuel electrode material suddenly decreases in a 400°C air atmosphere to a growth rate of approximately 0.23%. Therefore the fuel electrode material is believed to have shrunk greatly due to oxidation at 400°C.

0021 Next, after approximately 100 minutes, the length of the fuel electrode material grows gradually with the passage of time in a 400°C air atmosphere. This is believed to correspond to the previously known expansion by oxidation.

0022 It can thus be seen from solid line II that the fuel electrode not only expands, but at least temporarily also suddenly shrinks when oxidized at 400°C.

0023 Next, the dot and dash line III in the graph shows the change over time in the fuel electrode length when the temperature of a reduced form fuel electrode material is suddenly raised to 300°C at a temperature rise rate of 6°C/minute in an air atmosphere, and the 300°C temperature is maintained. As shown by dot and dash line III, the fuel electrode material suddenly thermally expands until it reaches 300°C approximately 50 minutes after the start of heating, growing in length by approximately 0.33%. However, after approximately 50 minutes the length of the fuel electrode material gradually decreases in a 300°C air atmosphere. In this case, the fuel electrode material is substantially oxidized at 300°C. It can therefore be seen that the fuel electrode material shrinks, although very little, when oxidized at 300°C.

0024 Thus it can be seen that the fuel electrode material merely expands when oxidized at 500°C, but when oxidized at 400°C, it gradually expands after first shrinking, and when oxidized at 300°C, it gradually shrinks, although only by a small amount. Therefore it can be seen that the fuel electrode material not only expands in the conventionally known way, but also shrinks within a particular temperature range due to oxidization.

0025 Here, referring again to Fig. 28, as shown by heavy line II, the degree of oxidation shrinkage of the fuel electrode material from around 350°C to around 400°C is very small compared to the degree of oxidation expansion at higher temperatures. As a result, the stress on individual fuel cell units from oxidation shrinkage is also smaller than the stress from oxidation expansion at higher temperatures. Also, if the individual fuel cell units have sufficient strength that they can withstand the stress of oxidation shrinkage, damage to the individual fuel cell units will not occur even if oxidation shrinkage is applied. This seem to be the reason why the temperature at which fuel electrodes oxidize was previously believed to be normally 400°C or greater, and why damage to fuel cell units by oxidation shrinkage below 400°C did not occur often enough to become a problem.

0026 However in recent years, in order to further reduce the operating temperature of solid oxide fuel cells there has been a demand for reduced thickness, for example, in generating bodies containing fuel cell unit fuel electrodes and air electrodes. Reducing the thickness of the generating body in the individual fuel cell units reduces the strength of the individual fuel cell units and increases the likelihood of damage. Therefore if fuel cell units become thinner in the future, it is anticipated that the problem of damage caused by oxidation shrinkage in the low temperature region, in which oxidation of the individual fuel cell units was previously not thought to occur, will be manifested.

0027 Therefore the present inventors discovered that in the solid oxide fuel cell stopping step, even in the low temperature region where it was previously believed fuel electrode oxidization did not occur, fuel electrodes oxidatively shrink rather than oxidatively expand, leading to the new technical problem of damage to the individual fuel cell units.

0028 The invention therefore has the object of providing a solid oxide fuel cell capable of suppressing the occurrence of damage to fuel cell units by oxidation shrinkage of fuel electrodes.

### Means for Resolving Problems

0029 In order to solve the above-described problems, the solid oxide fuel cell of the invention is a solid oxide fuel cell for generating electricity by reacting water and oxidant gas in a fuel cell unit, wherein the fuel cell unit comprises a fuel electrode to which hydrogen is supplied, wherein the fuel electrode comprises a composite material containing nickel and shrinks by oxidation in the temperature range between 350° and 400° Celsius, an oxidant gas electrode to which oxidant gas is supplied, and a solid electrolyte placed between the fuel electrode and the oxidant gas electrode; a reaction prevention layer placed between the fuel electrode and solid electrolyte to prevent a chemical reaction between the fuel electrode material and the solid electrolyte material; wherein the fuel cell unit contains a fuel gas flowpath for directing fuel gas containing hydrogen; and the fuel cell unit has an electrical generation laminated section in which the fuel electrode, the reaction prevention layer, the solid electrolyte and the oxidant gas electrode are laminated in that order starting from the fuel gas flowpath side; wherein the solid oxide fuel cell has a fuel cell module comprising the aforementioned fuel cell unit; a fuel supply apparatus for supplying fuel to the fuel cell module; a water supply apparatus for supplying steam reforming water to the fuel cell module; an oxidant gas supply apparatus for supplying oxidant gas to the oxidant gas electrode of the fuel cell unit; a reformer disposed inside the fuel cell module, for steam reforming fuel supplied from the fuel supply apparatus using water supplied from the water supply apparatus; a fuel/exhaust gas passage for directing fuel/exhaust gas to outside the fuel cell module from the fuel supply apparatus through the reformer and the fuel cell unit fuel gas flowpath; and a controller for controlling the fuel supply apparatus, the water supply apparatus, the oxidant gas supply apparatus, and the extraction of power from the fuel cell module; wherein the controller is equipped with a shutdown circuit for stopping the supply of fuel and electrical generation, the fuel/exhaust gas passage is configured to function as a mechanical pressure retaining means for maintaining pressure inside the fuel gas flowpath of the fuel cell units at a higher level than the pressure outside the fuel cell units in the fuel cell module until the temperature of the fuel electrodes declines to 400°C after the supply of fuel and generation of electricity is stopped by the shutdown circuit; and the shutdown circuit has a pressure maintaining control circuit for executing a pressure retaining control to increase pressure inside the fuel gas flowpath in order to maintain the entire surface of the fuel gas flowpath side of the fuel electrode forming the electrical generation laminated section in an oxygen-free atmosphere by suppressing pressure drops in the fuel gas flowpath caused by temperature drops in the fuel electrode down to 350°C after the fuel electrode temperature declines to 400°C.

0030 In the invention thus constituted, in the solid oxide fuel cell stopping step, fuel electrodes comprising composite material including nickel is maintained in an oxygen-free atmosphere in the low temperature region down to 350°C where it was previously not believed that fuel electrodes oxidize. As a result, shrinkage by oxidation of fuel electrodes in said low temperature region is suppressed. Therefore the invention is capable of suppressing the occurrence of damage to fuel cell units caused by fuel electrode oxidation shrinkage rather than fuel electrode oxidation expansion.

The reaction prevention layer is a partitioning layer erected to prevent a chemical reaction from occurring between the fuel electrode layer material and the solid oxide electrolyte material. The reaction prevention layer is also one which does not contribute to electrical generation, but actually impedes electrical generation. Therefore increasing the thickness of the reaction prevention layer in order to increase the strength of the reaction prevention layer is expected to reduce electrical generation efficiency, and is therefore undesirable. Forming the reaction prevention layer of stiffer material can also be expected to increase material cost, and is therefore undesirable.

In the invention, fuel cell unit preferably have a fuel gas flowpath for directing fuel gas containing hydrogen, and the fuel cell unit has an electrical generation electrode laminated section in which, in sequence starting from the fuel gas flowpath side, the fuel electrode, the reaction prevention layer, the solid electrolyte, and the oxidant gas electrode are laminated; and the solid oxide fuel cell prevents partial shrinkage of fuel electrodes caused by partial oxidation of the fuel electrodes forming the electrical generation laminated section when the temperature of the fuel electrode is between 350°C and 400°C, after electrical generation is stopped, by maintaining an oxygen-free atmosphere over the entire surface on the fuel gas flowpath side of the fuel electrode forming the electrical generation laminated section.

In the low temperature region between 350°C and 400°C, fuel electrodes shrink by oxidation.

The shrinkage rate caused by oxidation of the fuel electrode is smaller than the expansion rate caused by oxidation of the fuel electrode, therefore in general stress caused by oxidation shrinkage is smaller than stress caused by oxidation expansion of fuel electrodes in higher temperature regions. However, if just a part of a fuel electrode oxidizes in said low temperature region, only that part shrinks, therefore stress concentrates at the borderline between the oxidized portion and the non-oxidized portion. As a result, the probability increases that fuel cell units will break in the region of the border between the oxidized portion and the non-oxidized portion. In particular, if stress concentrates in one part of the electrical generation laminated section where the fuel electrode, solid electrolyte, and oxidant gas electrode are layered within the fuel cell unit, there is a tendency for the oxidant gas electrode to peel off.

Therefore in the present invention, it is preferable to prevent partial shrinkage of the fuel electrode due to partial oxidation of the fuel electrode forming the electrical generation lamination portion by maintaining the entire surface on the fuel gas flowpath side of the fuel electrode forming the electrical generation laminated section in an oxygen-free atmosphere when the fuel electrode temperature is between 350°C and 400°C. As a result, the occurrence of the fuel cell unit breakage through peeling of the oxidant gas electrode in the electrical generation section is suppressed.

Using the present invention thus constituted, by appropriate distribution of the balance between the flowpath resistances of each portion of the fuel/exhaust gas passage functioning as the mechanical pressure retaining means we succeeded in maintaining the pressure inside the fuel cell unit fuel gas flowpath at a higher level than the pressure outside the fuel cell unit until the fuel electrode declined to 400°C after shutdown. We thus could prevent reverse flow of oxidant gas from the outflow-side opening end into the fuel gas flowpath. The risk of fuel electrode oxidation is sufficiently reduced using this mechanical pressure retaining means, but if an unexpected external disturbance such as a change in air pressure occurs outside design parameters, there is a concern that pressure inside the fuel gas flowpath cannot be maintained by this mechanical means alone. In particular, in the low temperature region of 350°C to 400°C where fuel electrode oxidation shrinkage occurs, the pressure inside the fuel gas flowpath is also reduced, so the danger of a reverse flow of oxidant gas is high.

The shutdown circuit therefore executes a pressure retaining control to increase pressure inside the fuel gas flowpath until the fuel electrode temperature falls to 350°C after declining to 400°C. Because the pressure retaining control is executed after the fuel electrode temperature declines to 400°C, the pressure inside and outside the fuel cell units has declined greatly, and a very small compensation of the pressure on the fuel electrode side is sufficient. By executing pressure retaining control in a fuel electrode temperature region of 350°C to 400°C, partial oxidation of fuel electrodes in the electrical generation laminated section is prevented in this temperature region.

0031 The fuel cell unit preferably has a fuel gas flowpath for directing fuel gas containing hydrogen, and the fuel cell unit has an electrical generation electrode laminated section in which, in sequence starting from the fuel gas flowpath side, the fuel electrode, the solid electrolyte, and the oxidant gas electrode are laminated; and the solid oxide fuel cell prevents partial shrinkage of fuel electrode caused by partial oxidation of the fuel electrode forming the electrical generation laminated section when the temperature of the fuel electrode is between 350°C and 400°C, after electrical generation is stopped, by maintaining an oxygen-free atmosphere over the entire surface on the fuel gas flowpath side of the fuel electrode forming the electrical generation laminated section.

0032 In the low temperature region between 350°C and 400°C, the fuel electrode shrinks by oxidation.

The shrinkage rate caused by oxidation of the fuel electrode is smaller than the expansion rate caused by oxidation of the fuel electrode, therefore in general stress caused by oxidation shrinkage is smaller than stress caused by oxidation expansion of the fuel electrode in higher temperature regions. However, if just a part of the fuel electrode oxidizes in said low temperature region, only that part shrinks, therefore stress concentrates at the border between the oxidized portion and the non-oxidized portion. As a result, the probability increases that the fuel cell unit will break in the region of the border between the oxidized portion and non-oxidized portion. In particular, if stress concentrates in one part of the electrical generation laminated section where the fuel electrode, solid electrolyte, and oxidant gas electrode are layered within the fuel cell unit, there is a tendency for the oxidant gas electrode to peel off.

0033 Therefore in the present invention it is preferable to prevent partial shrinkage of the fuel electrode due to partial oxidation of the fuel electrode forming the electrical generation lamination section by maintaining the entire surface on the fuel gas flowpath side of the fuel electrode forming the electrical generation laminated section in an oxygen-free atmosphere when the fuel electrode temperature is between 350°C and 400°C. As a result, the occurrence of fuel cell unit breakage through peeling of the oxidant gas electrode in the electrical generation portion is suppressed.

0034 The fuel gas flowpath preferably has an outflow-side opening end communicating with the outside of the fuel cell unit; the fuel cell unit has a buffer portion along the fuel gas flowpath between the outflow side opening end and the electrical generation lamination section; and the buffer portion has an outflow-side flow resistance portion.

0035 By appropriately setting the flow resistance of an outflow-side flowpath resistance section such as a fine tubule, the pressure inside the fuel flowpath within the fuel cell unit can be maintained for some time after electrical generation stops at a higher state than the pressure outside the fuel cell unit. During the time the pressure is being maintained within the fuel gas flowpath, oxidant gas outside the fuel cell unit flows back into the fuel gas flowpath from the outflow-side opening end, and the risk of fuel electrode oxidation is reduced.

0036 However, while the risk of fuel electrode oxidation is sufficiently reduced, there is a concern that pressure inside the fuel gas flowpath cannot be fully maintained if an unexpected external disturbance such as a change in air pressure occurs outside design parameters. In particular, in low temperature regions in which fuel electrode oxidation shrinkage occurs, the pressure inside the fuel gas flowpath is also reduced, so there is a danger of a reverse flow of oxidant gas.

0037 It is therefore preferable to erect a buffer having a flowpath resistance section between the outflow-side opening end and the electrical generation lamination portion. By appropriately setting the outflow-side flowpath resistance section and the buffer portion, pressure fluctuations can be tolerated and attenuation achieved. Thus even if oxidant gas flows in reverse from the outflow-side opening end, oxidation of the fuel electrode in the electrical generation laminated section is avoided if the oxidant gas accumulates in the buffer portion. Therefore partial oxidation of the fuel electrode in the electrical generation laminated section is suppressed by erecting a buffer portion and an outflow-side flowpath resistance section.

0038 The solid oxide fuel cell is preferably arranged so that after electrical generation stops and the fuel electrode temperature has declined to a predetermined temperature at or below 300°C, residual gas in the fuel gas flowpath is discharged by supplying air to the fuel gas flowpath.

0039 In the present invention thus constituted, by discharging residual gas in the fuel gas flowpath after the fuel electrode has fallen to a predetermined temperature at or below 300°C, where risk of oxidation shrinkage is low, oxidation of just a portion of the fuel electrode in the electrical generation laminated section after discharge can be prevented. Also, by supplying air as oxidant gas, the fuel gas flowpath can be easily purged all at once with simple equipment.

0040 The solid oxide fuel cell has: a fuel cell module comprising the aforementioned fuel cell units; a fuel supply apparatus for supplying fuel to the fuel cell module; a water supply apparatus for supplying steam reforming water to the fuel cell module; an oxidant gas supply apparatus for supplying oxidant gas to the oxidant gas electrode of the fuel cell unit; a reformer disposed inside the fuel cell module, for steam reforming fuel supplied from the fuel supply apparatus using water supplied from the water supply apparatus, thereby producing hydrogen; a fuel/exhaust gas passage for directing fuel/exhaust gas to outside the fuel cell module from the fuel supply apparatus through the fuel cell unit fuel gas flowpath; and a controller for controlling the fuel supply apparatus, the water supply apparatus, the oxidant gas supply apparatus, and the extraction of power from the fuel cell module; wherein the controller is equipped with a shutdown circuit for stopping the supply of fuel and electrical generation, and the fuel/exhaust gas path functions as a mechanical pressure retaining means for maintaining pressure inside the fuel gas flowpath of the fuel cell units at a higher level than the pressure outside the fuel cell unit in the fuel cell module until the temperature of the fuel electrodes declines to 400°C after the supply of fuel and generation of electricity is stopped by the shutdown circuit; and the shutdown circuit has a pressure maintaining control circuit for executing a pressure retaining control to increase pressure inside the fuel gas flowpath in order to suppress pressure drops in the fuel gas flowpath caused by temperature drops in the fuel electrode down to 350°C after the fuel electrode temperature declines to 400°C.

0041 By appropriate distribution of the balance between the flowpath resistances of each portion of the fuel/exhaust gas passage functioning as the mechanical pressure retaining means, we succeeded in maintaining the pressure inside the fuel cell unit fuel gas flowpath at a higher level than the pressure outside the fuel cell unit until the fuel electrode declined to 400°C after shutdown. We thus could prevent reverse flow of oxidant gas from the outflow-side opening end into the fuel gas flowpath. Using this mechanical pressure retaining means the risk of fuel electrode oxidation is sufficiently reduced, but if an unexpected external disturbance such as a change in air pressure occurs outside design parameters, there is a concern that pressure inside the fuel gas flowpath cannot be maintained by this mechanical means alone. In particular, in the low temperature region of 350°C to 400°C where fuel electrode oxidation shrinkage occurs, the pressure inside the fuel gas flowpath is also reduced, so there is a danger of a reverse flow of oxidant gas.

0042 The shutdown circuit therefore executes a pressure retaining control to increase pressure inside the fuel gas flowpath until the fuel electrode temperature falls to 350°C after declining to 400°C. Because pressure retaining control is executed after the fuel electrode temperature declines to 400°C, the pressure inside and outside the fuel cell unit has declined greatly, and a very small compensation of the pressure on the fuel electrode side is sufficient. By executing pressure retaining control in a fuel electrode temperature region of 350°C to 400°C, partial oxidation of fuel electrodes in the electrical generation laminated section is prevented in this temperature region.

0043 The present inventor found a damaged reaction prevention layer, observing the profile of the fuel cell unit damaged by the oxidative shrinkage with electron microscopy. In other words, it was found that when the fuel electrode layer oxidatively shrinks, it is not the fuel electrode layer itself which breaks, but rather the reaction prevention layer, erected immediately adjacent to the fuel electrode layer, and thin and weak in strength.

0045 Therefore the invention has the object of providing a solid oxide fuel cell capable of suppressing the occurrence of damage to fuel cell units by oxidation shrinkage of fuel electrodes, regardless of the strength of the reaction prevention layer.

0046 In order to solve the above-described problems, the solid oxide fuel cell of the invention is a solid oxide fuel cell for generating electricity by reacting water and oxidant gas in fuel cell units, wherein the fuel cell unit comprise: a fuel electrode to which hydrogen is supplied, an oxidant gas electrode to which oxidant gas is supplied, a solid electrolyte placed between the fuel electrode and the oxidant gas electrode, and a reaction prevention layer erected between the fuel electrode and the solid electrolyte, wherein the solid oxide fuel electrode comprises composite material containing nickel, and the solid oxide fuel cell is prevented from shrinking due to oxidation of the fuel electrode by maintaining the fuel electrode in an oxygen-free atmosphere until the fuel electrode temperature falls to 350°C after electrical generation is stopped.

0047 In the invention thus constituted, in the solid oxide fuel cell stopping step fuel electrode comprising composite material including nickel is maintained in an oxygen-free atmosphere in the low temperature region down to 350°C, where it was previously not believed that fuel electrodes oxidize. As a result, shrinkage by oxidation of fuel electrodes in said low temperature region is suppressed. Therefore the present invention is capable of suppressing damage to the fuel cell unit caused by fuel electrode oxidation shrinkage rather than fuel electrode oxidation expansion.

0051 Also, in the invention the fuel gas flowpath preferably has an outflow-side opening end communicating with the outside of the fuel cell unit; the fuel cell unit has a buffer portion along the fuel gas flowpath between the outflow side opening end and the electrical generation lamination section; and the buffer portion has an outflow-side flow resistance portion.

0052 By appropriately setting the flow resistance of an outflow-side flowpath resistance section such as a fine tubule, the pressure inside the fuel flowpath within the fuel cell unit can be maintained at a higher state than the pressure outside the fuel cell unit for some time after electrical generation stops. During the time the pressure is being maintained within the fuel gas flowpath, oxidant gas outside the fuel cell unit flows back into the fuel gas flowpath from the outflow-side opening end, and the risk of fuel electrode oxidation is reduced.

0053 However, while the risk of fuel electrode oxidation is sufficiently reduced, there is a concern that pressure inside the fuel gas flowpath cannot be completely maintained if an unexpected external disturbance such as a change in air pressure occurs outside design parameters. In particular, in low temperature regions in which fuel electrode oxidation shrinkage occurs, the pressure inside the fuel gas flowpath is also reduced, so there is a danger of a reverse flow of oxidant gas.

0054 It is therefore preferable to erect a buffer having a flowpath resistance section between the outflow-side opening end and the electrical generation lamination portion. By appropriately setting the outflow-side flowpath resistance section and the buffer portion, pressure fluctuations can be tolerated and attenuation achieved. By this means, even if oxidant gas reverse flows from the outflow-side opening end, oxidation of the fuel electrode in the electrical generation laminated section is avoided if the oxidant gas accumulates in the buffer portion. Therefore partial oxidation of the fuel electrode in the electrical generation laminated section is suppressed by erecting a buffer portion and an outflow-side flowpath resistance section.

0055 Also, in the invention the solid oxide fuel cell is preferably arranged so that after electrical generation stops and the fuel electrode temperature has declined to a predetermined temperature at or below 300°C, residual gas in the fuel gas flowpath is discharged by supplying air to the fuel gas flowpath.

0056 In the invention thus constituted, by discharging residual gas in the fuel gas flowpath after the fuel electrode has fallen to a predetermined temperature at or below 300°C, where risk of oxidation shrinkage is low, oxidation of just a portion of the fuel electrode in the electrical generation laminated section after discharge can be prevented. Also, by supplying air as oxidant gas, the fuel gas flowpath can be easily purged all at once with simple equipment.

0057 The solid oxide fuel cell has: a fuel cell module comprising the aforementioned fuel cell units; a fuel supply apparatus for supplying fuel to the fuel cell module; a water supply apparatus for supplying steam reforming water to the fuel cell module; an oxidant gas supply apparatus for supplying oxidant gas to the oxidant gas electrode of the fuel cell unit; a reformer disposed inside the fuel cell module, for steam reforming fuel supplied from the fuel supply apparatus using water supplied from the water supply apparatus, thereby producing hydrogen; a fuel/exhaust gas passage for directing fuel/exhaust gas to outside the fuel cell module from the fuel supply apparatus through the fuel cell unit fuel gas flowpaths; and a controller for controlling the fuel supply apparatus, the water supply apparatus, the oxidant gas supply apparatus, and the extraction of power from the fuel cell module; wherein the controller is equipped with a shutdown circuit for stopping the supply of fuel and electrical generation, and the fuel/exhaust gas path functions as a mechanical pressure retaining means for maintaining pressure inside the fuel gas flowpath of the fuel cell unit at a higher level than the pressure outside the fuel cell unit in the fuel cell module until the temperature of the fuel electrodes declines to 400°C after the supply of fuel and generation of electricity is stopped by the shutdown circuit; and the shutdown circuit has a pressure-maintaining control circuit for executing a pressure retaining control to increase pressure inside the fuel gas flowpath in order to suppress pressure drops in the fuel gas flowpath caused by temperature drops in the fuel electrode down to 350°C after the fuel electrode temperature declines to 400°C.

0060 In addition, in the invention the pressure retaining control circuit executes a pressure retaining control to raise the pressure in the fuel gas flowpath so that the pressure inside the fuel gas flowpath is maintained at a pressure at or above the pressure outside the fuel cell units when the temperature of the fuel electrode is in a range of ±20°C of 380°C.

0061 As shown in Fig. 28, composite material containing nickel exhibits the greatest shrinkage at 380°C. Therefore in a temperature range of ±20°C around 380°C, breakage of fuel cell units can be suppressed by assuring that not even a part of the fuel electrode in the electrical generation laminated section is oxidized.

0062 In the invention the fuel/exhaust gas path is preferably constituted to function as a mechanical pressure retaining means for maintaining the pressure inside the fuel gas flowpath of the fuel cell unit at a level higher than the pressure outside the fuel cell unit in the fuel cell module until the fuel electrode temperature declines to 400°C after the supply of water and fuel, as well as electrical generation are stopped by the shutdown circuit, and the pressure retaining control circuit vaporizes water and produces steam inside the reformer by causing the water supply apparatus to operate after the fuel electrode temperature has declined to 400°C; using steam pressure to control the pressure drop inside the fuel gas flowpath of the fuel cell unit, the inflow of oxidant gas to the fuel gas flowpath is suppressed, and when the supply of water by the pressure retaining control circuit ends and the temperature of the fuel electrode has dropped to a predetermined temperature at or below 300°C, the controller supplies air to the fuel gas flowpath in order to discharge fuel remaining in the fuel gas flowpath of the fuel cell units.

0063 In the invention thus constituted, the supply of water is stopped after shutting down until the fuel electrode temperature declines to 400°C, therefore even after the fuel electrode temperature has declined to 400°C, a relatively high temperature is maintained in the reformer. Water can therefore be vaporized in the reformer and pressure drops on the fuel electrode side suppressed even after pressure retention by the mechanical pressure retaining means has terminated, so that oxidation of the fuel electrode can be prevented.

0064 In the present invention the shutdown circuit preferably executes a stop according to a program stop mode for stopping the supply of fuel and the generation of electricity at a planned time, and the program stop mode includes: a first temperature reduction step for reducing the temperature outside the fuel cell units inside the fuel cell module immediately before stopping the supply of fuel and electrical generation; a second temperature reduction step for reducing the temperature outside the fuel cell units inside the fuel cell module immediately after stopping the supply of fuel and electrical generation; a step wherein the pressure retaining control circuit vaporizes water and produces steam inside the reformer by causing the water supply apparatus to operate after the fuel electrode temperature has declined to 400°C, using steam pressure to control the pressure drop inside the fuel gas flowpath of the fuel cell unit and suppress the inflow of oxidant gas to the fuel gas flowpath; and a step wherein when the supply of water by the pressure retaining control circuit ends and the temperature of the fuel electrode has dropped to a predetermined temperature at or below 300°C, the controller supplies air to the fuel gas flowpath in order to discharge fuel remaining in the fuel gas flowpath of the fuel cell units.

0065 In the invention thus constituted, by performing a temperature reduction control based on a first temperature drop step immediately before stopping the supply of fuel and electrical generation, and a second temperature drop step immediately after stopping, the temperature and pressure inside and outside the fuel cell units can be reduced at the time when mechanical pressure holding is being started, and the risk of a reverse flow of oxidant gas up until the fuel electrode temperature declines to 400°C can be reduced.

### Effect of the Invention

0066 In the solid oxide fuel cell stopping step, even in the low temperature region where it was previously believed fuel electrode oxidization did not occur, fuel electrodes oxidatively shrink rather than oxidatively expand, leading to the new technical problem of damage to the fuel cell unit, which can be solved using the solid oxide fuel cell of the invention. I.e., using the solid oxide fuel cell of the present invention, damage to fuel cell units by oxidation shrinkage of fuel electrodes can be suppressed.

### Brief Description of Figures

0067
Fig. 1: An overview schematic of a fuel cell apparatus according to an embodiment of the present invention.
Fig. 2: A front elevation cross section showing the fuel cell module of a fuel cell apparatus according to an embodiment of the present invention.
Fig. 3: A cross section along line III-III in Fig. 2.
Fig. 4: A partial cross section showing an individual fuel cell unit in a fuel cell apparatus according to an embodiment of the present invention.
Fig. 5: A partial cross section showing an individual fuel cell unit in another fuel cell apparatus according to an embodiment of the present invention.
Fig. 6: A perspective view showing a fuel cell stack in a fuel cell apparatus according to an embodiment of the present invention.
Fig. 7: A block diagram showing a fuel cell assembly according to an embodiment of the present invention.
Fig. 8: A perspective view of a fuel cell apparatus reformer according to an embodiment of the present invention.
Fig. 9: A perspective view of a fuel cell apparatus reformer according to an embodiment of the present invention, showing the interior of the reformer with the top plate removed.
Fig. 10: A plan view showing the flow of fuel inside a reformer in a fuel cell apparatus according to an embodiment of the present invention.
Fig. 11: A perspective view showing a metal case and air-heat exchanger in the housing of a fuel cell apparatus according to an embodiment of the present invention.
Fig. 12: A cross section showing the positional relationship between heat exchanger thermal insulation and the vaporizing section in a fuel cell apparatus reformer according to an embodiment of the present invention.
Fig. 13: A timing chart showing an example of each of the supplied amounts of fuel, etc. and the temperatures of each section in the startup step of a fuel cell apparatus according to an embodiment of the present invention.
Fig. 14: A flow chart of the stopping judgment to select a stopping mode in a fuel cell apparatus according to an embodiment of the present invention.
Fig. 15: A timing chart schematically showing an example on a time axis of stopping behavior when stopping mode 1 is executed in a fuel cell apparatus according to an embodiment of the present invention.
Fig. 16: A diagram explaining on a time axis the control when stopping mode 1 is executed in a fuel cell apparatus according to an embodiment of the present invention, as well as the temperature, pressure, and state of the front end portion of the individual fuel cell units inside the fuel cell module.
Fig. 17: A timing chart schematically showing an example on a time axis of stopping behavior when stopping mode 2 is executed in a fuel cell apparatus according to an embodiment of the present invention.
Fig. 18: A diagram explaining on a time axis the control used when stopping mode 2 is executed in a fuel cell apparatus according to an embodiment of the present invention, as well as the temperature, pressure, and state of the front end portion of the individual fuel cell units inside the fuel cell module.
Fig. 19: A timing chart schematically showing an example on a time axis of stopping behavior when stopping mode 3 is executed in a fuel cell apparatus according to an embodiment of the present invention.
Fig. 20: A timing chart showing an expanded view of the state immediately after a shutdown in stopping mode 3 in a fuel cell apparatus according to an embodiment of the invention.
Fig. 21: A diagram explaining on the time axis the control when stopping mode 3 is executed in a fuel cell apparatus according to an embodiment of the present invention, as well as the temperature, pressure, and state of the front end portion of the individual fuel cell units inside the fuel cell module.
Fig. 22: A flowchart of the water supply during halt preprocessing.
Fig. 23: A timing chart showing a variant of stopping mode 3.
Fig. 24: A timing chart schematically showing an example on the time axis of stopping behavior when a stop mode 4 is executed in a fuel cell apparatus according to an embodiment of the present invention.
Fig. 25: A diagram explaining on a time axis the control when stop mode 4 is executed in a fuel cell apparatus according to an embodiment of the present invention, as well as the temperature, pressure, and state of the front end portion of the individual fuel cell units inside the fuel cell module.
Fig. 26: A flow chart of the stopping judgment to select the stop mode in a variant example of a fuel cell apparatus according to an embodiment of the present invention.
Fig. 27: A timing chart schematically showing a time sequence in one example of the stopping behavior of a conventional solid oxide fuel cell.
Fig. 28: A graph explaining the fact that the nickel-bearing composite material forming the fuel electrode is shrunk by oxidation in a certain temperature range.
Fig. 29: A graph explaining in more detail the shrinking of the nickel-bearing composite material forming the fuel electrode over a certain temperature range by oxidation.

### Embodiments of the Invention

0068 Next, referring to the attached drawings, we discuss a solid oxide fuel cell (SOFC) according to an embodiment of the present invention.

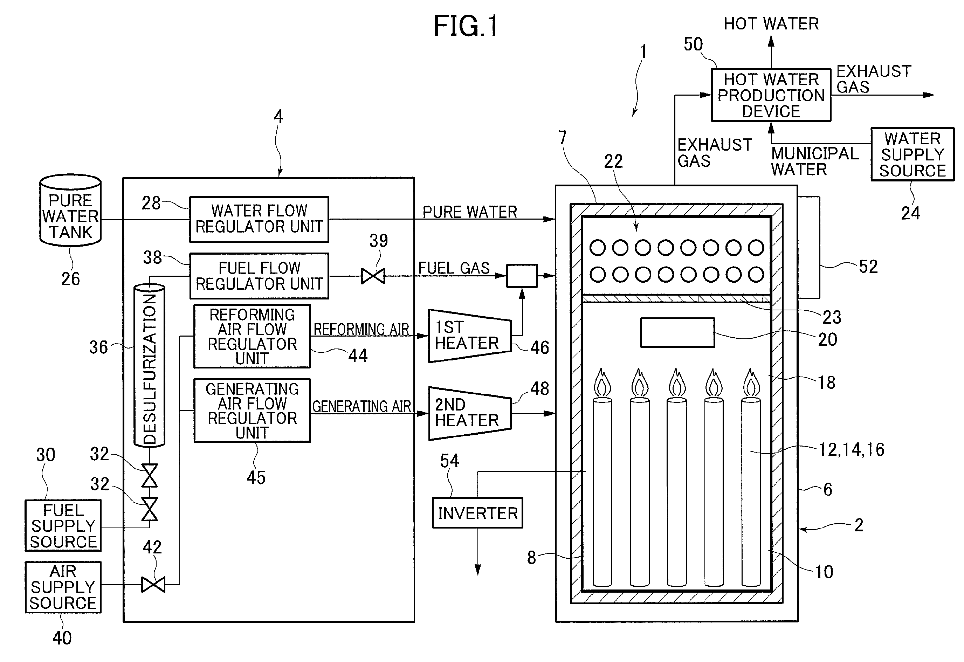

Fig. 1 is an overview diagram showing a solid oxide fuel cell (SOFC) according to an embodiment of the present invention. As shown in Fig. 1, the solid oxide fuel cell (SOFC) 1 of this embodiment of the invention comprises a fuel cell module 2 and an auxiliary unit 4.

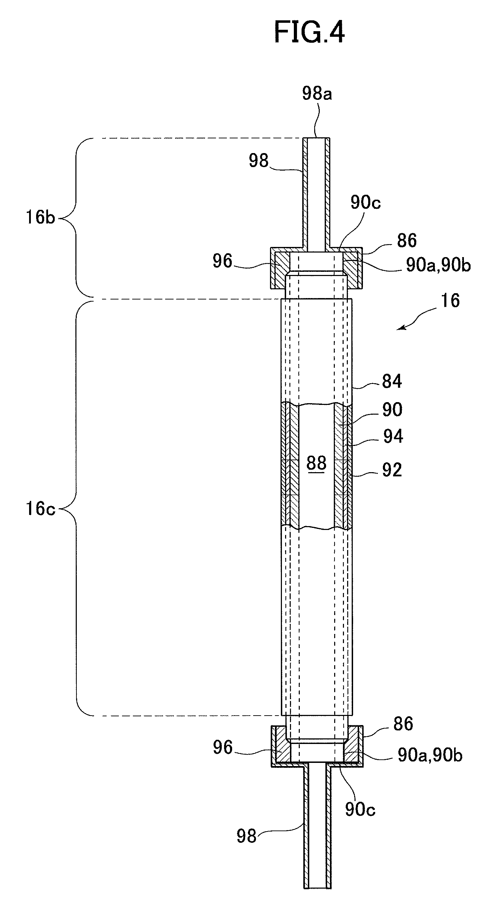

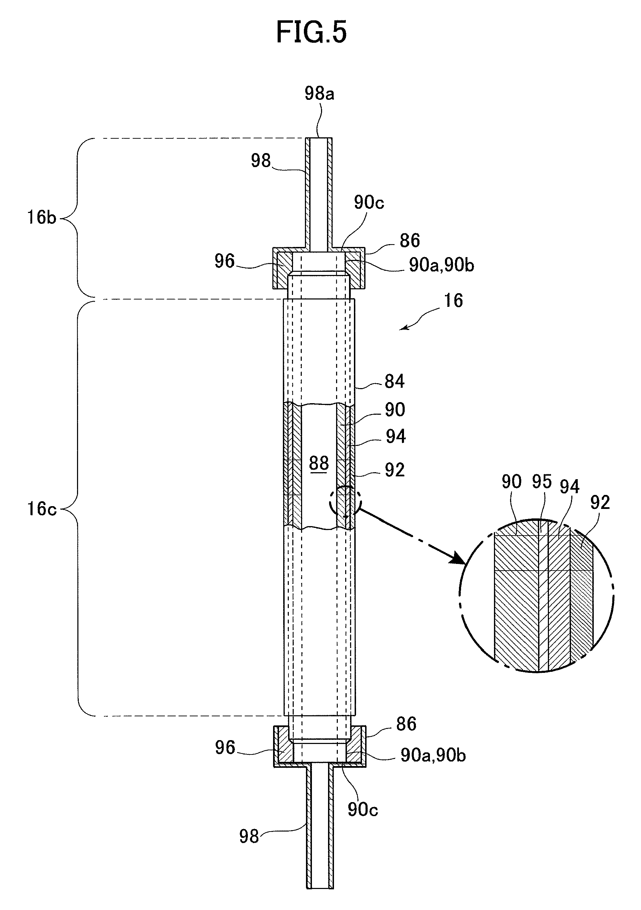

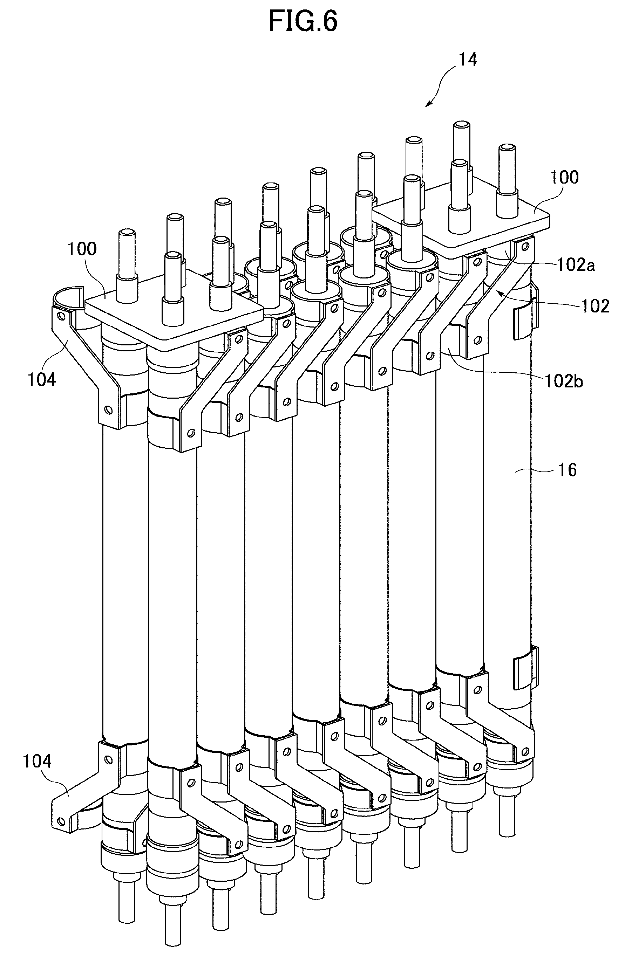

0069 Fuel cell module 2 comprises a housing 6; a case 8 is built into this housing 6, mediated by heat storage material 7. Fuel cell assembly 12, which performs an electricity generating reaction using fuel gas and oxidant gas (air), is disposed on generating chamber 10, under case 8, being a sealed space. This fuel cell assembly 12 comprises ten fuel cell stacks 14 (see Fig. 6); fuel cell stacks 14 comprise 16 individual fuel cell units 16 (see Figs. 4 and 5). Thus fuel cell assembly 12 has 160 individual fuel cell units 16, and all of these individual fuel cell units 16 are connected in series.

0070 A combustion chamber 18, being a combustion section, is formed above the aforementioned generating chamber 10 in the fuel cell module 2 case 8, and residual fuel gas and residual oxidizer (air) not used in the electrical generation reaction is burned in this combustion chamber 18 to produce exhaust gas. Furthermore, case 8 is covered by heat insulation 7, and diffusion to the outside atmosphere of heat inside fuel cell module 2 is suppressed.

Reformer 20 for reforming fuel is disposed at the top of combustion chamber 18; combustion heat from the residual gas heats reformer 20 to a temperature at which the reforming reaction can occur. Disposed above this reformer 20 is an air-heat exchanger 22, being a heat exchanger for heating generating air using residual gas combustion gas to pre-heat the generating air.

0071 Next, auxiliary unit 4 comprises a pure water tank 26 for condensing moisture contained in the exhaust from fuel cell module 2 and purifying same using a filter, and water flow volume regulator unit 28 (a motor-driven "water pump" or the like), which regulates the flow volume of water supplied from this holding tank. Auxiliary unit 4 comprises a gas shutoff valve 32 for shutting off gas supplied from a municipal gas or other fuel supply source 30, a desulfurizer 36 for removing sulfur from fuel gas, a fuel flow regulator unit 38 (a motor-driven "fuel pump" or the like) for regulating the flow volume of fuel gas, and a valve 39 for shutting off fuel gas flowing out from fuel flow regulator unit 38 during a loss of power. Furthermore, auxiliary unit 4 comprises: an electromagnetic valve 42 for shutting off air, which is the oxidant gas supplied from air supply source 40, reforming air flow regulator unit 44 and generating air flow regulator unit 45 (a motor-driven "water pump" or the like), which regulate the flow volume air, first heater 46 for heating reforming air supplied to reformer 20, and second heater 48 for heating air supplied to the electrical generating chamber. This first heater 46 and second heater 48 are provided to efficiently raise the temperature at startup, but may also be omitted.

0072 Next, connected to fuel cell module 2 is a hot-water production device 50, to which exhaust gas is supplied. Tap water is supplied from water supply source 24 to this hot water production device 50; this tap water becomes hot water using the heat of exhaust gas, and is supplied to an external hot water holding tank, not shown.

A control box 52 for controlling the amount of fuel gas supplied, etc. is connected to fuel cell module 2.

In addition, an inverter 54 serving as an electrical power extraction unit (electrical power conversion unit) for supplying electrical power generated by the fuel cell module to the outside is connected to fuel cell module 2.

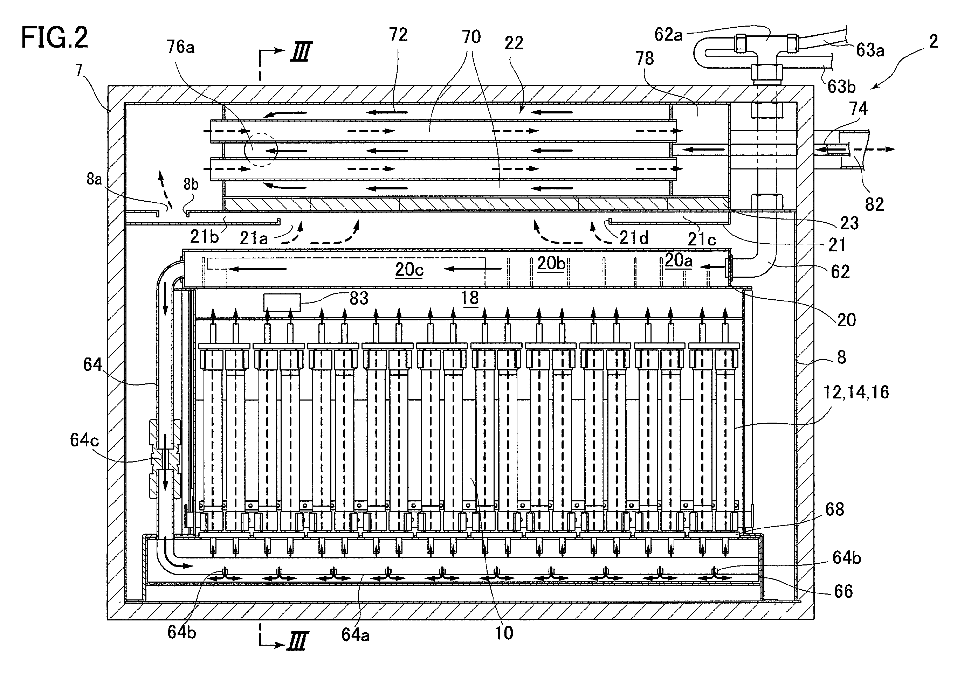

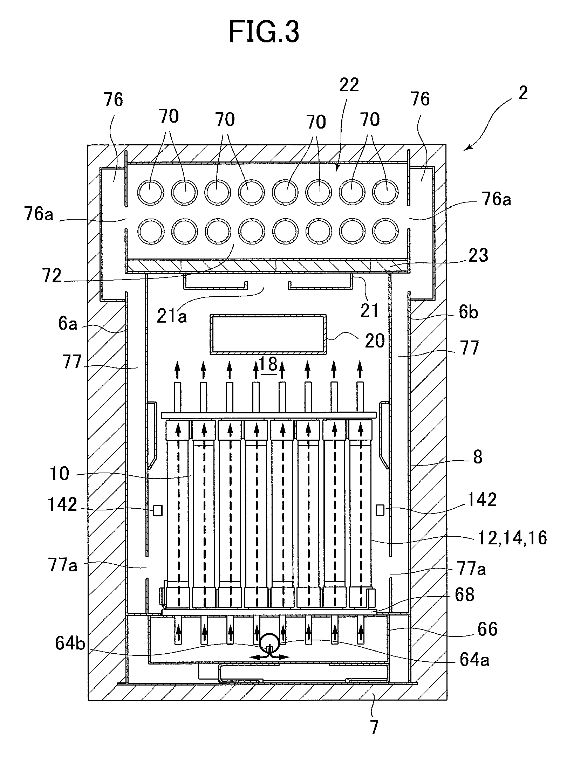

0073 Next, the internal structure of the solid oxide fuel cell (SOFC) fuel cell module of this embodiment of the invention is explained using Figs. 2 and 3. Fig. 2 is a side elevation cross section showing a fuel cell module in a solid oxide fuel cell (SOFC) according to an embodiment of the present invention; Fig. 3 is a cross section along line III-III of Fig. 2.

As shown in Figs. 2 and 3, disposed in case 8 inside the housing 6 in fuel cell module 2, in order from the bottom, are a fuel cell assembly 12, reformer 20, and air heat exchanger 22, as described above.

0074 Attached to the upstream-side end portion side surface of reformer 20 is a reformer-introducing pipe 62 for introducing pure water, fuel gas to be reformed, and reforming air.

Reformer-introducing pipe 62 is a round pipe extending from the sidewall surface at one end of reformer 20, bent 90° and extending in approximately a vertical direction, penetrating the top end surface of case 8. Note that reformer-introducing pipe 62 functions as a water-introducing pipe for introducing water into reformer 20. A T-pipe 62a is connected to the top end of reformer-introducing pipe 62, and piping for supplying fuel gas and pure water is respectively connected to both end portions of a pipe extending in approximately the horizontal direction of this T-pipe 62a. Water supply piping 63a extends diagonally upward from one end of T-pipe 62a. Fuel gas supplying piping 63b extends horizontally from the other end of T-pipe 62a, then is bent in a U shape and extends approximately horizontally in the same direction as water supply piping 63a.

0075 On the other hand, vaporizing section 20a, blending section 20b, and reforming section 20c are formed in sequence starting from the upstream side within reformer 20, and reforming section 20c is filled with reforming catalyst. Fuel gas and air, blended with steam (pure water) introduced into reformer 20, is reformed using the reforming catalyst with which reformer 20 is filled. Reforming catalysts in which nickel is applied to the surface of aluminum spheres, or ruthenium is applied to the surface of aluminum spheres, are used as appropriate.

0076 A fuel gas supply line 64 is connected to the downstream end of reformer 20; this fuel gas supply line 64 extends downward, then further extends horizontally within manifold 66 formed under fuel cell assembly 12. Multiple fuel supply holes 64b are formed on the bottom surface of the horizontal portion 64a of fuel gas supply line 64; reformed fuel gas is supplied into manifold 66 from these fuel supply holes 64b. A pressure fluctuation suppressing flowpath resistance section 64c, in which the flowpath is narrowed, is provided in the middle of the vertical portion of fuel gas supply pipe 64, and flowpath resistance in the fuel gas supply flowpath is thereby adjusted. Adjustment of flowpath resistance is discussed below.

0077 A lower support plate 68 provided with through holes supporting the above-described fuel cell stack 14 is attached at the top of manifold 66, and fuel gas in manifold 66 is supplied into fuel cell units 16.

0078 At the same time, an air heat exchanger 22 is provided over reformer 20.

Also, as shown in Fig. 2, an ignition device 83 for starting the combustion of fuel gas and air is disposed on combustion chamber 18.

0079 Fig. 4 is a partial section showing a solid oxide fuel cell (SOFC) fuel cell unit according to an embodiment of the present invention. Fig. 5 is a partial section showing a solid oxide fuel cell (SOFC) fuel cell unit according to an embodiment of the present invention.

Fuel cell 84 is a tubular structure extending vertically, equipped with a cylindrical internal electrode layer 90, on the inside of which is formed a fuel gas flowpath 88, a cylindrical external electrode layer 92, and an electrolyte layer 94 between internal electrode layer 90 and external electrode layer 92. In the example shown in Fig. 5, a reaction prevention layer 95 is disposed between inside electrode layer 90 and electrolyte layer 94 to prevent a reaction between inside electrode layer 90 and electrolyte layer 94. This internal electrode layer 90 is a fuel electrode through which fuel gas passes, and has a (-) polarity, while the external electrode layer 92 is an air-contacting electrode (oxidant gas electrode) with a (+) polarity.

0080 The internal electrode terminals 86 attached at the top and bottom ends of fuel cell units 84 have the same structure, therefore here we specifically discuss internal electrode terminal 86 attached at the top end. The top portion 90a of inside electrode layer 90 comprises an outside perimeter surface 90b and top end surface 90c, exposed to electrolyte layer 94 and outside electrode layer 92. Inside electrode terminal 86 is connected to the outer perimeter surface of inside electrode layer 90 through conductive seal material 96, and is electrically connected to inside electrode layer 19 by direct contact with the top end surface 90c of inside electrode layer 90. A fuel gas flowpath fine tubing 98 communicating with inside electrode layer 90 fuel gas flowpath 88 is formed at the center portion of inside electrode terminal 86.

0081 This gas flowpath gas flowpath fine tubing 98 is an elongated fine tubing disposed to extend from the center of inside electrode terminals 86 in the axial direction of fuel cell 84. Therefore a certain pressure loss occurs in the flow of fuel gas from manifold 66 (Fig. 2) flowing into fuel gas flowpath 88 through gas flowpath fine tubing 98 in inside electrode terminals 86. As a result, lower inside electrode terminal 86 gas flowpath fine tubing 98 acts as an inflow-side flowpath resistance section, and is set so that the flowpath resistance has a predetermined value. The flow of fuel gas flowing from fuel gas flowpath 88 through the gas flowpath fine tubing 98 on the upper side inside electrode terminal 86 into combustion chamber 18 (Fig. 2) also experiences a certain pressure loss. Therefore upper inside electrode terminal 86 gas flowpath fine tubing 98 acts as an outflow-side flowpath resistance section, and is set so that the flowpath resistance has a certain value. Upper gas flowpath fine tubing 98 communicates with the outside of individual fuel cell units 16 by outflow-side opening end 98a.

0082 Among the fuel cells 84, it is the portion in which fuel electrode 90, reaction prevention layer 95, electrolyte layer 94, and air electrode (oxidant gas electrode) 92 are laminated on sequence starting from the fuel gas flowpath side which forms electrical generating laminated section 16c. A buffer portion 16b is disposed between electrical generating laminated section 16c and outflow-side opening end 98a, along fuel gas flowpath 88.

0083 Inside electrode layer 90 is formed, for example, from at least one of a mixture of Ni and zirconia doped with at least one type of rare earth element selected from among Ni, Ca, Y, Sc, or the like; or a mixture of Ni and ceria doped with at least one type of rare earth element; or any mixture of Ni with lanthanum gallate doped with at least one element selected from among Sr, Mg, Co, Fe, or Cu.

0084 The individual fuel cell units 16 reaction prevention layer 95 shown in Fig. 5 is formed, for example, of LDC (lanthanum-doped ceria).

0085 The electrolyte layer 94 is formed, for example, from at least one of the following: zirconia doped with at least one type of rare earth element selected from among Y, Sc, or the like; ceria doped with at least one type of selected rare earth element; or lanthanum gallate doped with at least one element selected from among Sr or Mg.

0086 Outside electrode layer 92 is formed, for example, from at least one of the following: lanthanum manganite doped with at least one element selected from among: Sr or Ca; lanthanum ferrite doped with at least one element selected from among Sr, Co, Ni, or Cu; lanthanum cobaltite doped with at least one element selected from among Sr, Fe, Ni, or Cu; silver, or the like.

0087 Next, referring to Fig. 6, we explain fuel cell stack 14. Fig. 6 is a perspective view showing the fuel cell stack in a solid oxide fuel cell (SOFC) according to an embodiment of the present invention.

As shown in Fig. 6, fuel cell stack 14 comprises 16 individual fuel cell units 16, and these individual fuel cell units 16 are arrayed in two rows of 8 units each. Each of the individual fuel cell units 16 is supported by rectangular bottom support plates 68 (Fig. 2), the bottom ends of which are ceramic; on the top end side they are supported by two approximately square upper support plates 100 in groups of four individual fuel cell units 16 each at both ends. Through holes through which inside electrode terminal 86 can penetrate are respectively provided on this lower support plate 68 and outer support plate 100.

0088 In addition, a collector 102 and an external terminal 104 are attached to fuel cell units 16. This collector 102 is integrally formed to connect fuel electrode connecting portion 102a, electrically connected to inside electrode terminal 86 attached to inside electrode layer 90 serving as the fuel electrode, and air electrode connecting portion 102b, electrically connected to the external perimeter of outside electrode layer 92 serving as the air electrode. Also, a thin silver film is formed over the entire external surface of the outside electrode layer 92 (air electrodes) on each of the individual fuel cell units 16 as electrodes on the air electrode side. Current collector 102 makes electrical contact with the entire air electrode through the contact of air electrode connecting portion 102b with this thin film surface.

0089 Moreover, two external terminals 104 are respectively connected to the air electrodes on the individual fuel cell units 16 positioned at the edge (on the left edge far side in Fig. 6) of fuel cell stack 14. These external terminals 104 are connected to inside electrode terminals 86 on individual fuel cell units 16 at the edge of adjacent fuel cell stack 14, and as described above, all of the 160 fuel cell units 16 are connected in series.

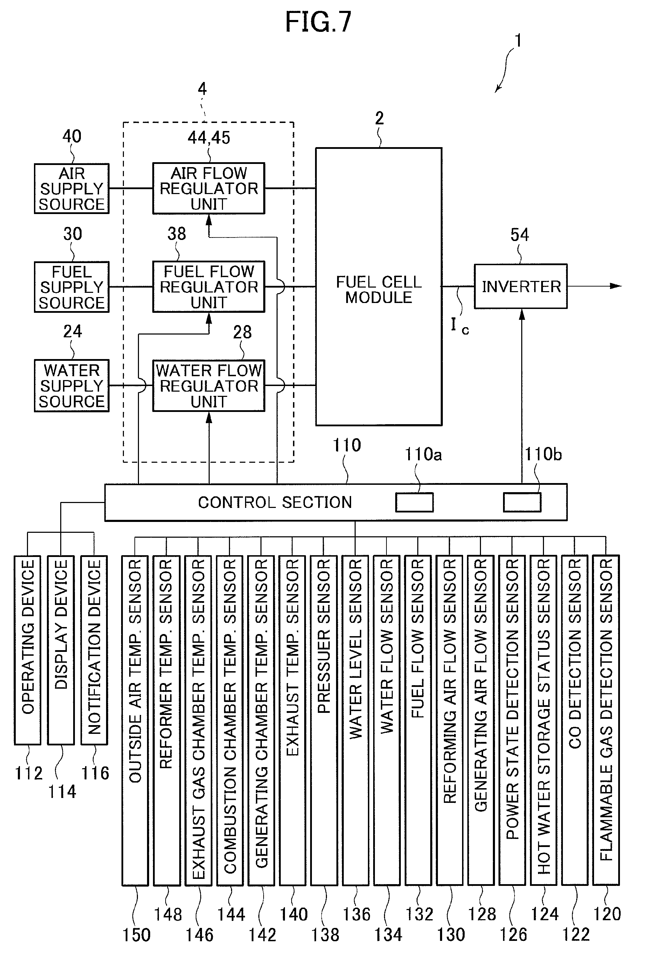

0090 Next, referring to Fig. 7, we discuss the sensors attached to the solid oxide fuel cell (SOFC) according to the present embodiment. Fig. 7 is a block diagram showing a solid oxide fuel cell (SOFC) according to an embodiment of the present invention.

As shown in Fig. 7, a solid oxide fuel cell device 1 comprises a control unit 110; connected to this control section 110 are: an operating device 112 provided with operating buttons such as "ON" or "OFF" for user operation; a display device 114 for displaying various data such as generator output (watts); and a notification device 116 for issuing warnings during abnormal states, etc.

A microprocessor, memory, and program for operating same (none of these are shown) are built into control section 110, and using auxiliary unit 4, inverter 54, and the like, are controlled based on input signals from each sensor. Note that this notification device 116 may also be connected to a remote control center to inform the control center of anomalies.

0091 Next, signals from the various sensors described below are input to control unit 110.

First, flammable gas detection sensor 120 is for sensing gas leaks, and is attached to fuel cell module 2 and auxiliary unit 4.

CO detection sensor 122 is for sensing whether CO in the exhaust gas, which is supposed to be exhausted to the outside via exhaust gas conduit 80, etc., has leaked into the external housing (not shown) which covers fuel cell module 2 and auxiliary unit 4.

A water reservoir state detection sensor 124 is for sensing the temperature and amount of hot water in a water heater (not shown).

0092 Electrical power state detection sensor 126 is for sensing current, voltage, and the like in inverter 54 and in a distribution panel (not shown).

Generator air flow detection sensor 128 is for detecting the flow volume of generating air supplied to generating chamber 10.

Reforming air flow volume sensor 130 is for detecting the volume of reforming air flow supplied to reformer 20.

Fuel flow volume sensor 132 is for detecting the flow volume of fuel gas supplied to reformer 20.

0093 Water flow volume sensor 134 is for detecting the flow volume of pure water supplied to reformer 20.

Water level sensor 136 is for detecting the water level in pure water tank 26.

Pressure sensor 138 is for detecting pressure on the upstream side outside reformer 20.

Exhaust temperature sensor 140 is for detecting the temperature of exhaust gas flowing into hot water producing device 50.

0094 As shown in Fig. 3, generating chamber temperature sensor 142 is disposed on the front surface side and rear surface side around fuel cell assembly 12, and has the purpose of detecting the temperature near fuel cell stack 14 and estimating the temperature of fuel cell stack 14 (i.e., of the fuel cell 84 itself).

A combustion chamber temperature sensor 144 is for detecting the temperature in combustion chamber 18.

Exhaust gas chamber temperature sensor 146 is for detecting the temperature of exhaust gases in exhaust gas chamber 78.

Reformer temperature sensor 148 is for detecting the temperature of reformer 20; it calculates the reformer 20 temperature from the intake and exit temperatures on reformer 20.

If a solid oxide fuel cell (SOFC) is positioned outdoors, outside air temperature sensor 150 detects the temperature of the outside atmosphere. Sensors to detect atmospheric humidity and the like may also be provided.

0095 Signals from these various sensors are sent to control unit 110; control unit 110 sends control signals to water flow regulator unit 28, fuel flow regulator unit 38, reforming air flow regulator unit 44, and generating air flow regulator unit 45 based on data from the sensors, and controls the flow volumes in each of these units.

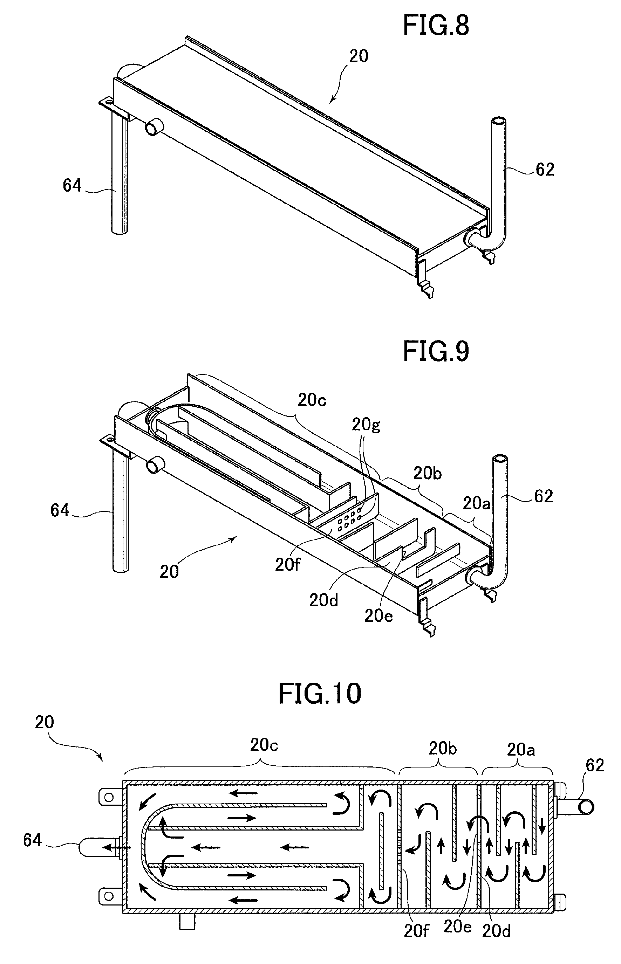

0096 Next, referring to Figs. 8 through 10, we explain the detailed constitution of reformer 20.

Fig. 8 is a perspective view of reformer 20; Fig. 9 is a perspective view showing the interior of reformer 20 with the cover removed. Fig. 10 is a plan view cross section showing the flow of fuel in reformer 20.

0097 As shown in Fig. 8, reformer 20 is a rectangular parallelepiped metal box, filled internally with a reforming catalyst for reforming fuel. A reformer introducing pipe 62 for introducing fuel and reforming air is connected on the upstream side of reformer 20. In addition, a fuel gas supply pipe 64 is connected on the downstream side of reformer 20 for discharging fuel reformed in the interior of reformer 20.

0098 As shown in Fig. 9, a vaporizing section 20a, which is a vaporization chamber on the upstream side thereof, is provided on the inside of reformer 20, and a mixing section 20b is disposed on the downstream side thereof, adjacent to this vaporizing section 20a. In addition, air passage openings 20c are disposed on the downstream side adjacent to mixing section 20b. A winding, sinuous passageway is formed within steam generating section 20a by the disposition of multiple partitioning panels. Water introduced into reformer 20 is vaporized at an elevated temperature inside vaporizing section 20a and becomes steam. Furthermore, mixing section 20b comprises a chamber having a certain volume, and by disposing multiple partitions within same, a winding, sinuous path is formed. Fuel gas and reforming air introduced into reformer 20 are mixed with steam produced by vaporizing section 20a while passing through the winding passage of mixing section 20b.

0099 At the same time, a winding passageway is also formed inside reforming section 20c by the disposition of multiple partitioning panels, and this passageway is filled with catalyst. When a mixture of fuel gas, steam, and reforming air which has passed through vaporizing section 20a and mixing section 20b is introduced, a steam reforming reaction occurs in reforming section 20c. Furthermore, when a mixture of fuel gas and steam is introduced, only the steam reforming reaction occurs in reforming section 20c.

Note that in the embodiment the vaporizing section, mixing section, and reforming section are formed as a single unit and comprise a single reformer, but as a variant example it is also possible to provide a reformer equipped with only a reforming section, placing a mixing section and generating chamber upstream and adjacent to same.

0100 As shown in Figs. 9 and 10, fuel gas, water, and reforming air introduced into reformer 20 vaporizing section 20a flows in a sinuous manner in the transverse direction of reformer 20, and introduced water is vaporized, becoming steam. A steam/mixing section divider 20d is formed between vaporizing section 20a and mixing section 20b, and a divider opening 20e is erected on this steam/mixing section divider 20d. Divider opening 20e is a rectangular opening portion erected approximately halfway through the upper region of approximately half of one side of the steam/mixing section divider 20d.

There is also a mixing/reforming section divider 20f between mixing section 20b and reforming section 20c, and narrow flowpaths are formed by the erection of many connecting holes 20g in this mixing/reforming section divider 20f. Fuel gas mixed inside mixing section 20b flows into reforming section 20c through these connecting holes 20g.

0101 Fuel etc. flowing into reforming section 20c first flows in the longitudinal direction at the center of reforming section 20c, then is split into two parts and returned; two paths are again returned and directed toward the downstream end of reforming section 20c, where they are merged and flow into fuel gas supply pipe 64. As it thus passes through the winding passageway, fuel is reformed by the catalyst with which the passageway is filled. Note that bumping explosive boiling can suddenly occur in a short time period to a certain quantity of water within vaporizing section 20a, raising internal pressure. However, a chamber of a predetermined volume is constituted in mixing section 20b, and narrow paths are formed in mixing/reforming section divider 20f, making it difficult for sudden pressure fluctuations to affect the interior of vaporizing section 20a. Therefore the mixing section 20b chamber and mixing/reforming section divider 20f narrow flowpaths function as pressure fluctuation absorbing means.

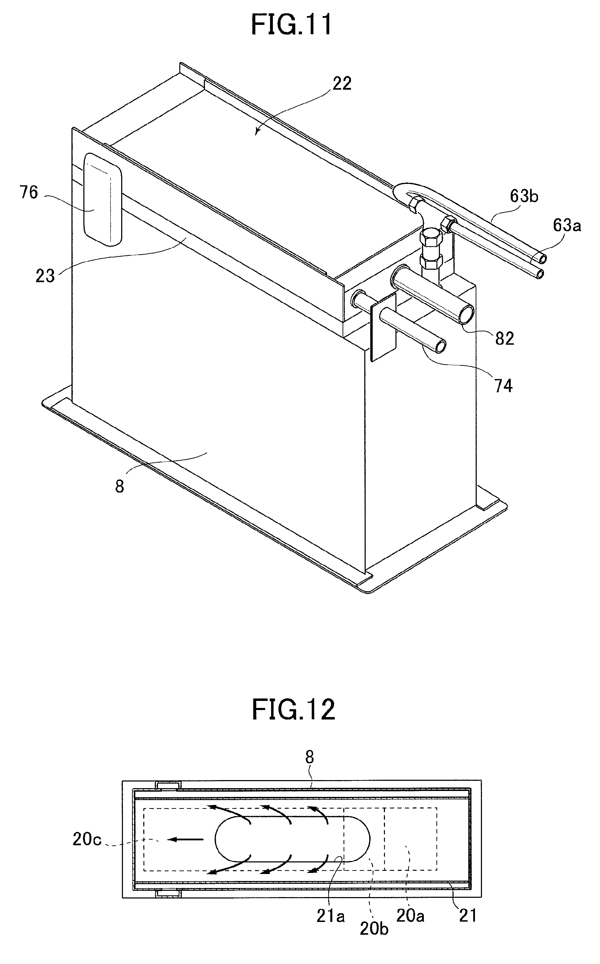

0102 Next, referring to Figs. 11 and 12 and again to Figs. 2 and 3, we explain details of the structure of air-heat exchanger 22, which is the heat exchanger for generating oxidant gas. Fig. 11 is a perspective view showing the metal case 8 and air-heat exchanger 22 housed in housing 6. Fig. 12 is a cross section showing the positional relationship between the vaporization chamber thermal insulation and the vaporizing section.

0103 As shown in Fig. 11, air-heat exchanger 22 is a heat exchanger disposed above case 8 in fuel cell module 2. Also, as shown in Figs. 2 and 3, a combustion chamber 18 is formed inside case 8, and multiple individual fuel cell units 16, reformer 20, and the like are housed therein, so air-heat exchanger 22 is formed above those. Air-heat exchanger 22 recovers and utilizes combustion gas combusted inside combustion chamber 18 and discharged as exhaust to preheat generating air introduced into fuel cell module 2. Also, as shown in Fig. 11, vaporization chamber insulation 23 is disposed so as to be sandwiched between the top surface of case 8 and the bottom surface of air-heat exchanger 22. I.e., vaporization chamber insulation 23 is positioned between reformer 20 and air-heat exchanger 22. Furthermore, thermal insulation 7, which is outside insulation, covers the outside of the air-heat exchanger 22 and case 8 shown in Fig. 11 (Fig. 2).

0104 As shown in Figs. 2 and 3, air-heat exchanger 22 has multiple combustion gas pipes 70 and generating air flowpaths 72. Also, as shown in Fig. 2, an exhaust gas collection chamber 78 is disposed at one end portion of the multiple combustion gas pipes 70, and exhaust gas collection chamber 78 is connected to each of the combustion gas pipes 70. Also, an exhaust gas discharge pipe 82 is connected to exhaust gas collection chamber 78. Furthermore, the other end portion of combustion gas pipes 70 is open, and this open end portion communicates with combustion chamber 18 in case 8 via a communication opening 8a formed in the top surface of case 8.

0105 Combustion gas pipes 70 consist of multiple metal circular pipes directed in a horizontal direction, with each circular pipe disposed in parallel. Generating air flowpaths 72, on the other hand, are formed by the spaces on the outsides of each of the combustion gas pipes 70. A generating air introducing pipe 74 (Fig. 1) is connected to the end portion of generating air flowpaths 72 on the exhaust gas discharge pipe 82 side, and air on the outside of fuel cell module 2 is introduced into generating air flowpaths 72 through generating air introducing pipe 74. Note that, as shown in Fig. 11, generating air introducing pipe 74 protrudes horizontally from air-heat exchanger 22 parallel to exhaust gas discharge pipe 82. Furthermore, connected at both sides of the other end of generating air flowpaths 72 are a pair of communicating flowpaths 76 (Fig. 3, Fig. 11); generating air flowpaths 72 and communicating flowpaths 76 respectively communicate through outlet port 76a.

0106 As shown in Fig. 3, generating air supply paths 77 are respectively provided on the two side surfaces of case 8. Each of the communicating flowpaths 76 disposed on both side surfaces of air-heat exchanger 22 respectively communicates with the top portion of generating air supply paths 77, which are disposed on both side surfaces of case 8. Also, a large number of jet outlets 77a are horizontally aligned on the bottom portion of each generating air supply path 77. Generating air supplied through each of the generating air supply paths 77 is jetted from the many jet outlets 77a toward the bottom side surface of the fuel cell stack 14 inside fuel cell module 2.

0107 Also, a flow rectifier plate 21, being a partition, is attached to the ceiling surface inside case 8, and opening portion 21 a are disposed on this flow rectifier plate 21.

The flow rectifier plate 21 is a sheet material disposed horizontally between the ceiling surface of case 8 and reformer 20.

This flow rectifier plate 21 aligns the flow of the gas flowing upward from combustion chamber 18, guiding it to the inlet on air-heat exchanger 22 (communication opening 8a in Fig. 2). Generating air and combustion gas directed upward from combustion chamber 18 flow into the top side of flow rectifier plate 21 through opening portion 21 a formed at the center of flow rectifier plate 21, flowing leftward as seen in Fig. 2 through exhaust passage 21 b between the top surface of flow rectifier plate 21 and the ceiling surface of case 8, to be led into the entrance of air-heat exchanger 22. Also, as shown in Fig. 12, opening portion 21 a is disposed above reformer 20 reforming section 20c, and gas rising through opening portion 21 a flows into exhaust passage 21 b on the left side as seen in Figs. 2 and 12, which is the opposite side from vaporizing section 20a. Therefore in the space above vaporizing section 20a (the right side in Figs. 2 and 12), the flow of exhaust is slower than in the space above reforming section 20c, and acts as a gas holding space 21 c, in which the flow of exhaust is slowed.

0108 Also, a vertical wall 21 d is erected over the entire perimeter at the edge of flow rectifier plate 21 opening portion 21 a, and the flowpath flowing into exhaust passage 21 b at the top side of flow rectifier plate 21 from the space on the bottom side of flow rectifier plate 21 is narrowed by this vertical wall 21 d. In addition, a descending wall 8b (Fig. 2) is also erected over the entire perimeter at the edge of communication opening 8a which communicates between exhaust passage 21 b and air-heat exchanger 22, and the flowpath flowing into air-heat exchanger 22 from exhaust passage 21 b is narrowed by this descending wall 8b. The flowpath resistance in the exhaust corridor leading from combustion chamber 18 to the outside of fuel cell module 2 through air-heat exchanger 22 is regulated by erecting this vertical wall 21 d and descending wall 8b. Adjustment of flowpath resistance is discussed below.

0109 Vaporization chamber insulation 23 is thermal insulation attached so as to cover approximately the entirety of the bottom surface of air-heat exchanger 22. Therefore vaporization chamber insulation 23 is disposed across the top of the entirety of vaporizing section 20a. This vaporization chamber insulation 23 is disposed so as to suppress direct heating of the bottom surface of air-heat exchanger 22 by high temperature gas inside the flow rectifier plate 21 and gas holding space 21 c formed between the top surface of flow rectifier plate 21 and the ceiling surface of case 8. Therefore during operation of fuel cell module 2, heat directly transmitted to the bottom surface of air-heat exchanger 22 from exhaust accumulating in the exhaust flowpath above vaporizing section 20a is reduced, and the temperature around vaporizing section 20a is prone to rise. Also, after fuel cell module 2 is stopped, dispersion of heat from reformer 20 is suppressed by the disposing of vaporization chamber insulation 23; i.e., it is difficult for heat around vaporizing section 20a to be pulled away by air-heat exchanger 22, and the temperature drop in vaporizing section 20a is moderated.

0110 Note that because vaporization chamber insulation 23 suppresses the dissipation of heat to the outside atmosphere, thermal insulation is what is disposed inside thermal insulation 7, completely separate from the thermal insulation 7 which serves as outside thermal insulation covering the entirety of the case 8 and air-heat exchanger 22 in fuel cell module 2. Also, thermal insulation 7 is constituted to have higher thermal insulating properties than vaporization chamber insulation 23. I.e., the thermal resistance between the inside and outside surfaces of thermal insulation 7 is greater than the thermal resistance between the insider and outside surfaces of vaporization chamber insulation 23. I.e., if thermal insulation 7 and vaporization chamber insulation 23 are constituted of the same material, thermal insulation 7 is thicker than vaporization chamber insulation 23.

0111 Next we explain the flow of fuel, generating air, and exhaust gas during the generating operation of solid oxide fuel cell 1.

First, fuel is introduced into reformer 20 vaporizing section 20a via fuel gas supply pipe 63b, T-pipe 62a, and reformer-introducing pipe 62, and pure water is introduced into vaporizing section 20a via water supply pipe 63a, T-pipe 62a, and reformer-introducing pipe 62. Therefore the supplied fuel and water merges in T-pipe 62a and is introduced into vaporizing section 20a via reformer-introducing pipe 62. During generating operation, vaporizing section 20a is heated to a high temperature, therefore pure water introduced into vaporizing section 20a becomes vaporized steam relatively quickly. Vaporized steam and fuel are mixed inside mixing section 20b and flow into the reforming section 20c of reformer 20. Fuel flowing into reforming section 20c together with steam is here steam reformed into a fuel gas rich in hydrogen. Fuel reformed in reforming section 20c passes through fuel gas supply pipe 64 and descends downward, flowing into manifold 66, which is a dispersion chamber.

0112 Manifold 66 is a parallelepiped with a relatively large volume, disposed on the bottom side of fuel cell stack 14; the large number of holes erected on the top surface thereof communicate with the inner side of each of the individual fuel cell units 16 comprising fuel cell stack 14. Fuel introduced into manifold 66 passes through the large number of holes erected on that top surface, then through the fuel electrode side of individual fuel cell units 16, which is to say the interior of individual fuel cell units 16, flowing out of the top end thereof. When hydrogen gas, which is fuel, passes through the interior of individual fuel cell units 16, it reacts with oxygen in the air passing over the individual fuel cell units 16 exterior, which is an air electrode (oxidant gas electrode), and an electrical charge is produced. Residual fuel remaining unused for electrical generation flows out from the top end of each of the individual fuel cell units 16 and is combusted inside the combustion chamber 18 placed above fuel cell stack 14.

0113 On the other hand, generating air, which is oxidant gas, is fed into fuel cell module 2 through generating air introducing pipe 74 by generating air flow regulator unit 45, which is an electrical generation oxidant gas supply apparatus. Air fed into fuel cell module 2 is introduced into air-heat exchanger 22 generating air flowpaths 72 through generating air introducing pipe 74 and preheated. Preheated air flows out into each of the communicating flowpaths 76 via each of the outlet ports 76a (Fig. 3). Generating air flowing into each of the communicating flowpaths 76 flows downward through the generating air supply paths 77 provided on both sides of fuel cell module 2 and is jetted from the many jet outlets 77a into generating chamber 10 toward fuel cell stack 14.

0114 Air jetted into generating chamber 10 contacts the outside surface of each of the individual fuel cell units 16, which is the air electrode side (oxidant gas electrode side) of fuel cell stack 14, and a part of the oxygen in that air is utilized for electrical generation. Also, air jetted to the bottom portion of generating chamber 10 through jet outlets 77a rises inside the generating chamber 10 as it is utilized for electrical generation. Air rising inside generating chamber 10 causes fuel flowing out from the top end of each of the individual fuel cell units 16 to combust. Combustion heat from this combustion heats the vaporizing section 20a, mixing section 20b, and reforming section 20c on the reformer 20 disposed above fuel cell stack 14. After the fuel is combusted and the resulting combustion gas heats the reformer 20 above, that gas passes through opening portion 21 a above reformer 20 and flows into the top side of flow rectifier plate 21. Combustion gas flowing into the top side of flow rectifier plate 21 passes through the exhaust passage 21 b formed by flow rectifier plate 21 and is directed to communication opening 8a, which is an entrance in air-heat exchanger 22. Combustion gas flowing into air-heat exchanger 22 from communication opening 8a flows into the end portion of each of the open combustion gas pipes 70, is subjected to a heat exchange with the generating air flowing in generating air flowpaths 72 on the outside of each of the combustion gas pipes 70, and is collected in exhaust gas collection chamber 78. Exhaust gas collected in exhaust gas collection chamber 78 is discharged to outside fuel cell module 2 via exhaust gas discharge pipe 82. Water vaporization in vaporizing section 20a and the endothermic steam reforming reaction in reforming section 20c are thus promoted, and generating air inside air-heat exchanger 22 is preheated.

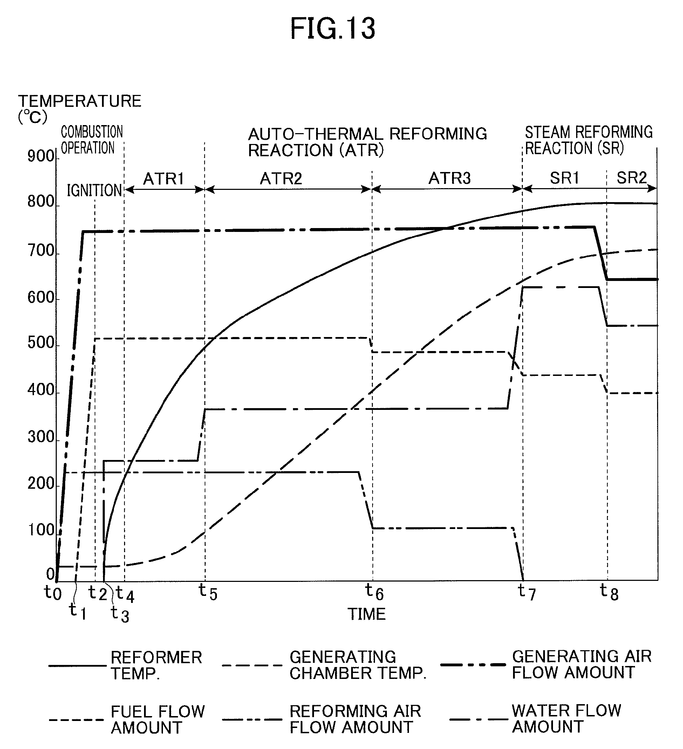

0115 Next, referring to Fig. 13, we explain the control in the solid oxide fuel cell 1 startup step.

Fig. 13 is a timing chart showing an example of each of the supplied amounts of fuel, etc. and the temperatures of each section in the startup step. Note that the vertical axis graduations in Fig. 13 indicate temperature, and increases and decreases in the supply amounts for fuel, etc. are shown in a summarized form.

0116 In the startup step shown in Fig. 13, the temperature of fuel cell stack 14 is raised from room temperature up to a temperature at which electrical generation can occur.

First, at time t0 in Fig. 13, the supply of generating air and reforming air is started. Specifically, control section 110, which a controller, sends a signal to start generating air flow regulator unit 45, an oxidant gas supply apparatus for generating air. As described above, generating air is introduced into fuel cell module 2 through generating air introducing pipe 74, then flows through air-heat exchanger 22 and generating air supply paths 77 into generating chamber 10. Control section 110 sends an activating signal to reforming air flow regulator unit 44, which is a reforming oxidant gas supply apparatus. Reforming air introduced into fuel cell module 2 passes through reformer 20 and manifold 66, then flows into the interior of each of the individual fuel cell units 16 and flows out from the top end thereof. Note that at time t0, since fuel is not yet supplied, the reforming reaction does not occur inside the reformer 20. In this embodiment, the amount of generating air supplied to start at time t0 in Fig. 13 is approximately 100L/min, and the amount of reforming air supplied is approximately 10.0 L/min.

0117 Next, the supply of fuel is started between time t0 in Fig. 13 and time t1 a predetermined time later. Specifically, control section 110 sends a signal to fuel flow regulator unit 38, which is a fuel supply apparatus, thereby activating it. In the embodiment, the amount of fuel supplied at time t1 is approximately 5.0 L/min. Fuel introduced into fuel cell module 2 passes through reformer 20 and manifold 66, then flows into the interior of each of the individual fuel cell units 16 and flows out from the top end thereof. Note that at time t1 the reforming reaction does not occur inside the reformer 20, since the reformer temperature is still low.

0118 Next, at time t2 in Fig. 13, when a predetermined time has elapsed from time t1, the step for igniting supplied fuel is started. Specifically, in the ignition step control section 110 sends a signal to ignition device 83 (Fig. 2), which is the ignition means, igniting fuel flowing from the top end of each of the individual fuel cell units 16. Ignition device 83 generates repeated sparks near the top end of fuel cell stack 14, igniting the fuel flowing out of the top end of individual fuel cell units 16.

0119 When ignition is complete at time t3 in Fig. 13, supply of reforming water commences. Specifically control section 110 sends a signal to water flow volume regulator unit 28 (Fig. 7), which is a water supply apparatus, thereby activating it. In this embodiment, the amount of water first supplied at time t3 is 2.0 cc/min. At time t3, the amount of fuel supplied is maintained at the previous level of approximately 5.0 L/min. The amount of generating air and reforming air supplied is maintained at the previous value. Note that at time t3 the ratio O₂ /C of oxygen O₂ in reforming air and carbon C in fuel is approximately 0.32.

0120 After ignition at time t3 in Fig. 13, supplied fuel flows out as off-gas from the top end of each individual fuel cell units 16, where it is combusted. This combustion heat heats the reformer 20 disposed above fuel cell stack 14. Here, vaporization chamber insulation 23 is disposed above reformer 20 (above case 8), which results in a sudden rise in the temperature of reformer 20 from room temperature immediately after the start of fuel combustion. Because outside air is introduced into the air-heat exchanger 22 disposed at the top of vaporization chamber insulation 23, air-heat exchanger 22 is at a particularly low temperature immediately after the start of combustion, and can easily serve as a cooling source. In this embodiment, the disposition of vaporization chamber insulation 23 between the top surface of case 8 and the bottom surface of air-heat exchanger 22 suppresses the movement of heat from reformer 20 disposed at the top portion of case 8 to air-heat exchanger 22, and heat is prone to withdraw in the vicinity of reformer 20 in case 8. In addition, the space at the top side of flow rectifier plate 21 above vaporizing section 20a is constituted as a gas holding space 21 c (Fig. 2) in which the flow of combustion gas is slowed, therefore the area around vaporizing section 20a is doubly insulated so that the temperature rises more quickly.

0121 Because of this rapid rise in the temperature of vaporizing section 20a, it is possible to produce steam within a short time after the start of off-gas combustion. Because reforming water is supplied a small amount at a time to vaporizing section 20a, heating up to the boiling point of water can be accomplished with a very small amount of heat compared to when a large amount of water is held in vaporizing section 20a, so the supply of steam can be started quickly. In addition, because water flows in immediately after the activation of water flow volume regulator unit 28, excessive rises in the temperature of vaporizing section 20a caused by water supply delays, and delays in the supply of steam, can be avoided.

0122 Note that after the elapse of some time, and after the start of combustion of off-gas, the exhaust gas flowing into air-heat exchanger 22 from combustion chamber 18 causes the temperature of air-heat exchanger 22 to rise as well. Vaporization chamber insulation 23, which insulates between reformer 20 and air-heat exchanger 22, is thermal insulation placed on the inside of thermal insulation 7. Therefore vaporization chamber insulation 23 does not suppress the dispersion of heat from fuel cell module 2; rather it causes a sudden rise in the temperature of reformer 20, and especially the vaporizing section 20a thereof, immediately after the start of off-gas combustion.

0123 In this matter, at time t4 when the temperature of reformer 20 has risen, fuel and reforming air which have flowed into mixing section 20b through vaporizing section 20a produce the partial reforming reaction shown in Eq. (1).

CₘHₙ + xO₂ →aCO₂ + bCO + cH₂ (1)

Since this partial reforming reaction is an exothermic reaction, the surrounding temperature suddenly rises in a localized manner when the partial reforming reaction occurs inside reforming section 20b.

0124 On the other hand, in the embodiment the supply of reforming water is started at time t3 immediately after ignition is confirmed, and because the temperature of vaporizing section 20a rises suddenly, steam is already being produced inside vaporizing section 20a and supplied to reforming section 20b at time t4. I.e., after the off-gas has ignited, the supply of water is started a predetermined time before the temperature of reforming section 20b reaches the temperature generated by the partial reforming reaction, and at the point where the temperature generated by the partial reforming reaction is reached, a certain amount of water is held in vaporizing section 20a, producing steam. Therefore when the temperature suddenly rises due to the occurrence of the partial reforming reaction, a steam reforming reaction occurs in which reforming steam and fuel supplied to reforming section 20b react. That steam reforming reaction is the endothermic reaction shown by Eq. (2); this occurs at a higher temperature than the partial reforming reaction.

CₘHₙ+xH₂O→aCO₂+bCO+cH₂ (2)

0125 Thus when time t4 in Fig. 13 is reached, the partial reforming reaction is produced within reforming section 20b, and the steam reforming reaction occurs simultaneously by the temperature rise produced by the partial reforming reaction. Therefore the reforming reaction produced inside reforming section 20b after time t4 is the auto-thermal reforming reaction (ATR) shown by Eq. (3), in which the partial reforming reaction and the steam reforming reaction are mixed. I.e., the ATR1 step is started at time t4.

CₘHₙ+xO₂+yH₂O→aCO₂+bCO+cH₂ (3)

0126 Thus in the solid oxide fuel cell 1 of the embodiment, water is supplied during the entire period of the startup step, and the partial reforming reaction (POX) does not occur independently. Note that in the timing chart shown in Fig. 13, the reformer temperature at time t14 is approximately 200°C. This reformer temperature is lower than the temperature occurring in the partial reforming reaction, but the temperature detected by reformer temperature sensor 148 (Fig. 7) is the average temperature of reforming section 20b. In actuality, reforming section 20b does partially reach the temperature produced in the partial reforming reaction at time t4, as well, and a steam reforming reaction is also induced by the reaction heat from the generated partial reforming reaction. Thus in the embodiment the supply of water is started after ignition and before reforming section 20b reaches the temperature generated by the partial reforming reaction, and the partial reforming reaction does not occur independently.

0127 Next, when the temperature detected by reformer temperature sensor 148 reaches approximately 500°C or above, there is a transition from the ATR1 step to the ATR2 step at time t5 in Fig. 13. At time t5, the water supply amount is changed from 2.0 cc/min to 3.0 cc/min. The previous values are maintained for the fuel supply amount, reforming air supply amount, and generating air supply amount. As a result, the ratio S/C of steam to carbon in the ATR2 step is increased to 0.64, while the ratio O₂/C of reforming air to carbon is maintained at 0.32. Thus by maintaining a fixed ratio O₂/C of reforming air to carbon and increasing the ratio S/C of steam to carbon, the amount of steam-reformable carbon is increased without decreasing the amount of partially reformable carbon. The risk of carbon deposition in reforming section 20b is thus reliably avoided, and the amount of steam-reformed carbon can be increased while the temperature of reforming section 20b rises.

0128 Furthermore, in the embodiment at time t6 in Fig. 13 there is a transition from the ATR2 step to the ATR3 step when the temperature detected by generating chamber temperature sensors 142 reaches approximately 400°C or above. Associated with this, the fuel supply amount is changed from 5.0 L/min to 4.0 L/min, and the reforming air supply amount is changed from 9.0 L/min to 6.5 L/min. Also, the water supply amount and generating air supply amount are maintained at the previous values. As a result, the ratio S/C of steam to carbon in the ATR3 step is increased to 0.80, while the ratio O₂/C of reforming air to carbon is decreased to 0.29.

0129 Furthermore, at time t7 in Fig. 13 there is a transition to the SR1 step when the temperature detected by generating chamber temperature sensors 142 reaches approximately 550°C or above. In conjunction with this, the fuel supply amount is changed from 4.0 L/min to 3.0 L/min, and the water supply amount is changed from 3.0 cc/min to 7.0 cc/min.

Also the supply of reforming air is stopped and the generating air supply amount is maintained at the previous value. Thus in the SR1 step, only steam reforming now occurs inside reforming section 20b, and the ratio S/C of steam to carbon is set at 2.49, which is appropriate for steam reforming the entire amount of fuel supplied. At time t7 in Fig. 13, reformer 20 and fuel cell stack 14 have both risen sufficiently in temperature that a steam reforming reaction can be stably generated even without a partial reforming reaction occurring in reforming section 20b.

0130 Next, at time t9 in Fig. 13, there is a transition to the SR2 step when the temperature detected by generating chamber temperature sensors 142 reaches approximately 600°C or above. The fuel supply amount is thus changed from 3.0 L/min to 2.5 L/min, and the water supply amount is changed from 7.0 cc/min to 6.0 cc/min. The generating air supply amount is also maintained at the previous value. Thus in the SR2 step, the ratio S/C of steam to carbon is set at 2.56.

0131 Furthermore, there is a transition to the electrical generation step after the SR2 step has been executed for a predetermined time. In the electrical generation step, power is extracted at inverter 54 (Fig. 7) from fuel cell stack 14, and electrical generation is started. Note that in the electrical generation step, fuel is reformed only by steam reforming in the reforming section 20b. Also in the electrical generation step the fuel supply amount, generating air supply amount, and water supply amount are changed in response to the output power demanded of fuel cell module 2.

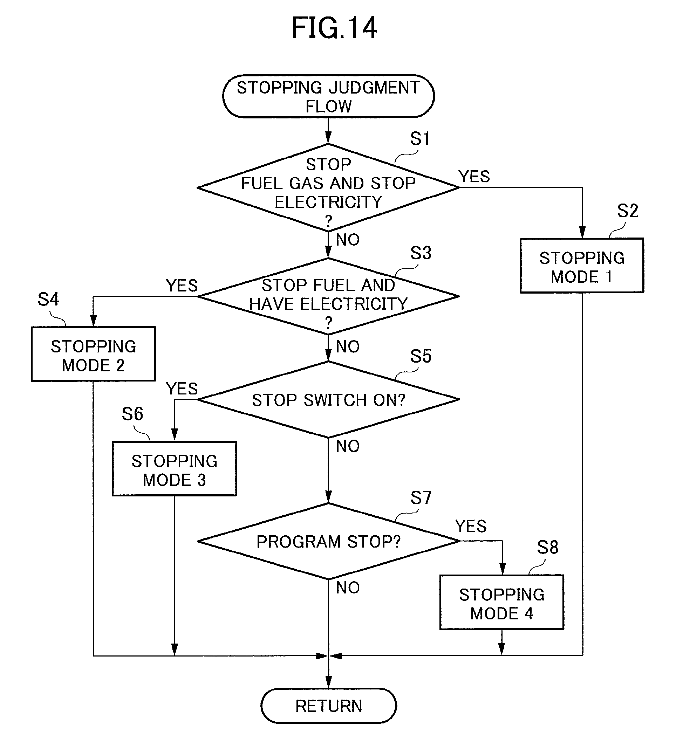

0132 Next, referring to the Figs. 14 through 27, we explain the stopping of a solid oxide fuel cell 1 according to an embodiment of the invention.

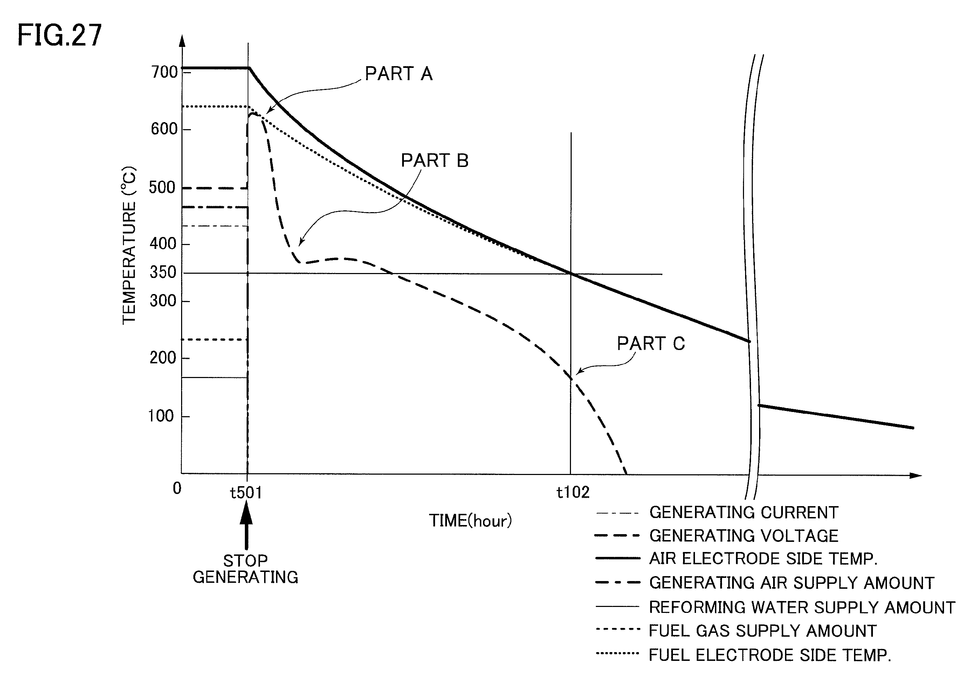

First, referring to Fig. 27, we explain the behavior at time of shutdown of a conventional solid oxide fuel cell. Fig. 27 is a timing chart schematically showing a time sequence of one example of the stopping behavior of a conventional solid oxide fuel cell.

0133 First, at time t501 in Fig. 27, an operation is performed for shutting down a fuel cell which had been operating. By so doing, the fuel supply amount, reforming air supply amount, and generating air supply amount are brought to zero in a short time period without waiting for the temperature inside the fuel cell module to drop, and current (generated current) extracted from the fuel cell module is also brought to zero. I.e., the supply to the fuel cell module of fuel, water, and generating air is stopped in a short time period, and extraction of power from the fuel cell module is stopped. In addition, even if the supply of fuel and electricity to the solid oxide fuel cell is lost due to a natural disaster or the like, the stopping behavior is the same as shown in Fig. 27. Note that each of the supply amount, current, and voltage graphs in Fig. 27 merely illustrates a change trend, and does not indicate specific values.

0134 At time t501, the value of the voltage produced by the fuel cell stack rises (although current is zero) due to the fact that extraction of power at time t501 is stopped. At time t501, because the generating air supply amount has been brought to zero, the fuel cell stack is naturally cooled over a long time period after time t501 without any forced feeding of air into the fuel cell module.

0135 If, hypothetically, air continues to be supplied into the fuel cell module after time t501, the pressure inside the fuel cell module will rise due to the infed air. On the other hand the supply of fuel has already been stopped, so the pressure inside the individual fuel cell units starts to drop. Therefore air fed into the fuel cell module generating chamber is believed to flow back from the top end to the fuel electrode side on the inner side of the individual fuel cell units. At time t501, because the fuel cell stack is in a high temperature state, if air flows back to the fuel electrode side, the fuel electrodes will be oxidized and the individual fuel cell units damaged. To avoid this, in conventional fuel cells such as that shown in Fig. 27, generating air was also quickly stopped immediately after the supply of fuel was stopped by a shutdown, even if the supply of power was lost.

0136 Furthermore, after the elapse of 6 or 7 hours following a shutdown, and after the temperature inside the fuel cell module has fallen to less than the lower limit oxidation temperature (approximately 250°C to 300°C), air is also being fed once again into the fuel cell module (not shown). This supply of air is executed with the goal of discharging accumulated fuel gas, but if the fuel cell stack temperature has fallen below the lower limit temperature for oxidation of fuel electrodes, the fuel electrodes will not oxidize even if air flows in reverse to the fuel electrodes.

0137 However, the inventors discovered there is a risk of air flowing in reverse to the fuel electrode side and fuel electrodes oxidizing even if such a conventional shutdown of the fuel cell has been performed.

0138 A reverse flow of air from the air electrode side to the fuel electrode side occurs based on a pressure difference between the inside (fuel electrode side) and outside (air electrode side) of the individual fuel cell units. In the pre-shutdown state in which fuel gas and generating air are being supplied, reformed fuel is fed under pressure to the fuel electrode side of the individual fuel cell units. On the other hand, generating air is also being fed to the air electrode side of the individual fuel cell units. In this state, the pressure on the fuel electrode side of the individual fuel cell units is higher than the pressure on the air electrode side, and fuel is jetted from the fuel electrode side to the air electrode side of the individual fuel cell units.

0139 Next, when the supply of fuel gas and generating air is stopped by a shutdown, fuel is jetted from the fuel electrode side in a high pressure state to the low pressure air electrode side. The pressure on the air electrode side within the fuel cell module is also higher than outside air pressure (atmospheric pressure), therefore after a shutdown the air on the air electrode inside the fuel cell module (and the fuel gas jetted from the fuel electrode side) is discharged through an exhaust path to the outside. After a shutdown, the pressure on both the fuel electrode and air electrode sides of the individual fuel cell units therefore drops, and ultimately recedes to atmospheric pressure. As a result, the behavior by which the pressure falls on the fuel electrode side and the air electrode side is affected by the flow resistance between the fuel cell unit fuel electrodes and air electrodes, the flow resistance between the air electrode side inside the fuel cell module and the outside atmosphere, and the like. Note that if pressure on the fuel electrode side and the air electrode side is equal, air on the air electrode side invades the fuel electrode side due to diffusion.

0140 However, because the fuel cell module interior is actually in a high temperature state, the pressure behavior after shutdown is also affected by temperature fluctuations on the fuel electrode side and the air electrode side. For example, if the temperature on the fuel electrode side of the individual fuel cell units suddenly drops to below the that on the air electrode side, the volume of fuel gas inside the individual fuel cell units shrinks, such that pressure on the fuel electrode side drops and a reverse flow of air occurs. Thus the pressure on the fuel electrode side and the air electrode side after shutdown is affected by each of the flowpath pressures inside the fuel cell module, by the distribution of temperatures inside the fuel cell module, and by the accumulated heat quantities, etc., and varies in an extremely complex way.

0141 The gas component present on the fuel electrode side and the air electrode side in the individual fuel cell units can be estimated based on the output voltage of the individual fuel cell units when no current is being extracted (output current = 0). As shown by the heavy broken line in Fig. 27, immediately after the shutdown at time t501, the output voltage from the cell stack suddenly rises (part A in Fig. 27). This is because immediately after the shutdown, a large amount of hydrogen is present on the fuel electrode side, and air is present on the air electrode side, while current extracted from the cell stack has been brought to 0. Next, the output pressure at the cell stack drops suddenly (part B in Fig. 27), but this is assumed to be due to the fact that hydrogen present on the fuel electrode side of each of the individual fuel cell units flows out, resulting in reduced concentration of hydrogen on the fuel electrode side, while the outflowing hydrogen causes the concentration of air on the air electrode side to decline.

0142 Next, the output voltage of the cell stack declines with the passage of time, and at the point in time when the temperature inside the fuel cell module has dropped to less than the oxidation lower limit temperature (250°C to 300°C) (part C in Fig. 27), the output voltage drops substantially. In this state it is assumed there is virtually no hydrogen remaining on the fuel electrode side of each of the individual fuel cell units, and in a conventional fuel cell the fuel electrodes are exposed to the danger of oxidation. In actuality it is believed that in a conventional fuel cell, in most cases a phenomenon occurs by which the pressure on the fuel electrode side falls below the pressure on the air electrode side before the temperature in the fuel cell module drops to below the oxidation lower limit temperature, producing negative effects on the individual fuel cell units.

0143 Also, depending on the fuel cell module structure and the operating conditions before the shutdown, a phenomenon occurs wherein the temperature at the top of the fuel cell module interior rises, regardless of whether the fuel supply is stopped after the shutdown. I.e., there are cases when the temperature inside the fuel cell module rises to higher than during the electrical generating operation for about an hour after shutdown. Such temperature rises are believed to occur due to the fact that while the endothermic steam reforming reaction which had been occurring inside the reformer during the electrical generating operation stops due to the stoppage of the fuel supply, fuel remaining inside each of the individual fuel cell units, or inside the manifolds which distribute the fuel, continues to combust inside the combustion chamber even after the supply of fuel is stopped.

0144 Thus while the temperature around the reformer inside the fuel cell module rises, extraction of current from the fuel cell stack has been stopped, therefore electrical generation heat can easily be produced in the fuel cell stack. This means that the temperature at the upper part of the fuel cell stack rises and pressure rises, such that the pressure in the interior of each of the individual fuel cell units drops. Because of such temperature gradients within the fuel cell module, pressure on the fuel electrode side of each fuel cell unit may drop more than the pressure on the air electrode side. In such cases, air on the air electrode side outside the individual fuel cell units flows back to the fuel electrode side on the interior thereof, resulting in a high probability of damage to individual fuel cell units.

0145 In a solid oxide fuel cell 1 according to an embodiment of the invention, the risk of oxidation of fuel electrodes is greatly suppressed by appropriately setting values for each of the flowpath resistances inside the fuel cell module, and by controlling the shutdown circuit 110a (Fig. 7) built into control section 110.

0146 Next, referring to the Figs. 14 through 26, we explain the stopping of a solid oxide fuel cell 1 according to an embodiment of the invention.

Fig. 14 is a flow chart for the stopping judgment to select the stop mode in a solid oxide fuel cell 1 according to an embodiment of the invention. The Fig. 14 flow chart is for judging which of the stop modes to select based on predetermined conditions; it is repeatedly executed at a predetermined time interval during the operation of solid oxide fuel cell 1.

0147 First, at step S1 in Fig. 14, a judgment is made of whether the supply of fuel gas from fuel supply source 30 (Fig. 1) and the supply of power from a commercial power source has been stopped. When the supply of both fuel gas and power has been stopped, the system advances to step S2; at step S2 a selection is made of stopping mode 1, which is the emergency stopping mode, and one iteration of the Fig. 14 flowchart processing is completed. When stopping mode 1 is selected, it is assumed that the supply of fuel gas and power has been stopped by a natural disaster or the like, and the frequency with which this type of stopping occurs is expected to be extremely rare.

0148 On the other hand when at least either fuel gas or power is being supplied, the system advances to step S3, and in step S3 a judgment is made as to whether the supply of fuel gas is stopped and power is being supplied. When the supply of fuel gas is stopped and power is being supplied, the system advances to step S4; in cases other than this the system advances to step S5. Stopping mode 2, which is one of the normal stopping modes, is selected in step S4, and one iteration of the Fig. 14 flowchart processing is completed. When stopping mode 2 is selected, a temporary stoppage of the supply of fuel gas is assumed to have occurred due to construction, etc. in the fuel gas supply path, and the frequency with which this type of stopping occurs is expected to be low.

0149 Furthermore, in step S5 a judgment is made of whether a user has operated a stop switch. If a user has operated a stop switch, the system advances to step S6; if the switch has not been operated, the system advances to step S7. In step S6, stopping mode 3, which is one of the switch stopping modes among the normal stopping modes, is selected, and one iteration of the Fig. 14 flowchart processing is completed. The presumed situation for a selection of stopping mode 3 is that a user of the solid oxide fuel cell 1 has been absent for a long period, so that operation of solid oxide fuel cell 1 was intentionally stopped over a relatively long time period, and the frequency of this type of stopping is not believed to be very great.

0150 On the other hand, in step S7 a judgment is made of whether the stoppage is a regular stoppage, executed at a pre-planned regular timing. If the stoppage is a regular stoppage, the system advances to step S8; if it is not a regular stoppage, one iteration of the Fig. 14 flow chart is completed. Stopping mode 4, which is one of the programmed stopping modes among the normal stopping modes, is selected in step S8, and one iteration of the Fig. 14 flowchart processing is completed. When stopping mode 4 is selected, it is expected that there will be a response to a microprocessor meter provided on fuel supply source 30. I.e., in general a microprocessor meter (not shown) is provided on fuel supply source 30, and if there is no period longer than approximately 1 hour during which the supply of gas is completely stopped during an approximately 1 month interval, this microprocessor meter judges that a gas leak is occurring and interrupts the supply of fuel gas. Therefore in general solid oxide fuel cell 1 needs to be stopped for approximately 1 hour or more, approximately once per month. Stopping by stopping mode 4 is therefore expected to be performed at a frequency of approximately 1 time per month, so that this will be the most often performed stoppage.

0151 Note that according to the Fig. 14 flow chart, if power is supplied and the supply of fuel gas is continued, neither of the stopping modes will be selected. In such cases, in solid oxide fuel cell 1 according to the embodiment, electrical generation is continued by activating auxiliary unit 4 using power produced by fuel cell stack 14. Note that the invention can also be arranged to stop electrical generation if the supply of power is stopped continuously over a predetermined long period.

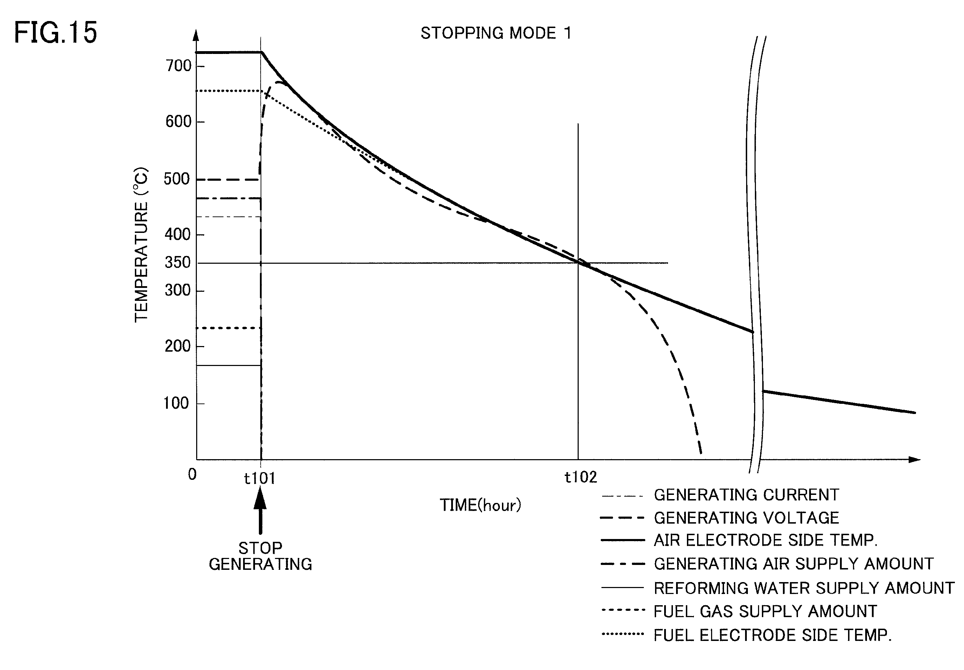

0152 Next, referring to Figs. 15 through 26, we explain the stop processing in each stopping mode.

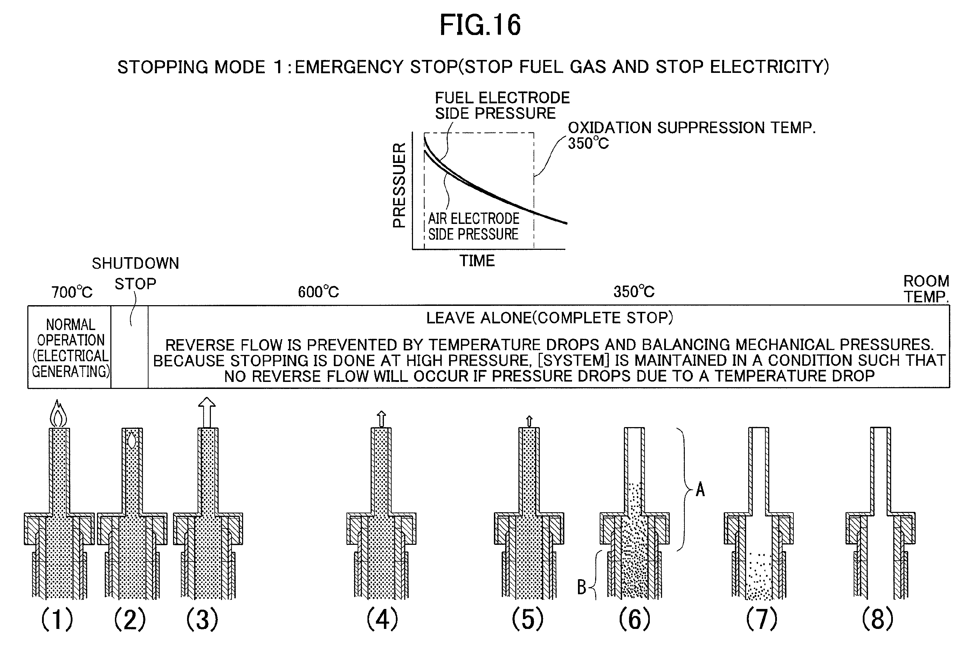

Fig. 15 is a timing chart schematically showing in a time line an example of the stopping behavior when stopping mode 1 (step S2 in Fig. 14) is executed in a solid oxide fuel cell 1 according to an embodiment of the invention. Fig. 16 is a diagram explaining on a time line the control, the temperature, pressure, and state of the front end portion of the individual fuel cell units inside the fuel cell module when stop mode 1 is executed.

0153 First, at time t101 in Fig. 15, performing a shutdown results in stopping the supply of fuel by fuel flow regulator unit 38, the supply of water by water flow volume regulator unit 28, and the supply of generating air by generating air flow regulator unit 45 in a short time period. The extraction of power from fuel cell module 2 by inverter 54 is also stopped (output current = 0). When stopping mode 1 is executed, fuel cell module 2 is left as is in this state after a shutdown. For this reason, fuel which had been present on the fuel electrode side of each of the individual fuel cell units 16 is jetted to the air electrode side through gas flowpath fine tubing 98 (Figs. 4 and 5) based on the pressure differential relative to the outside air electrode side. Also, air present on the air electrode side of each of the individual fuel cell units 16 (and fuel jetted from the fuel electrode side) is discharged through air-heat exchanger 22, etc. to the outside of fuel cell module 2 based on the pressure differential between the pressure relative to the air electrode side (the pressure inside generating chamber 10 (Fig. 1)). Therefore after a shutdown, pressure on the fuel electrode and the air electrode side of each of the individual fuel cell units 16 drops naturally.

0154 However, gas flowpath fine tubing 98, which is an outflow-side flowpath resistance section, is placed on the top end portion of each of the individual fuel cell units 16, and a vertical wall 21 d and descending wall 8b (Fig. 2) are erected in exhaust passage 21 b. This gas flowpath fine tubing 98 flowpath resistance is set so that the pressure drop on the fuel electrode side after the fuel supply and power are stopped is more gradual than the pressure drop on the air electrode side. In solid oxide fuel cell 1, by tuning the flowpath resistance appropriately in each part of these fuel and exhaust passages, fuel remains over long periods even after a shutdown on the fuel electrode side of each of the individual fuel cell units 16. For example, if the flowpath resistance in the exhaust path leading from generating chamber 10 to the outside air is too small relative to the flowpath resistance in gas flowpath fine tubing 98, the pressure on the air electrode side after a shutdown will drop suddenly, causing the pressure differential between the fuel electrode side and the air electrode side to increase so that the outflow of fuel from the fuel electrode side is actually increased. Conversely, if the exhaust path flowpath resistance is too great relative to the flowpath resistance of gas flowpath fine tubing 98, the pressure drop on the air electrode side will be gradual compared to the pressure drop on the fuel electrode side, and the pressures on the fuel electrode and the air electrode side will approach one another, increasing the risk of a reverse air flow to the fuel electrode side.

0155 Thus in the embodiment the fuel and/or exhaust gas passages guiding fuel and/or gas to outside fuel cell module 2 from fuel flow regulator unit 38 through reformer 20 and the fuel electrodes in each of individual fuel cell units 16 are tuned as described above. Therefore even when left as is after a shutdown, at the point in time when the pressure on the fuel electrode side drops while maintaining a higher pressure than the pressure on the air electrode side, and the temperature of the fuel electrode has dropped to between 350°C and 400°C, the pressure is maintained above atmospheric pressure, and the risk of fuel electrode oxidation is fully suppressed. As shown in Fig. 15, in the solid oxide fuel cell 1 of the embodiment, after a shutdown is performed at time t101, and after the output voltage from the fuel cell stack 14 shown by the heavy broken line first greatly rises, its subsequent drop is less than in conventional solid oxide fuel cells (Fig. 27), and a relatively high pressure is continued for a long time period. In the example shown in Fig. 15, a relatively high pressure is maintained after a shutdown until the fuel electrode side and air electrode side temperatures drop to 400°C. This indicates that fuel remains on the fuel electrode side of each of the individual fuel cell units 16 until time t10, when the temperature drops to 400°C.

0156 In the temperature range from 400°C to 350°C (especially the range of 380°C ±20°C), fuel electrodes shrink when oxidized. This temperature range was deemed to be the temperature at which the risk of fuel electrode oxidation was sufficiently reduced, but by preventing oxidation of fuel electrodes in this temperature range, breakage to fuel cell units by oxidation shrinkage of fuel electrodes is prevented. In particular, when the fuel electrode temperature is between 350°C and 400°C, partial shrinkage of the fuel electrode due to partial oxidation of the fuel electrode forming the electrical generation lamination portion is prevented by maintaining the entire surface on the fuel gas flowpath side of the fuel electrode forming the electrical generation laminated section in an oxygen-free atmosphere.

0157 I.e., in the solid oxide fuel cell 1 of the embodiment, the fuel/exhaust gas passage is constituted so that after a shutdown and until the fuel electrode temperature drops to between 350°C to 400°C, the pressure on the air electrode side within fuel cell module 2 is maintained at higher than atmospheric pressure, and the pressure on the fuel electrode side is maintained higher than the pressure on the air electrode side. Therefore the fuel/exhaust gas passage functions as a mechanical pressure retaining means for extending the time until the pressure on the fuel electrode side approaches the pressure on the air electrode side.

0158 Fig. 16 is a diagram explaining the operation of stopping mode 1; the top portion shows a graph schematically depicting pressure changes on the fuel electrode side and air electrode side; the middle portion shows the control operations by control section 110 and the temperature inside fuel cell module 2 on a time line, and the bottom portion shows the state at the top end portion of individual fuel cell units 16 at each point in time.

0159 First, normal electrical generation operation is being performed prior to the shut down in the middle portion of Fig. 16. In this state, the temperature inside fuel cell module 2 is approximately 700°C. As shown in the bottom portion (1) of Fig. 16, fuel gas remaining without being used for electrical generation is jetted out from gas flowpath fine tubing 98 at the top end of individual fuel cell units 16, and this jetted out fuel gas is combusted at the top end of gas flowpath fine tubing 98. Next, when the supply of fuel gas, reforming water, and generating air is stopped by the shutdown, the flow volume of jetted out fuel gas declines and, as shown in the second tier (2) of Fig. 16, the flame is extinguished at the tip of gas flowpath fine tubing 98. By making gas flowpath fine tubing 98 long and narrow, flame is quickly extinguished when drawn into gas flowpath fine tubing 98 by a reduction in the flow volume of fuel gas. Quick extinction of flame means reduced consumption of fuel gas remaining inside the individual fuel cell units 16, etc., and extended time during which remaining fuel can be maintained on the fuel electrode side.

0160 As shown in the lower portion (3) of Fig. 16, even after the flame is extinguished following a shutdown, pressure inside individual fuel cell units 16 (on the fuel electrode side) is higher than outside (the air electrode side), therefore jetting of fuel gas from gas flowpath fine tubing 98 is continued. Also, as shown in in the upper portion of Fig. 16, after a shutdown the pressure on the fuel electrode side is higher than the pressure on the air electrode side, and this relationship is maintained unchanged as each pressure declines. The pressure differential between the fuel electrode side and the air electrode side declines with the jetting of fuel gas after a shutdown.

0161 The amount of fuel gas jetted from gas flowpath fine tubing 98 declines with the fall in the pressure differential between the fuel electrode side and the air electrode side (bottom portions (4), (5) of Fig. 16). On the other hand, at the time of a shutdown, reformed fuel gas, unreformed fuel gas, steam, and water remain inside reformer 20, and after the shutdown as well, unreformed fuel gas is reformed by steam using residual heat. Remaining water is also vaporized by residual heat into steam, since the reformer 20 integrally comprises a vaporizing section 20a. Because of the volumetric expansion associated with reforming of fuel gas and vaporization of water in reformer 20, fuel gas which had remained inside the reformer 20, fuel gas supply pipe 64, and manifold 66 (Fig. 2) are pushed out in that order into each of the individual fuel cell units 16 (on the fuel electrode side). Therefore the pressure drop on the fuel electrode side which accompanies jetting of fuel gas from gas flowpath fine tubing 98 is suppressed.

0162 Furthermore, since reforming section 20c inside reformer 20 is filled with catalyst, its flowpath resistance is relatively large. Hence when remaining water is vaporized in vaporizing section 20a, steam flows into reforming section 20c, flowing in reverse toward reformer-introducing pipe 62 (Fig. 2). After this reformer-introducing pipe 62 extends approximately horizontally from the side surface of vaporizing section 20a, it is bent to extend approximately vertically upward. Therefore reverse-flowing steam rises vertically upward inside reformer-introducing pipe 62 and reaches the T-pipe 62a connected to the top end of reformer-introducing pipe 62. Here reformer-introducing pipe 62 extending from vaporizing section 20a is disposed on the interior of thermal insulation 7 covering case 8, so the temperature is high. Also the top end portions of reformer-introducing pipe 62 and T-pipe 62a are positioned outside thermal insulation 7, so their temperature is low. Hence steam which has risen up in reformer-introducing pipe 62 contacts the top end portion of reformer-introducing pipe 62 and T-pipe 62a, which are at a low temperature, where it is cooled and condenses, forming water.

0163 Water formed by condensation falls from the T-pipe 62a and top end portion of reformer-introducing pipe 62 onto the inside wall surface at the bottom of reformer-introducing pipe 62, where it is again heated so that it rises and flows again into vaporizing section 20a. Since reformer-introducing pipe 62 is constituted by bending, water droplets dropping down after condensing do not directly flow into vaporizing section 20a, but rather fall onto the inner wall surface at the bottom portion of reformer-introducing pipe 62. Therefore the part of reformer-introducing pipe 62 disposed inside thermal insulation 7 functions as a pre-heating portion for preheating supplied or condensed water, and the top end portion of reformer-introducing pipe 62 and T-pipe 62a, which are lower in temperature than this preheating section, function as condensing sections.

0164 Steam which has risen up inside reformer-introducing pipe 62 in some cases flows in reverse from T-pipe 62a to water supply pipe 63a. However water supply pipe 63a is disposed at an inclination so as to face upward from T-pipe 62a, therefore even when steam condenses inside water supply pipe 63a, the condensate flows from water supply pipe 63a toward T-pipe 62a, and falls inside reformer-introducing pipe 62. As shown in Fig. 2, the bottom portion of reformer-introducing pipe 62 is disposed in proximity at the inside of thermal insulation 7 to intersect exhaust gas discharge pipe 82. Therefore a heat exchange is accomplished between reformer-introducing pipe 62, which is a preheating section, and exhaust gas discharge pipe 82, and heating is also accomplished by exhaust heat.

0165 Thus a portion of the steam vaporized in vaporizing section 20a flows in reverse to reformer-introducing pipe 62; this forms a condensate, which is again vaporized in vaporizing section 20a. Therefore even after the supply of water is stopped during shutdown, remaining water is vaporized a little at a time inside vaporizing section 20a, and water is vaporized over a relatively long period after shutdown. Moreover, after extending from the side surface of vaporizing section 20a, reformer-introducing pipe 62 is bent to extend approximately vertically upward, penetrating thermal insulation 7. Therefore the location where reformer-introducing pipe 62 penetrates thermal insulation 7 is separated from the region vertically above reformer 20, and it is difficult for the heat of reformer 20 to escape through the location of penetration of thermal insulation 7 by reformer-introducing pipe 62, so there is no remarkable loss in thermal insulation characteristics due to reformer-introducing pipe 62.

0166 On the other hand, water vaporization inside reformer 20 can occur suddenly depending on the distribution of temperatures inside vaporizing section 20a, etc. In such cases the pressure inside vaporizing section 20a rises suddenly, so a high pressure is transferred to the downstream side, and there is a risk that fuel gas inside the individual fuel cell units 16 will suddenly be jetted to the air electrode side. However, because a pressure fluctuation suppression flowpath resistance section 64c is provided on fuel gas supply pipe 64, sudden eruptions of fuel gas within the individual fuel cell units 16 based on sudden rises in pressure inside reformer 20 are suppressed. Also, because gas flowpath fine tubing 98 (Figs. 4 and 5) is also disposed at the bottom end of each of the individual fuel cell units 16, sudden pressure rises inside each of the individual fuel cell units 16 are suppressed by the flowpath resistance of gas flowpath fine tubing 98. Therefore the gas flowpath fine tubing 98 and pressure fluctuation suppression flowpath resistance section 64c at the bottom end of each of the individual fuel cell units 16 function as a mechanical pressure retaining means for maintaining a high pressure on the fuel electrode side.

0167 By thus using a mechanical pressure retaining means, the drop in pressure on the fuel electrode side of each of the individual fuel cell units 16 is suppressed over a long time period following shutdown. When 5 to 6 hours have elapsed following shutdown and the temperature inside fuel cell module 2 has dropped to 400°C, both the fuel electrode side and the air electrode side of each of the individual fuel cell units 16 fall to essentially atmospheric pressure, and air on the air electrode begins to diffuse to the fuel electrode side (bottom portions (6), (7) in Fig. 16). However, gas flowpath fine tubing 98 and the top end portion of fuel cell 84, where no outside electrode layer 92 is formed (the A part of bottom portion (6) in Fig. 16), are not oxidized even if air penetrates, so this part functions as a buffer portion. In particular, because gas flowpath fine tubing 98 is formed to be long and narrow, the buffer portion is elongated, and oxidation of the fuel electrode is unlikely to occur even if air penetrates from the top end of the individual fuel cell units 16. Close to 400°C, the fuel electrode temperature is low, and the oxidation occurring even if the fuel electrodes are exposed to air is minute; also the frequency at which stopping mode 1 is executed is low, therefore the negative effects resulting from oxidation can in substance be ignored. Furthermore, as shown by the bottom portion (8) of Fig. 16, after the temperature of the fuel electrode has dropped below the oxidation lower limit temperature (approximately 250°C to 300°C), the fuel electrode will not oxidize even if each of the individual fuel cell units 16 is full of air on the fuel electrode side.

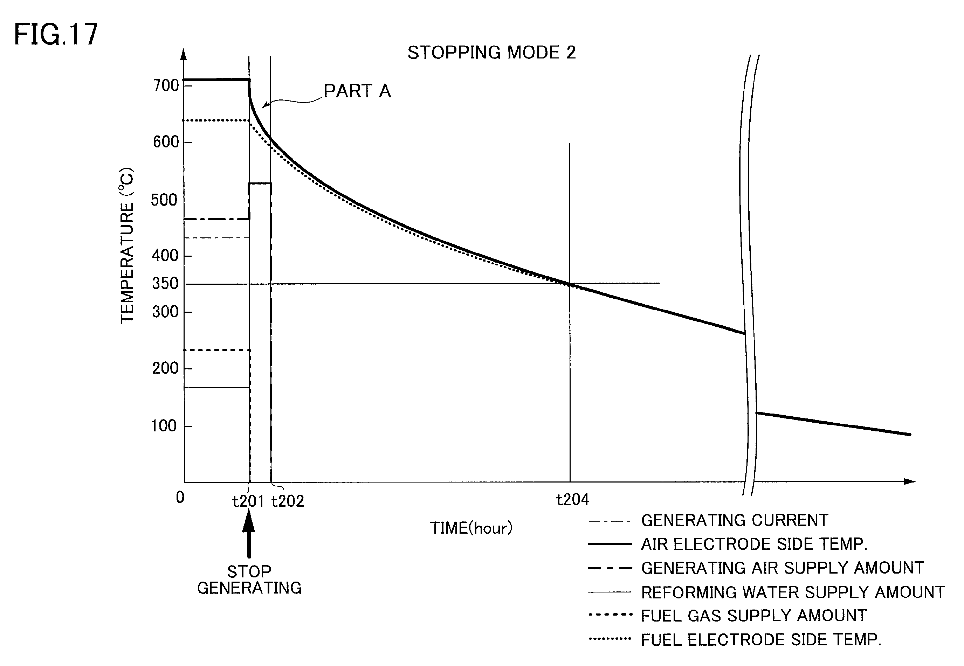

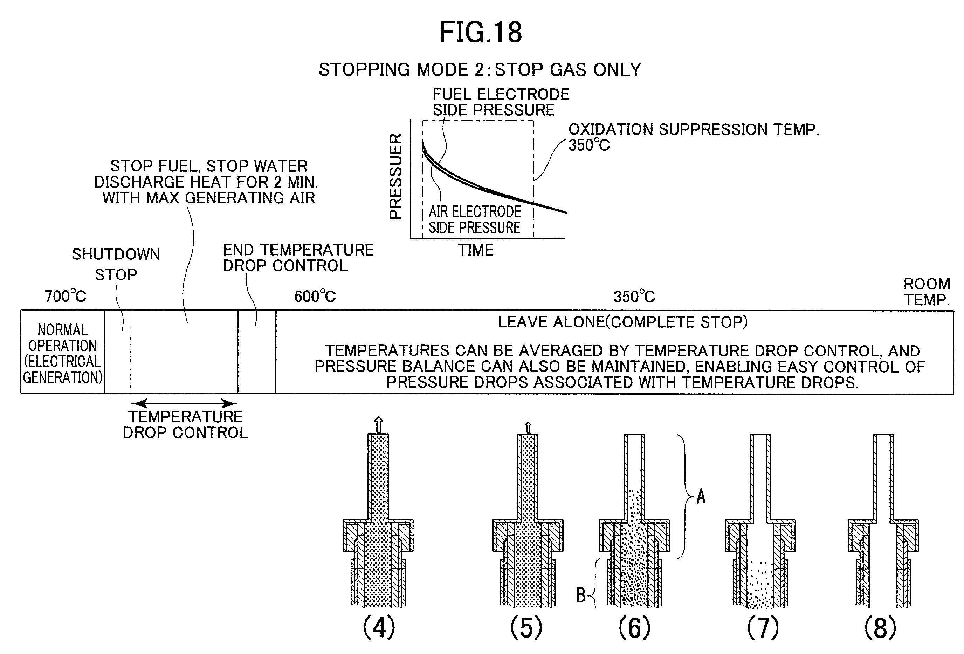

0168 Next, referring to Figs. 17 and 18, we explain stopping mode 2.

Fig. 17 is a timing chart schematically showing in a time line an example of the stopping behavior when stopping mode 1 (step S4 in Fig. 14) is executed in a solid oxide fuel cell 1 according to an embodiment of the invention. Fig. 18 is a diagram explaining on a time line the control, temperature, pressure, and state of the front end portion of the individual fuel cell units inside the fuel cell module when stop mode 2 is executed.

0169 First stopping mode 2 is a stopping mode executed when only the supply of fuel gas is to be stopped. At time t201 in Fig. 17, performing a shutdown results in stopping the supply of fuel by fuel flow regulator unit 38 and the supply of water by water flow volume regulator unit 28 in a short time period. The extraction of power from fuel cell module 2 by inverter 54 is also stopped (output current = 0). When stopping mode 2 has been executed, the shutdown circuit 110a built into control section 110 executes a temperature reducing control immediately after shutdown at time t201, causing the generating air flow regulator unit 45 to operate at maximum output over a predetermined heat discharge time. Note that in the embodiment, the predetermined heat discharge time is approximately 2 minutes, during which water flow volume regulator unit 28 is stopped. Furthermore, at time t202 in Fig. 17, after generating air flow regulator unit 45 is stopped the system is left as is, as in stopping mode 1.

0170 When stopping by stopping mode 2, air is fed to the air electrode side of the individual fuel cell units 16 by a temperature reducing control after shutdown. Thus at part A in Fig. 17, the temperature on the air electrode side is more suddenly reduced than in the stopping mode 1 case (Fig. 15). As described above, after the supply of fuel is completely stopped, up until the temperature of fuel cell stack 14 drops to 400°C, there is a danger of oxidation and damage to fuel electrodes, therefore the supply of air was always stopped. However, the inventors discovered that generating air can be supplied safely over a predetermined time period even immediately after the supply of fuel is stopped.

0171 I.e., immediately after shutdown, sufficient fuel gas remains on the fuel electrode side of each of the individual fuel cell units 16, and since it is being jetted out from the top end of each of the individual fuel cell units 16, there is no reverse flow of air to the fuel electrode side caused by feeding air to the air electrode side. I.e., in this state, feeding air under temperature reducing control causes the pressure on the air electrode side to rise, but the pressure on the fuel electrode side is still higher than the pressure on the air electrode side. The gas flowpath fine tubing 98 erected at the top end of each of the individual fuel cell units 16 is a constricting flowpath with a narrowed flowpath cross sectional area, by which the flow speed of fuel gas flowing out of each of the individual fuel cell units 16 is increased. Therefore gas flowpath fine tubing 98, which is erected at the top end, functions as an accelerating section for increasing the flow speed of fuel gas. Moreover, after the supply of air at time t202 is stopped, the system is left as is as in stopping mode 1, and the pressure on the fuel electrode side is maintained by a mechanical pressure retaining means for a predetermined time at a higher level than the pressure on the air electrode side. However in stopping mode 2, because the high temperature air and fuel gas accumulating inside fuel cell module 2 is discharged by the temperature reducing control, a natural release is started from a temperature lower than in stopping mode 1. Therefore the risk is reduced that a reverse flow of air will occur before the fuel electrode temperature falls to 350°C. Thus after a shutdown the pressure reduction on the fuel electrode side is more gradual than the drop in pressure on the air electrode. Since the temperature inside the fuel cell module 2 is averaged by temperature reduction control, the risk is reduced that fuel gas on the inside of individual fuel cell units 16 will suddenly shrink and air be drawn in on the fuel electrode side.

0172 Furthermore, after a shutdown air is fed to the air electrode side under the temperature reduction control, therefore the flame at the top end of gas flowpath fine tubing 98 is more quickly extinguished, and consumption of remaining fuel is suppressed. Immediately after shutdown, a large amount of fuel gas jetted from individual fuel cell units 16 flows out on the air electrode side of individual fuel cell units 16 without being combusted. In stopping mode 2, air is fed in to the air electrode side and jetted fuel gas is discharged together with air after shutdown, so the risk of fuel gas flowing off the fuel electrodes, contacting the air electrodes, and causing partial reduction of the air electrodes is avoided.

0173 Fig. 18 explains the operation of stopping mode 2; the upper portion is a graph schematically depicting pressure changes on the fuel electrode side and the air electrode side; the middle portion shows the control operation by control section 110 and the temperature inside fuel cell module 2 as a time line; and the bottom portion shows the state of the top end portion of individual fuel cell units 16 at each point in time.

0174 First, in the middle portion of the Fig. 18, an electrical generation operation is being carried out before the shutdown, and a temperature reduction control is executed after the shutdown. After a temperature reduction control of approximately 2 minutes, generating air flow regulator unit 45 is stopped, after which the system is left as is as in stopping mode 1. However in stopping mode 2, at the starting point of leaving the system as is (time t202 in Fig. 17) the temperature inside fuel cell module 2, and the pressures on the fuel electrode side and the air electrode side, are reduced more than in stopping mode 1. The risk of air penetrating to the fuel electrode side before the fuel electrode temperature drops to 350°C is thereby further reduced.

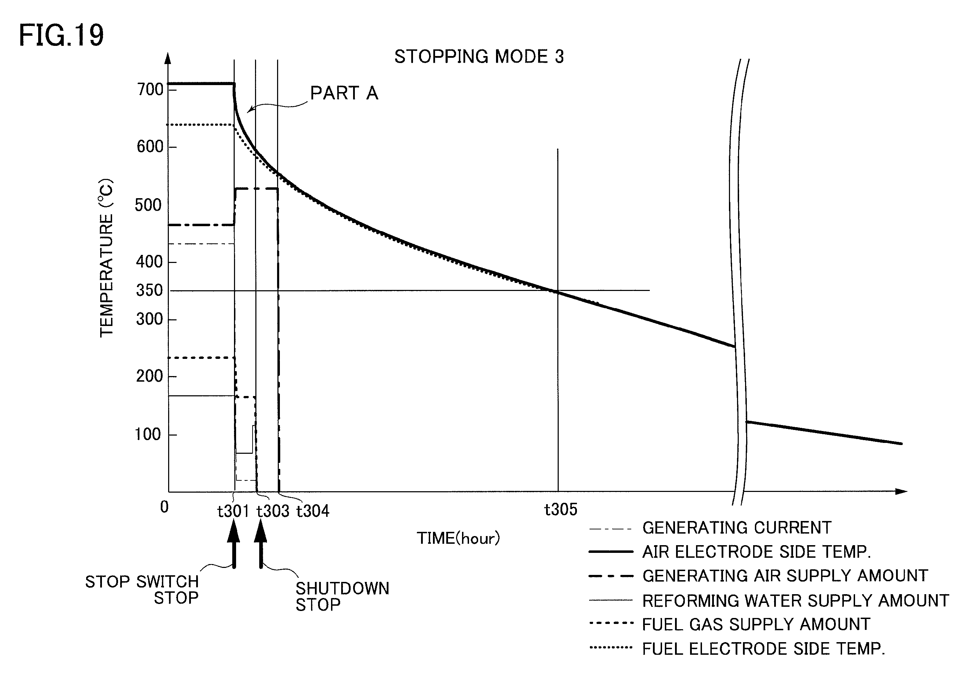

0175 Next, referring to Figs. 19 through 23, we explain stopping mode 3.

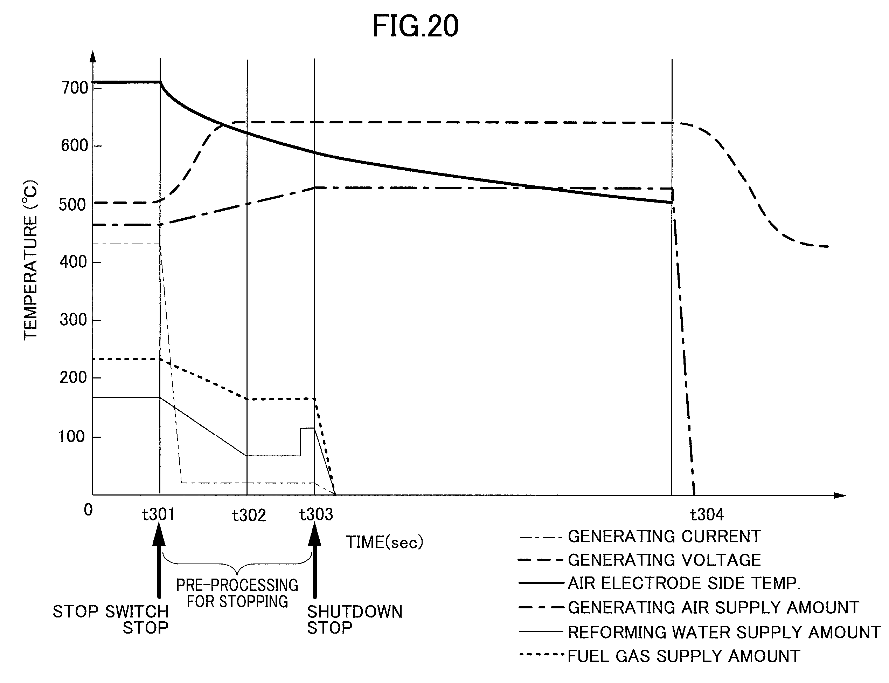

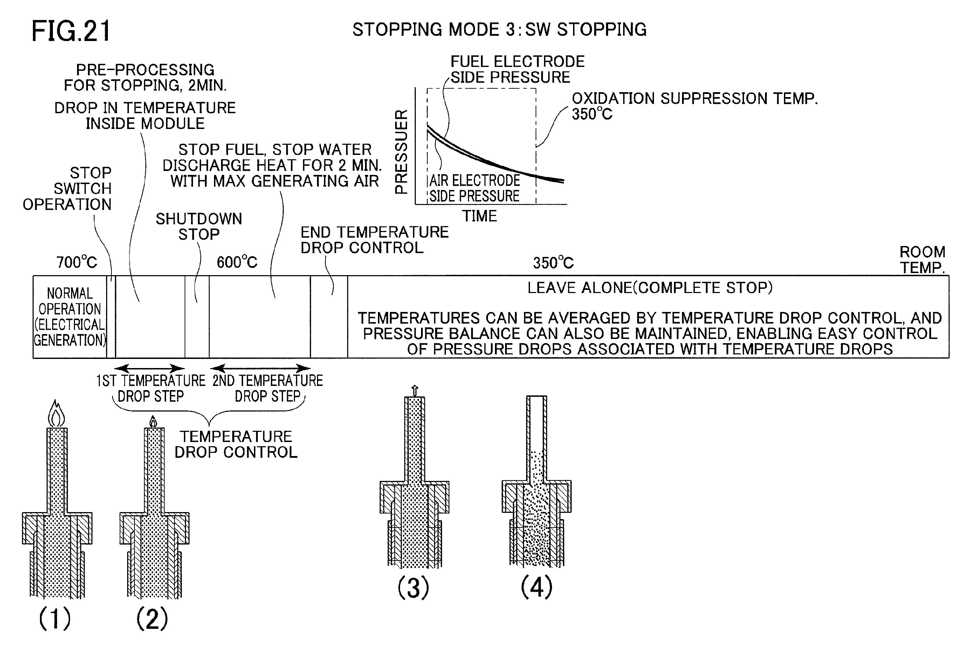

Fig. 19 is a timing chart schematically showing in a time line one example of the stopping behavior when stopping mode 3 (step S6 in Fig. 14) is executed in a solid oxide fuel cell 1 according to an embodiment of the invention. Fig. 20 is a timing chart showing an expanded view immediately after shutdown. Fig. 21 is a diagram for explaining in a time line form the control, temperature inside the fuel cell module, pressure, and state of the tip portion of the individual fuel cell units when stopping mode 3 is executed.

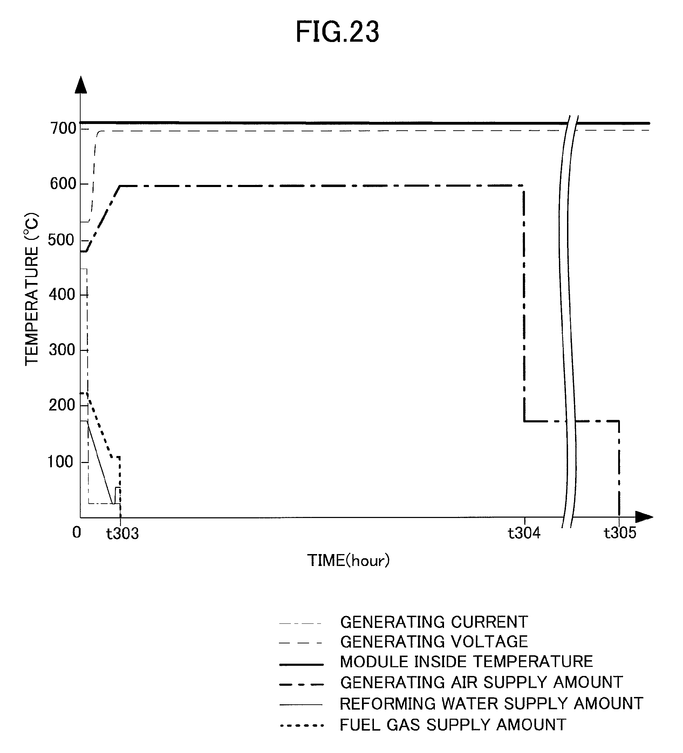

Fig. 23 is a timing chart showing a variant of stopping mode 3.

0176 First, stopping mode 3 is the stopping mode executed when a stop switch is operated by a user. As shown in Figs. 19 and 20, a temperature reduction control is executed during stopping mode 3 as well, but the temperature reduction control in stopping mode 3 comprises a first temperature reduction step prior to the complete stopping of power extraction from fuel cell stack 14, and a second stopping mode after power extraction is stopped. The second stopping mode is the same as the temperature reduction control in stopping mode 2, and the first temperature reduction step is executed as pre-processing for stopping before power extraction is stopped.

0177 In the example shown in Fig. 20, a stop switch is operated by a user at time t301, and pre-processing for stopping, which is the first temperature reduction step, is started. In pre-processing for stopping, the output to inverter 54 by fuel cell module 2 is first stopped. This results in a sudden drop in the current and power extracted from fuel cell module 2, as shown by the light single dot and dash line in Fig. 20. Note that in pre-processing for stopping, the output of current to inverter 54 from fuel cell module 2 is stopped, but extraction of a certain level of weak current (approximately 1 A) for operating the solid oxide fuel cell 1 auxiliary unit 4 is continued for a predetermined time. Therefore even after the generated current has greatly decreased at time t301, a weak current is extracted from fuel cell module 2 during the pre-processing for stopping. As shown by the broken line in Fig. 20, the output voltage on fuel cell module 2 rises with the drop in extracted current. Thus in pre-processing for stopping, the amount of power extracted is restricted and electrical generation at a predetermined power is continued while a weak current is extracted, therefore since a part of supplied fuel is used for electrical generation, inordinate increases in the remaining fuel unused for electrical generation are avoided, and the temperature inside fuel cell module 2 is reduced.

0178 Moreover, in pre-processing for stopping, after time t301 the fuel supply amounts shown by the dotted line and the reforming water supply amounts shown by the fine solid line in Fig. 20 are linearly reduced. On the other hand, the amount of generating air supplied, as shown by the thick dot and dash line, are linearly increased. Therefore during pre-processing for stopping, more air is supplied than the amount corresponding to the power extracted from fuel cell module 2. Thus by increasing the air supply amount, the removal of heat from reformer 20 and a rise in temperature within fuel cell module 2 are suppressed. Continuing, at time t302 approximately 20 seconds after time t301 in the example shown in Fig. 20, the fuel supply amount and water supply amount are reduced to supply amounts corresponding to the weak current extracted from fuel cell module 2; thereafter a reduced supply amount is maintained. Thus reducing the fuel supply amount and water supply amount as pre-processing for stopping enables the prevention of gas current turbulence within fuel cell module 2 caused by sudden stopping of large flow volumes of fuel when the fuel supply is fully stopped, as well as preventing the remainder of large quantities of fuel in reformer 20 and manifold 66 after complete stopping of the fuel supply. Note that after time t301, by reducing the fuel supply amount and increasing the air supply amount, the temperature of the air on the air electrode side inside fuel cell module 2, shown by the heavy solid line in Fig. 20, is reduced. However, a large amount of heat is still accumulated in the thermal insulation 7, etc. surrounding fuel cell module 2. Also, while the current output to inverter 54 is stopped in pre-processing for stopping, the supply of fuel and water are continued, therefore even if the supply of generating air is continued, no reverse flow of air to the fuel electrode side within each of the individual fuel cell units 16 occurs. Therefore the supply of air can be safely continued.

0179 In the example shown in Fig. 20, from time t301 at which pre-processing for stopping is started, until time t303 approximately 2 minutes later, the fuel supply amount and reforming water supply amount are brought to zero, and current extracted from fuel cell module 2 is also brought to zero and shut down. Note that in the Fig. 20 example at time t303, immediately before the current extracted from fuel cell module 2 is brought to zero the water supply amount is increased slightly. This increase in the water supply amount adjusts the water amount so that an appropriate amount of water remains in vaporizing section 20a. This control of the water supply amount is discussed below.

0180 In the example shown in Fig. 20, the supply of generating air is continued (although electrical generation is completely stopped) as a second temperature reduction step in the temperature reduction control, even after shutdown. By so doing, the air in fuel cell module 2 (on the air electrode side of fuel cell stack 14), the remaining fuel combustion gas, and the fuel from the fuel electrode side of fuel cell stack 14 after shutdown are discharged, therefore the second temperature reduction step functions as an exhaust step. In the embodiment, after the supply of fuel has been completely stopped at time t303 the supply of a large volume of generating air is continued for a predetermined time until time t304. The amount of generating air supplied is increased up to the maximum air supply amount during pre-processing for stopping, after which it is maintained at the maximum value.

0181 As shown in Fig. 19, after the supply of generating air is stopped at time t304, the system is left as is as in stopping mode 1. However, in stopping mode 3 a first temperature reduction step is executed before shutting down, and a second temperature reduction step is executed after shutdown, therefore the temperature reduction in part A of Fig. 19 is greater than in stopping modes 1 and 2, and the leaving as is started from a lower temperature and lower pressure state.

0182 Fig. 21 explains the operation of stopping mode 3; the upper portion is a graph schematically depicting pressure changes on the fuel electrode side and the air electrode side; the middle portion shows the control operation by control section 110 and the temperature inside fuel cell module 2 as a time line; and the bottom portion shows the state of the top end portion of individual fuel cell units 16 at each point in time.

0183 First, before the stop switch is operated in the middle portion of Fig. 21, a generating operation is being performed, and after the stop switch is operated, the pre-processing for stopping step is executed, which is the first temperature reduction step. In the pre-processing for stopping step the amount of fuel gas supplied is reduced, therefore as shown in the lower portion (1) of Fig. 21, the flame at the top end of each of the individual fuel cell units 16 is reduced in size, as shown in the lower portion (2) of the figure. Since the fuel gas supply amount and the amount of electricity generated are thus reduced, the temperature inside fuel cell module 2 is reduced more than during the electrical generation operation. After an approximately 2 minute pre-processing for stopping step, a shutdown is performed. After shutdown, generating air is supplied for 2 minutes by generating air flow regulator unit 45 as a second temperature reduction step. After a second temperature reduction step, generating air flow regulator unit 45 is stopped, after which the system is left as is in the same as in stopping mode 1.

0184 As described above, at the point in time of shutdown, the pressure on the fuel electrode side of each of the individual fuel cell units 16 is higher than the pressure on the air electrode side, therefore fuel gas on the fuel electrode side jets out from the top end of each of the individual fuel cell units 16 even after the fuel supply is stopped. Note that the flame resulting from the combustion of fuel gas is extinguished at the time of shutdown. After shutdown, fuel gas jetted from the top end of each individual fuel cell unit 16 is greatest in quantity immediately after shutdown, then declines gradually. This large amount of fuel gas jetted immediately after shutdown is discharged to the outside of fuel cell module 2 by generating air supplied in the second temperature reduction step (exhaust step). Even after the exhaust step ends, fuel gas is jetted from the top ends of each individual fuel cell units 16, but the quantity of that fuel gas is relatively small.

0185 Therefore hydrogen, which is the fuel gas jetted at the end of the exhaust step, accumulates at the top portion inside fuel cell module 2 (above fuel cell stack 14), but jetted fuel gas makes no substantial contact with the air electrodes in each of the individual fuel cell units 16. Therefore fuel gas is reduced by contact with high temperature air electrodes, and there is no degradation of the air electrodes. In pre-processing for stopping prior to shutdown, an appropriate amount of water in a range of quantities is supplied so as to be held within vaporizing section 20a. Therefore in the exhaust step following shutdown, the pressure on the fuel electrode side of each of the individual fuel cell units 16 is increased by the vaporization of water in vaporizing section 20a, and an appropriate amount of fuel gas is jetted from the top end of each of the individual fuel cell units 16. Fuel gas jetted during the exhaust step is quickly exhausted from fuel cell module 2. Since an appropriate amount of fuel gas is jetted out in the exhaust step, it does not occur after the exhaust step that an excessive amount of fuel gas is jetted out from each of the individual fuel cell units 16, degrading the air electrodes.

0186 Here, in stopping mode 3, after the end of the exhaust step the temperature inside fuel cell module 2 and the pressures on the fuel electrode side and air electrode side at the point when the system is initially left as is (time t304 in Fig. 19) are reduced more than in stopping modes 1 and 2. Also, in stopping mode 3 the fuel gas supply amount and water supply amount prior to shutdown are fixed at a predetermined value by pre-processing for stopping. Thus the degree of variability is reduced in the pressure and temperature distribution at the point when the system is initially left as is, which is dependent on the operating state during the electrical generation operation, and leaving the system as is always started from an appropriate state. Therefore the risk of air invading the fuel electrode side before the fuel electrode temperature drops to 350°C is extremely low.

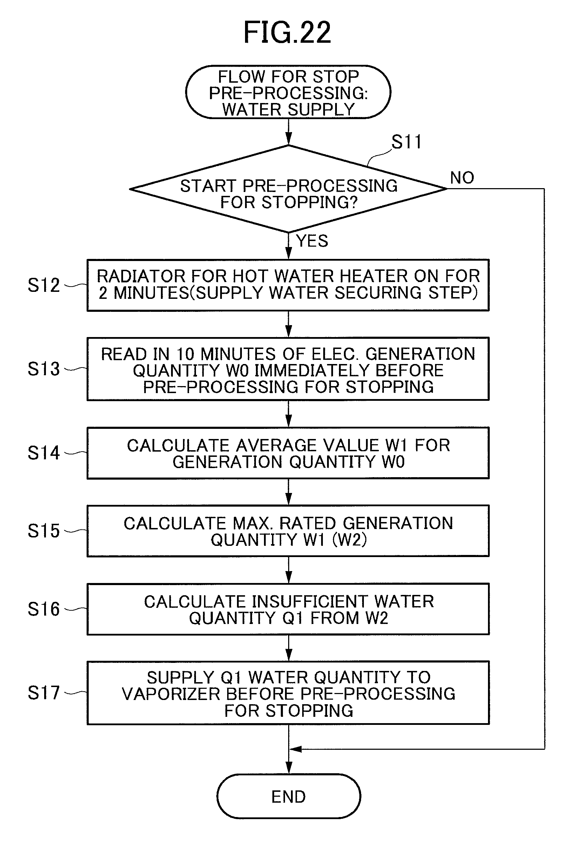

0187 Next, referring to Fig. 22, we explain the supply of water in pre-processing for stopping.

Fig. 22 is a flow chart of the supply of water in the pre-processing for stopping; during the operation of solid oxide fuel cell 1, this is repeatedly executed at a predetermined time interval by shutdown circuit 110a. First, at step S11 in Fig. 22, a judgment is made as to whether pre-processing for stopping has started. If pre-processing for stopping has started, the system advances to step S12; if it has not started, one iteration of the Fig. 22 flow chart is completed.

0188 Next, at step S12, a hot water radiator (not shown) built into hot water production device 50 (Fig. 1) is operated for 2 minutes as a water supply securing step. This hot water radiator heats water by performing a heat exchange with high temperature exhaust gas from fuel cell module 2, recovering discharged heat in the exhaust gas. At the same time, there is steam contained in the exhaust gas, and a heat exchange is carried out between this steam and the hot water radiator, wherein the steam becomes water and condenses. By activating the hot water radiator, the amount of cooling of exhaust gas increases, and the amount of condensed water increases. The increased condensed water is recovered and stored in a pure water tank 26 (Fig. 1). Water recovered in this pure water tank 26 is utilized as water for steam reforming after filtering (not shown), etc. Water produced by this processing in step S12 is utilized to supply water during pre-processing for stopping, and for the pressure retaining control executed in stopping mode 4, described below. Note that while the amount of water used during pre-processing for stopping and pressure retaining control is slight, high temperature exhaust gas containing large amounts of steam is suddenly cooled by the hot water radiator (not shown), therefore required water can be sufficiently secured in 2 minutes during pre-processing for stopping.

0189 Next, in step S13, time line data W0 for the quantity of electrical generation during the 10 minutes immediately prior to time t301 in Fig. 20, when pre-processing for stopping is begun, is read into control section 110. In addition, at step S14 an average value W1 for the read-in electrical generation time line data W0 is calculated. Next, at step S15, a difference W2 is calculated between the solid oxide fuel cell 1 maximum rated generating quantity and average value WI. At step S16 a deficient water quantity Q1 is also calculated based on difference W2. Finally, in step S17, the calculated deficient water quantity Q1 is supplied before the end of pre-processing for stopping (immediately before time t303 in Fig. 20), and one iteration of the flow chart in Fig. 22 is completed.

0190 As a result of supplying this deficient water quantity Q1, approximately the same quantity of reforming water is held in vaporizing section 20a as when a shutdown is performed following continuous operation at the maximum rated generating quantity. Vaporization of this water in the exhaust step following shutdown (time t303-t304 in Fig. 20) increases the pressure on the fuel electrode side of each of the individual fuel cell units 16 such that an appropriate amount of fuel gas is jetted from the top end of each of the individual fuel cell units 16.

0191 Next, referring to Fig. 23, we explain a variant example of stopping mode 3.

In the variant example shown in Fig. 23, the way in which generating air is supplied in the second temperature reduction step is different from Fig. 20. As shown in Fig. 23, in the variant example generating air is supplied at the maximum quantity until time t304 after a shutdown is performed at time t303. At time t304, the amount of generating air supplied is reduced in stages, and the reduced supply amount is continued until time t305. The interval between time t303 and t304 is preferably set at approximately 2 to 5 minutes, and the interval between time t304 and t305 is set at approximately 2 to 20 minutes.

0192 In this variant example, high temperature air at the air electrode side is quickly discharged by supplying a large quantity of generating air with the pressure on the fuel electrode side in a high state immediately after shutdown. At the same time, when a certain amount of time has elapsed since shutdown and pressure on the fuel electrode has dropped, reducing the supply amount of generating air results in the discharge of high temperature air while avoiding the risk of reverse flow.

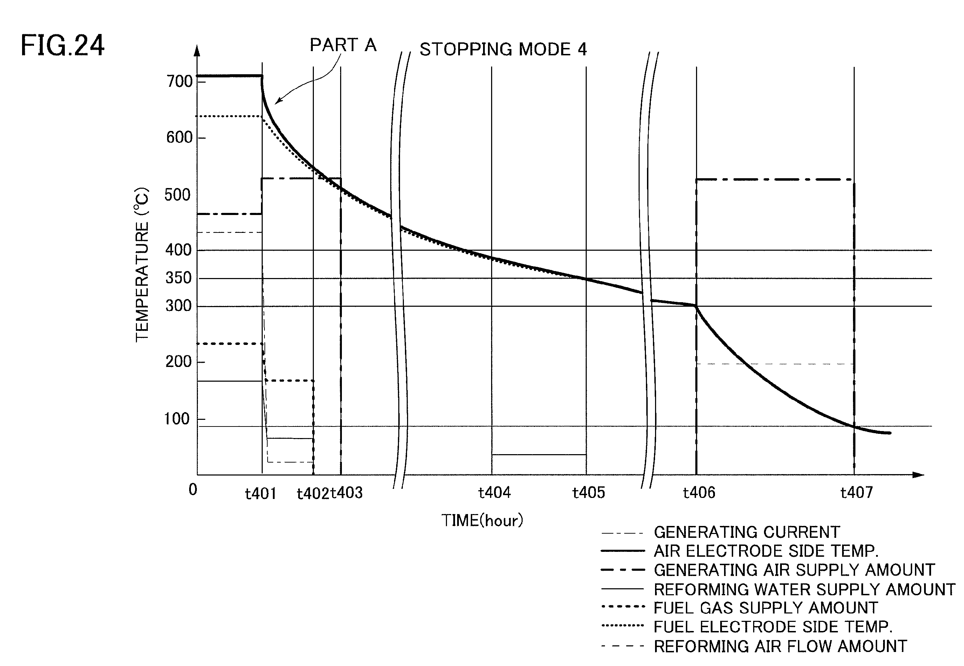

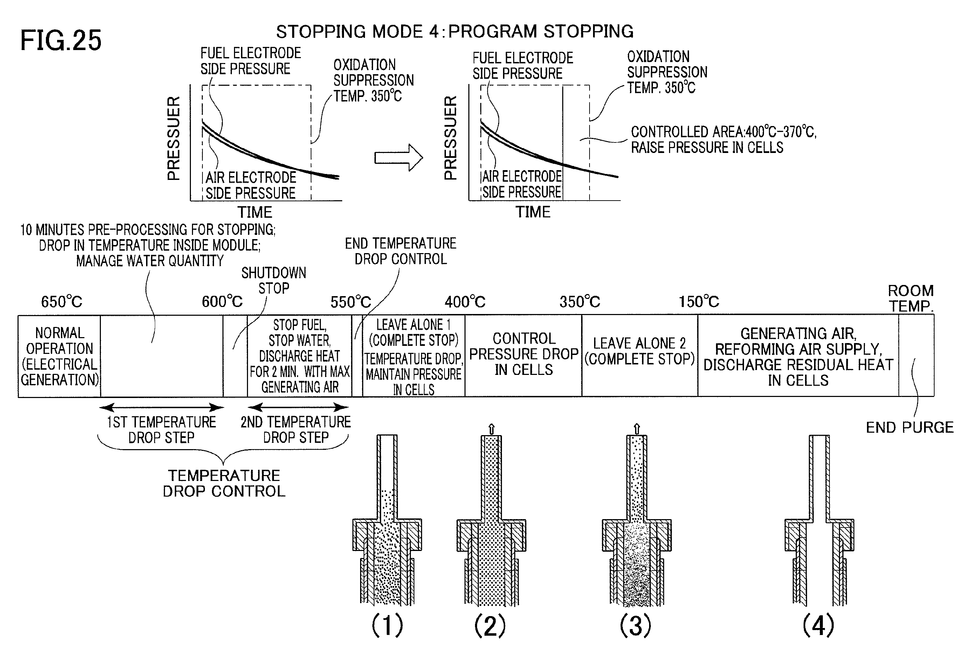

0193 Next, referring to Figs. 24 and 25, we explain stopping mode 4.

Fig. 24 is a timing chart schematically showing in a time line one example of the stopping behavior when stopping mode 4 (step S8 in Fig. 14) is executed in a solid oxide fuel cell 1 according to an embodiment of the invention. Fig. 25 is a diagram explaining in a time line form the control, temperature inside the fuel cell module, pressure, and state of the tip portion of the individual fuel cell units when stopping mode 4 is executed.

0194 First, stopping mode 4, as described above, is a stoppage executed approximately once per month to accommodate a microprocessor meter (not shown); of the stopping modes, it is executed most often. Therefore when executing stopping mode 4 it is necessary to more reliably prevent oxidation of fuel electrodes, since even a slight negative effect such as oxidation of the fuel electrodes on individual fuel cell units 16 imparts a large effect on the durability of fuel cell stack 14. Stopping using stopping mode 4 is executed periodically based on a program built into shutdown circuit 110a.

0195 First, at time t401 in Fig. 24, a predetermined time before the shutdown time planned by the program in shutdown circuit 110a, the shutdown circuit 110a executes a temperature reduction control. As in stopping mode 3, in stopping mode 4 the temperature reduction control is executed by a first temperature reduction step and a second temperature reduction step.

I.e., in pre-processing for stopping, which is the first temperature reduction step, the output of generated power to inverter 54 by fuel cell module 2 is first stopped, and only the extraction of a weak current (appropriate 1A) for operating solid oxide fuel cell 1 auxiliary unit 4 is continued. Also, in pre-processing for stopping, as noted above, the pre-processing for stopping the water supply flow, shown in Fig. 22, is also executed.

0196 Moreover, in pre-processing for stopping, after time t401 the fuel supply amounts shown by the heavy dotted line and the reforming water supply amounts shown by the fine solid line in Fig. 24 are linearly reduced. On the other hand the amount of generating air supplied, as shown by the thick dot and dash line, is increased. In stopping mode 4, the first temperature reduction step continues for 10 minutes, a longer period than stopping mode 3, after time t401.

0197 When 10 minutes have elapsed after time t401, shutdown circuit 110a executes a shutdown. When a shutdown is carried out, the supply of fuel by fuel flow regulator unit 38 and supply of water by water flow volume regulator unit 28 are stopped in a short period of time. Extraction of power from fuel cell module 2 by inverter 54 is also stopped (power/current = 0).

0198 Shutdown circuit 110a executes the second temperature reduction step of the temperature reduction controls after shutdown at time t402, and generating air flow regulator unit 45 is operated at maximum output for approximately 2 minutes. In addition, at time t403 in Fig. 24, as in stopping mode 1, the system is left as is after generating air flow regulator unit 45 is stopped.

0199 Furthermore, in stopping mode 4, after shutdown at time t404 when approximately 5 minutes have elapsed and the temperature inside fuel cell module 2 has fallen to a predetermined temperature, shutdown circuit 110a operates pressure retaining control circuit 110b (Fig. 7). In this embodiment, when the temperature inside fuel cell module 2 drops to the predetermined temperature of 400°C, the pressure on the fuel electrode side of individual fuel cell units 16 also falls, approaching the pressure on the air electrode side.

Pressure retaining control circuit 110b sends a signal to water flow volume regulator unit 28, activating it. The activation of water flow volume regulator unit 28 results in water being supplied to reformer 20 vaporizing section 20a. The interior of fuel cell module 2 is still at a temperature of approximately 400°C even at time t404 when approximately 5 hours have elapsed after shutdown, so water supplied to vaporizing section 20a is vaporized there. Note that in this embodiment, water is supplied intermittently, and the water supply amount is set at approximately 1 mL per minute; this water supply amount value is less than the minimum water supply amount in the electrical generation operation.

0200 By the vaporization and expansion of water in vaporizing section 20a, pressure is raised inside the fuel gas passage from reformer 20 through fuel gas supply pipe 64 and manifold 66 (Fig. 2) up to the individual fuel cell units 16. Thus pressure drops on the fuel electrode side of individual fuel cell units 16 are suppressed, and the reverse flow of air to the fuel electrode side is more reliably prevented. Note that the flowpaths for vaporizing section 20a, reforming section 20b, and reforming section 20c in reformer 20 are all formed in a winding shape, therefore it is difficult for the effects of a pressure rise to be transferred downstream even if water suddenly vaporizes inside vaporizing section 20a. Sudden rises in pressure on the inside of each of the individual fuel cell units 16 (the fuel electrode side) caused by sudden vaporization, such that fuel gas accumulated therein is jetted out in large quantities over a short time period, can thus be prevented.

0201 Pressure fluctuation suppression flowpath resistance section 64c (Fig. 2), which is erected midway through fuel gas supply pipe 64, and gas flowpath fine tubing 98, which is an inflow-side flowpath resistance section erected at the bottom end of each of the individual fuel cell units 16, suppress sudden pressure rises on the fuel electrode side and cause fuel gas to stay for long time periods on the fuel electrode side.

0202 Pressure retaining control circuit 110b stops water flow volume regulator unit 28 at time t405 in Fig. 24 when the temperature inside fuel cell module 2 has dropped to the oxidation lower limit temperature (e.g., 350°C), and thereafter fuel cell module 2 is left as is.

0203 Furthermore, shutdown circuit 110a sends a signal to reforming air flow regulator unit 44 and generating air flow regulator unit 45 at time t406 when the temperature inside fuel cell module 2 has dropped to a temperature of 300°C or below, activating those units. By this means the fuel gas passages such as reformer 20, fuel gas supply pipe 64, and manifold 66, and the internal fuel electrodes in each of the individual fuel cell units 16, are air purged. The air electrode side inside generating chamber 10, the exhaust passage 21 b, and the inside of exhaust gas passages such as those in air-heat exchanger 22 are also air purged. By purging fuel gas passages and fuel electrodes, steam which had been held within these locations is condensed and oxidation by condensate water on the fuel gas passages and fuel electrodes is prevented. By purging the inside of exhaust gas passages, condensation within exhaust gas passages of steam discharged from the fuel electrodes is prevented. Also, by purging the air electrode side within generating chamber 10, reduction by discharged fuel gas from the fuel electrode side is prevented.

0204 Fig. 25 explains the operation of stopping mode 4; the upper portion is a graph schematically depicting pressure changes on the fuel electrode side and the air electrode side; the middle portion shows the control operation by control section 110 and the temperature inside fuel cell module 2 as a time line, and the bottom portion shows the state of the top end portion of individual fuel cell units 16 at each point in time.

0205 First, electrical generation is occurring before shutdown in the middle portion of Fig. 25, and at 10 minutes before the shutdown time planned in the program, a first temperature reduction step under temperature reduction control is executed. In stopping mode 4, because first temperature reduction step is executed for approximately 10 minutes, the temperature inside fuel cell module 2 at the time of shutdown, as well as the pressure on the fuel electrode side and the air electrode side, are reduced by more than in stopping mode 3. After shutdown, generating air is supplied for approximately 2 minutes as the second temperature reduction step of the temperature reduction control, and generating air flow regulator unit 45 is stopped. After generating air flow regulator unit 45 is stopped, the system is left as is, as in stopping mode 3. Here, in stopping mode 4, the temperature inside fuel cell module 2 at the starting point of leaving the system alone (time t403 in Fig. 24) and the pressures on the fuel electrode side and the air electrode side are reduced even more than in stopping mode 3. The risk of air penetrating to the fuel electrode side before the fuel electrode temperature drops to 350°C is thereby further reduced.

0206 In addition, in stopping mode 4, at the point in time when the pressure on the fuel electrode side of each of the individual fuel cell units 16 has approached the air electrode pressure by being left as is, pressure retaining control circuit 110b is activated and the pressure on the fuel electrodes in each of the individual fuel cell units 16 is increased. Under pressure retaining control, reformed fuel gas which had been sitting in manifold 66 or fuel gas supply pipe 64 (Fig. 2), etc. is first fed a little at a time to the fuel electrodes in each of the individual fuel cell units 16, then the unreformed fuel gas which had remained inside reformer 20 is fed a little at a time to the fuel electrodes. Furthermore, after all the unreformed fuel gas is fed in, the steam vaporized in vaporizing section 20a is fed a little at a time in to fuel electrodes in each of the individual fuel cell units 16. At the point when pressure retaining control circuit 110b is activated, the temperature at the fuel electrodes in each of the individual fuel cell units 16 has fallen to around 400°C, therefore that effect is small even if a reverse flow of air to the fuel electrode side occurs. However the programmed stop which executes stopping mode 4 is the stopping mode executed most often, so the risk of fuel electrode oxidation is even further reduced, and the effects on oxidation of each individual fuel cell units 16 are reduced to a minimum.

0207 As indicated on the left side of the upper portion of Fig. 25, in stopping modes 1 through 3 the pressure on the fuel electrode side of each of the individual fuel cell units 16 drops after shutdown, and when the fuel electrode temperature drops down to the 400°C area, it is close to the pressure on the air electrode side. In response, in stopping mode 4, as shown on the right side of the upper portion of Fig. 25, pressure retaining control by pressure retaining control circuit 110b is executed in the region where pressure at the fuel electrode side and pressure at the air electrode side approach one another, and a drop in pressure on the fuel electrode side below that on the air electrode side is thereby more reliably prevented.

0208 As shown in the bottom portion of Fig. 25, when the system is left as is after completion of the second temperature reduction step ("left as is 1" in the middle portion of Fig. 25), the fuel gas which had been accumulating at the fuel electrodes in each of the individual fuel cell units 16 flows out a little at a time, and at the end of that time the air on the air electrode side can begin to diffuse to the fuel electrode side (bottom portion (1) in Fig. 25). However when the fuel electrode temperature later falls to 400°C and pressure retaining control is started, the pressure of the steam produced inside vaporizing section 20a causes fuel gas sitting inside the fuel gas passages on the downstream side of reformer 20 to again move into each of the individual fuel cell units 16, so that the concentration of fuel gas inside the fuel electrode again rises (lower portion (2) of Fig. 25). Later, as well, steam is produced within vaporizing section 20a under pressure retaining control, so the outflowing portion of fuel gas from the fuel electrodes in each of the individual fuel cell units 16 is compensated by the fuel gas which had been accumulating in the fuel gas passage, and reverse flow of air to the fuel electrode is prevented. Also, in the pressure retaining control winter period, as shown in the bottom portion (3) of Fig. 25, even if accumulated fuel gas has almost completely flowed out, steam produced under the pressure retaining control fills in the fuel electrodes in each of the individual fuel cell units 16, so a reverse flow of air to the fuel electrodes can be reliably prevented.

0209 Furthermore, after the completion of pressure retaining control in which the temperature of the fuel electrodes goes below 350°C, the system is left as is ("left as is 2" in the middle portion of Fig. 25), following which reforming air and generating air are supplied (reforming and electrical generation are performed), and a purge is executed when the temperature of the fuel electrode falls to 150°C.

Thus the fuel gas and steam which had remained on the fuel electrode side of each of the individual fuel cell units 16 are discharged, and the fuel gas remaining on the air electrode side in generating chamber 10 is also discharged from fuel cell module 2. Thus in the most frequently executed stopping mode 4, oxidation of the fuel electrodes in each of the individual fuel cell units 16 is reliably avoided.

0210 Using solid oxide fuel cell 1 of the embodiment, reverse flow of air from air electrodes to fuel electrodes can be prevented by provision of a mechanical pressure retaining means and a pressure retaining control. In the embodiment, the fuel passage passes from fuel flow regulator unit 38 through reformer 20 and the fuel electrodes of each of the individual fuel cell units 16, up to the exterior air electrode side. The exhaust gas passage is arranged to travel from the air electrode side within fuel cell module 2 to the atmosphere on the outside of fuel cell module 2. As a mechanical pressure retaining means we have succeeded, by appropriately balancing the flowpath resistance of each part of the fuel/exhaust gas passage, in maintaining pressure on the air electrode side above atmospheric pressure after shutdown (time t101 in Fig. 15; time t201 in Fig. 17; time t303 in Fig. 19; time t402 in Fig. 24) until falling to 350°C (time t102 in Fig. 15; time t204 in Fig. 17; time t305 in Fig. 19; time t404 in Fig. 24), and in maintaining pressure on the fuel electrode side above that on the air electrode side (Fig. 16, top portion; Fig. 18, top portion; Fig. 21, top portion; Fig. 25, top portion).

0211 The risk of oxidizing fuel electrodes is sufficiently reduced by a mechanical pressure retaining means, but it is difficult to maintain the pressure on the fuel electrode side to a temperature at which no oxidation whatever of fuel electrodes occurs (the oxidation lower limit temperature) using only this mechanical means. Shutdown circuit 110a therefore executes a pressure retaining control for raising the pressure on the fuel electrode side (times t404-t405 in Fig. 24) after the fuel electrode temperature has dropped to 400°C. In the pressure retaining control, because execution occurs after the fuel electrode temperature has dropped to 400°C, the pressure drops greatly on both the fuel electrode side and the air electrode side, and it is sufficient to compensate the fuel electrode side pressure only slightly. Also, because pressure retaining control is executed with the risk of oxidation sufficiently reduced, oxidation of the fuel electrodes can be reliably prevented without performing precise controls.

0212 In a solid oxide fuel cell 1 of the embodiment, after stopping the supply of fuel and electrical generation, fuel electrode side pressure is reduced using a mechanical pressure retaining means while maintaining a pressure higher than the pressure on the air electrode side, and even when the fuel electrode temperature drops to 350°C, a higher pressure than atmospheric pressure is maintained. Therefore until dropping to 350°C, the reverse flow of air to the air electrode side can be prevented by a mechanical pressure retaining means.

0213 Also, with the solid oxide fuel cell 1 of the embodiment, by appropriately setting the flowpath resistance of gas flowpath fine tubing 98 (Figs. 4 and 5) at the top end of individual fuel cell units 16, a balance can be achieved between the fuel electrode side and air electrode side flowpath resistance, and the air electrode side and outside air flowpath resistance, making the drop in pressure on the fuel electrode side more gradual than on the air electrode side, so that reverse flow of air can be prevented.

0214 There are cases when pressure suddenly rises within reformer 20 due to vaporization, etc. of residual water even after shutdown. In the solid oxide fuel cell 1 of the embodiment, an inflow-side flowpath resistance section (gas flowpath fine tubing 98 (Figs. 4 and 5) is provided on the inflow side of the fuel electrode as well, therefore fuel which had remained on the fuel electrode side can be prevented from suddenly flowing out to the air electrode side by a sudden rise in pressure in reformer 20, etc. This enables the pressure drop on the fuel electrode side to be made gradual, so a reverse flow of air can be prevented.

0215 Furthermore, in general fuel electrode temperature drops are more gradual at lower temperatures. Therefore after dropping to 400°C, at which the risk of fuel electrode oxidation is reduced, a long time period is required until dropping to 350°C, and still more until dropping to the oxidation lower limit temperature. Therefore if unpredicted external disturbances such as changes in air pressure outside design values are anticipated over the long time period during which the temperature is dropping, it is difficult from a design standpoint to assure that under all circumstances a given pressure will be held until dropping to the oxidation lower limit temperature using a mechanical pressure retaining means. Using the solid oxide fuel cell 1 of the embodiment, pressure is held by the mechanical pressure retaining means until 350°C, which is higher than the oxidation lower limit temperature, such that the risk of oxidation can be sufficiently reduced by a not excessively demanding design.

0216 In the solid oxide fuel cell 1 of the embodiment, oxidation of the fuel electrode is positively prevented in the temperature region of 350°C or greater and 400°C or less (or 360°C or greater and 400°C or less). Thus breakage of fuel cell units by oxidation shrinkage of fuel electrodes in this temperature region is prevented. In particular, when the fuel electrode temperature is between 350°C and 400°C, partial shrinkage of fuel electrodes due to partial oxidation of fuel electrodes forming the electrical generation laminated section is prevented by maintaining the entire surface of the fuel electrode fuel gas flowpath side constituting the electrical generation laminated section in an oxygen-free atmosphere.

0217 Also, using the solid oxide fuel cell 1 of the embodiment, the water flow volume regulator unit 28 is stopped until the fuel electrode temperature drops to 400°C and pressure retaining control is started (time t404 in Fig. 15), therefore causes for destruction of the balance between pressures on the fuel electrode side and the air electrode side can be eliminated during pressure holding by the mechanical pressure retaining means. Thus the temperature and pressure can be reliably reduced per the mechanical design until dropping to 400°C.

0218 Immediately after a shutdown, pressure on the fuel electrode side is sufficiently higher than pressure on the air electrode side, and no reverse flow of air occurs even if the generating air flow regulator unit 45 is activated and the pressure on the air electrode side is raised. Using the solid oxide fuel cell 1 of the embodiment, high temperature air can be discharged immediately following a shutdown by activating generating air flow regulator unit 45 over a predetermined heat discharge time during which there is no risk of reverse flow (time t303-t304 in Fig. 19; time t402-t403 in Fig. 24). Thus pressure retention by a mechanical pressure retaining means can be started from a lower temperature state, and oxidation of fuel electrodes can be reliably prevented to 400°C.

0219 Also, using the solid oxide fuel cell 1 of the embodiment, the generated power is reduced and the air supply amount increased (time t301-t303 in Fig. 19; time t401-t402 in Fig. 24) immediately prior to stopping electrical generation, therefore the temperature on the fuel electrode side and air electrode side can be reduced with no risk of reverse flow of air. Thus pressure retention by a mechanical pressure retaining means can be started from a lower temperature state, and the initial state for starting pressure holding can be aligned with a predetermined state, so that oxidation of fuel electrodes can be more reliably prevented.

0220 Moreover, using the solid oxide fuel cell 1 of the embodiment, the supply of water is stopped until the fuel electrode temperature drops to 400°C after shutdown (time t404 in Fig. 24), therefore even after the fuel electrode temperature drops to 400°C, reformer 20 is maintained at a relatively high temperature. Water can therefore be vaporized in the reformer 20 and pressure drops on the fuel electrode side suppressed even after pressure retention by the mechanical pressure retaining means has terminated, so that oxidation of the fuel electrode can be reliably prevented.

0221 Also, using the solid oxide fuel cell 1 of the embodiment, small amounts of water are supplied during the generating operation under pressure retaining control (times t404-t405 in Fig. 24), therefore the amount of generated steam is small, and residual fuel on the fuel electrode side can be prevented from excessively flowing out to the air electrode side, and the fuel electrode side can be maintained in a fuel atmosphere over a long time period.

0222 Furthermore, using the solid oxide fuel cell 1 of the embodiment, water is intermittently supplied, therefore the amount of water supplied per unit time can be made extremely small. By supplying water intermittently, sudden pressure rises caused by vaporized steam are more likely, but because of the provision of pressure fluctuation suppression flowpath resistance section 64c (Fig. 2), the effects of pressure rises are not easily transferred to the fuel electrodes, and excessive outflow of fuel can be prevented.

0223 Also, using the solid oxide fuel cell 1 of the embodiment, after the fuel electrode has dropped to a temperature below the oxidation lower limit temperature (e.g., 300°C), fuel remaining on the fuel electrode side is discharged (times t406-t407 in Fig. 24), therefore residual fuel can be discharged without oxidation risk, and at the next startup excessive fuel can be prevented from remaining inside fuel cell module 2.

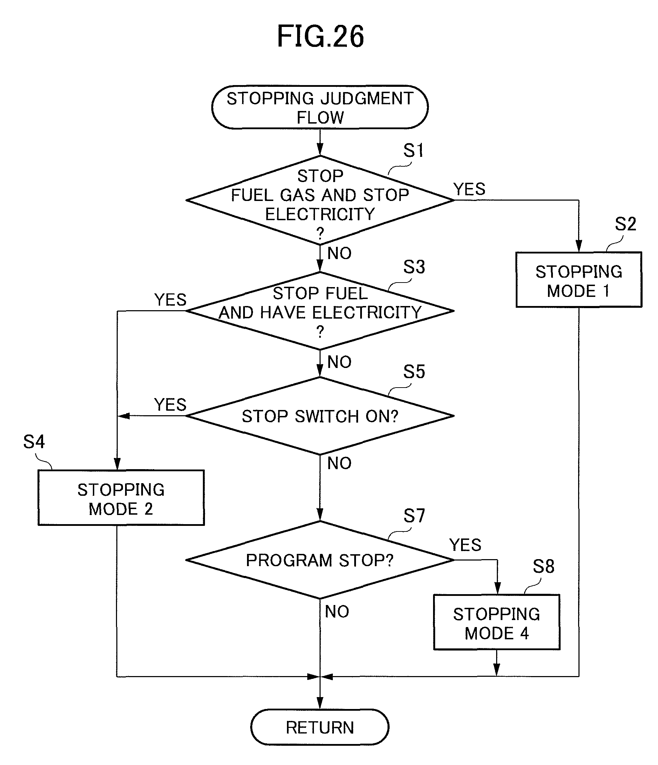

0224 Also, using the solid oxide fuel cell 1 of the embodiment, when a stop switch has been operated by a user (step S5 in Fig. 14), stopping mode 3 is executed, but as a variant example, stopping mode 2 may also be executed, as shown in Fig. 26. Fig. 26 is a flow chart for the stop decision to select a stopping mode in a fuel cell apparatus according to a variant example of the invention. I.e., in this variant example if the fuel gas is stopped and only electricity is being supplied (steps S3 → S4 in Fig. 26), and if a stop switch is operated by a user (steps S5 → S4 in Fig. 26), stopping mode 2 is executed. According to this variant example, if a stop switch is operated, a shutdown is executed without pre-processing for stopping (the first temperature reduction step), therefore controls pertaining to shutdown can be quickly completed after a user operates the stop switch.

### Explanation of Reference Numerals

0225
1: solid oxide fuel cell
2: fuel cell module
4: auxiliary unit
7: thermal insulation (heat storing material)
8: case
8a: connecting opening
8b: descending wall
10: generating chamber
12: fuel cell assembly
14: fuel cell stack
16: individual fuel cell units (solid oxide fuel cells)
16b: buffer portion
16c: electrical generating laminated section
18: combustion chamber (combustion section)
20: reformer
20a: vaporizing section (vaporization chamber)
20b: mixing section (pressure fluctuation absorption means)
20c: reforming section
20d: steam/mixing section divider
20e: divider opening
20f: mixing/reforming section divider (pressure fluctuation absorption means)
20g: connecting holes (small flowpath)
21: flow rectifier plate (section divider)
21 a: opening portion
21 b: exhaust passage
21 c: gas holding space
21 d: vertical wall
22: air-heat exchanger (heat exchanger)
23: vaporization chamber insulation (internal thermal insulation)
24: water supply source
26: pure water tank
28: water flow volume regulator unit (water supply apparatus)
30: fuel supply source
38: fuel flow regulator unit (fuel supply apparatus)
39: valve
40: air supply source
44: reforming air flow regulator unit (reform oxidant gas supply apparatus)
45: generating air flow regulator unit (generating oxidant gas supply apparatus)
46: first heater
48: second heater
50: hot water production device (heat exchanger for exhaust heat recovery)
52: control box
54: inverter
62: reformer-introducing pipe (water introducing pipe, preheating section, condensing section)
62a: T-pipe (condensing section)
63a: water supply pipes
63b: fuel gas supply pipes
64: fuel gas supply pipe
64c: pressure fluctuation suppression flowpath resistance section
66: manifold (diffusion chamber)
76: air introducing pipe
76a: spray opening
82: exhaust gas discharge pipe
83: ignition device
84: fuel cell
85: exhaust valve
86: inside electrode terminals (caps)
98: gas flowpath fine tubing (inflow-side flowpath resistance section, outflow-side flowpath resistance section, restricted flowpath, acceleration portion) 98a: outflow-side opening end
110: control section (controller)
110a: shutdown circuit
110b: pressure retaining control circuit
112: operating device
114: display device
116: warning device
126: power state detecting sensor (power demand detection means)
132: fuel flow volume sensor (fuel supply amount detection sensor)
138: pressure sensor (reformer pressure sensor)
142: generating chamber temperature sensor (temperature detection means)
148: reformer temperature sensor
150: outside air temperature sensor

## Claims

1. A solid oxide fuel cell (1) for generating electricity by reacting hydrogen and oxidant gas in a fuel cell unit (16),
the fuel cell unit (16) comprises:
a fuel electrode (90) to which hydrogen is supplied, wherein the fuel electrode (90) comprises a composite material containing nickel and shrinks by oxidation in the temperature range between 350° and 400° Celsius ;
an oxidant gas electrode (92) to which oxidant gas is supplied; and
a solid electrolyte (94) placed between the fuel electrode (90) and the oxidant gas electrode (92); and
a reaction prevention layer (95) placed between the fuel electrode (90) and solid electrolyte (94) to prevent a chemical reaction between the fuel electrode material and the solid electrolyte material ;
wherein the fuel cell unit (16) contains a fuel gas flowpath (88) for directing fuel gas containing hydrogen ; and
the fuel cell unit (16) has an electrical generation laminated section (16c) in which the fuel electrode (90), the reaction prevention layer (95), the solid electrolyte (94) and the oxidant gas electrode (92) are laminated in that order starting from the fuel gas flowpath side; ;
wherein the solid oxide fuel cell (1) has:
a fuel cell module (2) comprising the aforementioned fuel cell unit (16);
a fuel supply apparatus (38) for supplying fuel to the fuel cell module (2);
a water supply apparatus (28) for supplying steam reforming water to the fuel cell module (2);
an oxidant gas supply apparatus (44) for supplying oxidant gas to the oxidant gas electrode (92) of the fuel cell unit (16);
a reformer (20) disposed inside the fuel cell module (20), for steam reforming fuel supplied from the fuel supply apparatus (38) using water supplied from the water supply apparatus (28);
a fuel/exhaust gas passage (21 b) for directing fuel/exhaust gas to outside the fuel cell module (2) from the fuel supply apparatus (38) through the reformer (20) and the fuel cell unit fuel gas flowpath (88); and
a controller (110) for controlling the fuel supply apparatus (38), the water supply apparatus (28), the oxidant gas supply apparatus (44), and the extraction of power from the fuel cell module (2);
wherein the controller (110) is equipped with a shutdown circuit (110a) for stopping the supply of fuel and electrical generation,
the fuel/exhaust gas passage (21 b) is configured to function as a mechanical pressure retaining means for maintaining pressure inside the fuel gas flowpath (88) of the fuel cell units (16) at a higher level than the pressure outside the fuel cell units (16) in the fuel cell module (2) until the temperature of the fuel electrodes (90) declines to 400°C after the supply of fuel and generation of electricity is stopped by the shutdown circuit (110a); and
the shutdown circuit (110a) has a pressure maintaining control circuit (110b) for executing a pressure retaining control to increase pressure inside the fuel gas flowpath (88) in order to maintain the entire surface of the fuel gas flowpath side of the fuel electrode (90) forming the electrical generation laminated section (16c) in an oxy-gen-free atmosphere by suppressing pressure drops in the fuel gas flowpath (88) caused by temperature drops in the fuel electrode (90) down to 350°C after the fuel electrode temperature declines to 400°C.

2. The solid oxide fuel cell of Claim 1, wherein the fuel gas flowpath (88) has an outflow-side opening end communicating with the outside of the fuel cell unit (16);
the fuel cell unit (16) has a buffer portion (16b) between the outflow-side opening end and the electrical generation laminated section (16c) along the fuel gas flowpath (88); and
the buffer portion (16b) has an outflow-side flowpath resistance section.

3. The solid oxide fuel cell of any of Claims 1 to2, wherein the solid oxide fuel cell (1) is arranged so that after electrical generation stops and the fuel electrode temperature has declined to a predetermined temperature at or below 300°C, residual gas in the fuel gas flowpath (88) is discharged by supplying air to the fuel gas flowpath.

4. The solid oxide fuel cell of any of Claims 1 to3, wherein the pressure retaining control circuit executes a pressure retaining control to raise the pressure in the fuel gas flowpath (88) so that the pressure inside the fuel gas flowpath (88) is maintained at a pressure at or above the pressure outside the individual fuel cell unit (16) when the temperature of the fuel electrode (90) is in a range of 380°C ±20°C.

5. The solid oxide fuel cell of any of Claims 1 to4, wherein the fuel/exhaust gas path (21 b) functions as a mechanical pressure retaining means for maintaining pressure inside the fuel gas flowpath (88) of the individual fuel cell unit (16) at a higher level than the pressure outside the individual fuel cell unit (16) in the fuel cell module (2) until the temperature of the fuel electrodes (90) declines to 400°C after the supply of water, fuel, and generation of electricity is stopped by the shutdown circuit (110a);
the pressure retaining control circuit (110b) vaporizes water and produces steam inside the reformer (20) by causing the water supply apparatus (28) to operate after the fuel electrode temperature has declined to 400°C, and by using steam pressure to control the pressure drop inside the fuel gas flowpath (88) of the individual fuel cell unit (16), inflow of oxidant gas to the fuel gas flowpath (88) is suppressed; and
when the supply of water by the pressure retaining control circuit (110b) ends and the temperature of the fuel electrode (90) has dropped to a predetermined temperature at or below 300°C, the controller (110) supplies air to the fuel gas flowpath (88) in order to discharge fuel remaining in the fuel gas flowpath (88) of the fuel cell units (16).

6. The solid oxide fuel cell of any of Claims 1 to5, wherein the shutdown circuit (110a) executes a stop according to a program stop mode for stopping the supply of fuel and the generation of electricity at a planned time;
the program stop mode includes:
a first temperature reduction step for reducing the temperature outside the fuel cell unit (16) inside the fuel cell module (2) immediately before stopping the supply of fuel and electrical generation;
a second temperature reduction step for reducing the temperature outside the fuel cell unit (16) inside the fuel cell module (2) immediately after stopping the supply of fuel and electrical generation;
a step wherein the pressure retaining control circuit (110b) vaporizes water and produces steam inside the reformer (20) by causing the water supply apparatus to operate after the fuel electrode temperature has declined to 400°C, using steam pressure to control the pressure drop inside the fuel gas flowpath (88) of the fuel cell unit (16) and suppress the inflow of oxidant gas to the fuel gas flowpath; and
a step wherein when the supply of water by the pressure retaining control circuit (110b) ends and the temperature of the fuel electrode has dropped to a predetermined temperature at or below 300°C, the controller (110) supplies air to the fuel gas flowpath (88) in order to discharge fuel remaining in the fuel gas flowpath (88) of the fuel cell unit (16).

## Patentansprüche

1. Festoxidbrennstoffzelle (1) zur Erzeugung von Elektrizität durch Reaktion von Wasserstoff und einem Oxidationsgas in einer Brennstoffzelleinheit (16),
wobei die Brennstoffzelleinheit (16) umfasst:
eine Brennstoffelektrode (90), welcher Wasserstoff zugeführt wird, wobei die Brennstoffelektrode (90) einen Verbundwerkstoff umfasst, welcher Nickel enthält und durch Oxidation im Temperaturbereich zwischen 350° und 400°C schrumpft;
eine Oxidationsgaselektrode (92), welcher Oxidationsgas zugeführt wird; und
ein Festelektrolyt (94), welches zwischen der Brennstoffelektrode (90) und der Oxidationsgaselektrode (92) angeordnet ist; und
eine Reaktionsverhinderungsschicht (95), welche zwischen der Brennstoffelektrode (90) und dem Festelektrolyt (94) angeordnet ist, um eine chemische Reaktion zwischen dem Material der Brennstoffelektrode und dem Material des Festelektrolyts zu verhindern;
wobei die Brennstoffzelleinheit (16) einen Brennstoffgasfließweg (88) aufweist, um wasserstoffhaltiges Brennstoffgas zu leiten; und
wobei die Brennstoffzelleinheit (16) eine laminierte Sektion (16c) zur Elektrizitätserzeugung aufweist, in welcher die Brennstoffelektrode (90), die Reaktionsverhinderungsschicht (95), der Festelektrolyt (94) und die Oxidationsgaselektrode (92) in dieser Reihenfolge auflaminiert sind, beginnend von der Seite des Brennstoffgasfließweges;
wobei die Festoxidbrennstoffzelle (1) umfasst:
ein Brennstoffzellmodul (2), welches die vorgenannte Brennstoffzelleinheit (16) enthält;
eine Brennstoffzufuhrvorrichtung (38) zur Zufuhr von Brennstoff zu dem Brennstoffzellmodul (2);
eine Wasserzuführungsvorrichtung (28) zur Zufuhr von dampfreformierendem Wasser zu dem Brennstoffzellmodul (2);
eine Oxidationsgaszufuhrvorrichtung (44) zur Zufuhr von Oxidationsgas zur Oxidationsgaselektrode (92) der Brennstoffzelleinheit (16);
einen Reformer (20), welcher innerhalb des Brennstoffzellmoduls (2) angeordnet ist, zur Dampfreformierung von Brennstoff, der von der Brennstoffzufuhrvorrichtung (38) zugeführt wird, unter Verwendung von Wasser, welches von der Wasserzufuhrvorrichtung (28) zugeführt wird;
einen Brennstoff-/Abgasdurchlass (21 b) zum Leiten von Brennstoff/Abgas nach außerhalb des Brennstoffzellmoduls (2) aus der Brennstoffzufuhrvorrichtung (38) durch den Reformer (20) und den Brennstoffgasfließweg (88) der Brennstoffzelleinheit; und
eine Steuerung (110) zum Regeln der Brennstoffzufuhrvorrichtung (38), der Wasserzufuhrvorrichtung (28), der Oxidationsgaszufuhrvorrichtung (44), und der Entnahme von Energie aus dem Brennstoffzellmodul (2);
wobei die Steuerung (110) mit einem Abschaltkreis (110a) zum Anhalten der Brennstoffzufuhr und der Elektrizitätserzeugung ausgestattet ist,
der Brennstoff-/Abgasdurchlass (21b) darauf ausgelegt ist, als mechanische Druckerhaltungsvorrichtung zur Aufrechterhaltung des Drucks innerhalb des Brennstoffgasfließwegs (88) der Brennstoffzelleinheiten (16) auf einem höheren Level als dem Druck außerhalb der Brennstoffzelleinheiten (16) in dem Brennstoffzellmodul (2) zu dienen, bis die Temperatur der Brennstoffelektroden (90) auf 400° absinkt, nachdem die Zufuhr von Brennstoff und Erzeugung von Elektrizität durch den Abschaltkreis (110a) angehalten wurde; und
der Abschaltkreis (110a) einen Druckerhaltungskontrollkreis (110b) aufweist, um eine druckerhaltende Steuerung durchzuführen, um den Druck innerhalb des Brennstoffgasfließwegs (88) zu erhöhen, um die gesamte Oberfläche der dem Brennstoffgasfließweg zugewandten Seite der Brennstoffelektrode (90), welche die laminierte Sektion (16c) zur Erzeugung Elektrizität in einer sauerstofffreien Atmosphäre zu halten, indem Druckabfälle in dem Brennstoffgasfließweg (88) unterdrückt werden, welche von Temperaturabfällen in der Brennstoffelektrode (90) hinunter auf 350° erzeugt werden, nachdem die Brennstoffelektrodentemperatur auf 400°C abgesunken ist.

2. Festoxidbrennstoffzelle nach Anspruch 1, wobei der Brennstoffgasfließweg (88) ein ausflussseitig öffnendes Ende aufweist, welches mit der Außenseite der Brennstoffzelleinheit (16) kommuniziert;
die Brennstoffzelleinheit (16) einen Pufferabschnitt (16b) zwischen dem ausflussseitigen offenen Ende und dem laminierten Abschnitt (16c) zur Elektrizitätserzeugung entlang des Brennstoffgasfließwegs (88) aufweist; und
der Pufferabschnitt (16b) einen ausflussseitigen Fließwegwiderstandsabschnitt aufweist.

3. Festoxidbrennstoffzelle nach Anspruch 1 oder 2, wobei die Festoxidbrennstoffzelle (1) so angeordnet ist, dass nach Anhalten der Elektrizitätserzeugung und nachdem die Brennstoffelektrodentemperatur auf eine vorherbestimmte Temperatur bei oder unter 300°C abgesunken ist, überschüssiges Gas im Brennstoffgasfließweg (88) durch die Zufuhr von Luft in den Brennstoffgasfließweg ausgetragen wird.

4. Festoxidbrennstoffzelle nach einem der Ansprüche 1 bis 3, wobei der Druckerhaltungskontrollkreis eine druckerhaltende Steuerung durchführt, um den Druck in dem Brennstoffgasfließweg (88) zu erhöhen, so dass der Druck innerhalb des Brennstoffgasfließwegs (88) auf einem Druck bei oder über dem Druck außerhalb der einzelnen Brennstoffzelleinheiten (16) gehalten wird, wenn die Temperatur der Brennstoffelektrode (90) in einem Bereich von 380°C ± 20°C liegt.

5. Festoxidbrennstoffzelle nach einem der Ansprüche 1 bis 4, wobei der Brennstoff-/ Abgasdurchlass (21e) als mechanische Druckerhaltungsvorrichtung zur Erhaltung des Drucks innerhalb des Brennstoffgasfließwegs (88) der einzelnen Brennstoffzelleinheit (16) auf einem höheren Level als dem Druck außerhalb der einzelnen Brennstoffzelleinheit (16) in dem Brennstoffzellmodul (2) fungiert, bis die Temperatur der Brennstoffelektroden (90) auf 400°C absinkt, nachdem die Zufuhr von Wasser, Brennstoff und Erzeugung von Elektrizität durch den Abschaltkreis (110a) angehalten wurde;
der Druckerhaltungskontrollkreis (110b) innerhalb des Reformers (20) Wasser verdampft und Dampf dadurch produziert, dass die Wasserzufuhrvorrichtung (28) veranlasst wird, weiter zu arbeiten, nachdem die Brennstoffelektrodentemperatur auf 400° abgesunken ist, und unter Verwendung von Dampfdruck zur Steuerung des Druckabfalls innerhalb des Brennstoffgasfließwegs (88) der einzelnen Brennstoffzelleinheiten (16), wodurch Zufluss von Oxidationsgas in den Brennstoffgasfließweg (88) unterdrückt wird; und
die Steuerung (110) dem Brennstoffgasfließweg (88) Luft zuführt, um im Brennstoffgasfließweg (88) zurückgebliebenen Brennstoff der Brennstoffzelleinheiten (16) auszutragen, wenn die Wasserzufuhr durch den Druckerhaltungskontrollkreis (110b) endet und die Temperatur der Brennstoffelektrode (90) auf eine vorbestimmte Temperatur bei oder unterhalb 300°C gesunken ist.

6. Festoxidbrennstoffzelle nach einem der Ansprüche 1 bis 5, wobei der Abschaltkreis (110a) einen Stopp entsprechend eines Programmstoppmodus zum Anhalten der Brennstoffzufuhr und der Erzeugung von Elektrizität zu einem geplanten Zeitpunkt durchführt;
wobei der Programmstoppmodus umfasst:
einen ersten Temperaturreduktionsschritt zum Reduzieren der Temperatur außerhalb der Brennstoffzelleinheiten (16) innerhalb der Brennstoffzellmodule (2) unmittelbar vor dem Anhalten der Brennstoffzufuhr und der Erzeugung von Elektrizität;
einen zweiten Temperaturreduktionsschritt zum Reduzieren der Temperatur außerhalb der Brennstoffzelleinheit (16) innerhalb des Brennstoffzellmoduls (2) unmittelbar nach dem Anhalten der Brennstoffzufuhr und der Erzeugung von Elektrizität;
einen Schritt, in welchem der Druckerhaltungskontrollkreis (110b) Wasser verdampft und Dampf innerhalb des Reformers (20) erzeugt, indem die Wasserzufuhrvorrichtung veranlasst wird, weiter zu arbeiten, nachdem die Brennstoffelektrodentemperatur auf 400°C abgesunken ist, unter Verwendung von Dampfdruck zum Steuern des Druckabfalls innerhalb des Brennstoffgasfließwegs (88) der Brennstoffzelleinheit (16) und Unterdrückung des Zuflusses von Oxidationsgas in den Brennstoffgasfließweg; und
einen Schritt, in weichem die Steuerung (110) dem Brennstoffgasfließweg (88) Luft zuführt, um übrigen Brennstoff aus dem Brennstoffgasfließweg (88) der Brennstoffzelleinheit (16) auszutragen, wenn die Wasserzufuhr durch den Druckerhaltungskontrollkreis (110b) endet und die Temperatur der Brennstoffelektrode auf einen vorbestimmten Temperaturwert bei oder unter 300°C abgesunken ist.

## Revendications

1. Pile à combustible à oxyde solide (1) destinée à produire de l'électricité en faisant réagir de l'hydrogène et un gaz oxydant dans une unité de pile à combustible (16),
l'unité de pile à combustible (16) comprenant :
une électrode à combustible (90) qui est alimentée en hydrogène, l'électrode à combustible (90) comprenant un matériau composite contenant du nickel et se contractant par oxydation dans la gamme de température comprise entre 350° et 400° Celsius ;
une électrode à gaz oxydant (92) qui est alimentée en gaz oxydant ; et
un électrolyte solide (94) placé entre l'électrode à combustible (90) et l'électrode à gaz oxydant (92) ; et
une couche de prévention de réaction (95) placée entre l'électrode à combustible (90) et l'électrolyte solide (94) pour empêcher une réaction chimique entre le matériau de l'électrode à combustible et le matériau de l'électrolyte solide ;
l'unité de pile à combustible (16) contenant un passage de gaz combustible (88) pour acheminer du gaz combustible contenant de l'hydrogène ; et
l'unité de pile à combustible (16) ayant une section stratifiée de production d'électricité (16c) dans laquelle l'électrode à combustible (90), la couche de prévention de réaction (95), l'électrolyte solide (94) et l'électrode à gaz oxydant (92) sont stratifiés dans cet ordre en partant du côté du passage de gaz combustible ;
la pile à combustible à oxyde solide (1) ayant :
un module de piles à combustible (2) comprenant l'unité de pile à combustible (16) susmentionnée ;
un appareil d'alimentation en combustible (38) pour alimenter en combustible le module de piles à combustible (2) ;
un appareil d'alimentation en eau (28) pour alimenter en eau de reformage à la vapeur le module de piles à combustible (2) ;
un appareil d'alimentation en gaz oxydant (44) pour alimenter en gaz oxydant l'électrode à gaz oxydant (92) de l'unité de pile à combustible (16) ;
un reformeur (20) disposé à l'intérieur du module de piles à combustible (20), pour reformer à la vapeur le combustible fourni depuis l'appareil d'alimentation en combustible (38) en utilisant l'eau fournie depuis l'appareil d'alimentation en eau (28) ;
un passage de gaz combustible/d'échappement (21 b) pour acheminer le gaz combustible/d'échappement à l'extérieur du module de piles à combustible (2) depuis l'appareil d'alimentation en combustible (38) à travers le reformeur (20) et le passage de gaz combustible (88) de l'unité de pile à combustible ; et
un contrôleur (110) pour contrôler l'appareil d'alimentation en combustible (38), l'appareil d'alimentation en eau (28), l'appareil d'alimentation en gaz oxydant (44), et l'extraction d'énergie du module de piles à combustible (2) ;
le contrôleur (110) étant équipé d'un circuit d'arrêt (110a) pour arrêter l'alimentation en combustible et la production d'électricité,
le passage de gaz combustible/d'échappement (21 b) étant configuré pour fonctionner comme un moyen de rétention de pression mécanique pour maintenir la pression à l'intérieur du passage de gaz combustible (88) des unités de piles à combustible (16) à un niveau supérieur à la pression à l'extérieur des unités de piles à combustible (16) dans le module de piles à combustible (2) jusqu'à ce que la température des électrodes à combustible (90) baisse jusqu'à 400 °C après que l'alimentation en combustible et la production d'électricité ont été arrêtées par le circuit d'arrêt (110a) ; et
le circuit d'arrêt (110a) ayant un circuit de contrôle de maintien de pression (110b) pour exécuter un contrôle de rétention de pression pour augmenter la pression à l'intérieur du passage de gaz combustible (88) afin de maintenir la surface entière du côté passage de gaz combustible de l'électrode à combustible (90) formant la section stratifiée de production d'électricité (16c) dans une atmosphère sans oxygène en supprimant les chutes de pression dans le passage de gaz combustible (88) provoquées par des chutes de température dans l'électrode à combustible (90) jusqu'à 350 °C après que la température de l'électrode à combustible a baissé jusqu'à 400 °C.

2. Pile à combustible à oxyde solide de la revendication 1, dans laquelle le passage de gaz combustible (88) a une extrémité d'ouverture côté flux sortant communiquant avec l'extérieur de l'unité de pile à combustible (16) ;
l'unité de pile à combustible (16) a une partie tampon (16b) entre l'extrémité d'ouverture côté flux sortant et la section stratifiée de production d'électricité (16c) le long du passage de gaz combustible (88) ; et
la partie tampon (16b) a une section de résistance à l'écoulement côté flux sortant.

3. Pile à combustible à oxyde solide de l'une quelconque des revendications 1 et 2, la pile à combustible à oxyde solide (1) étant agencée de telle sorte qu'après que la production d'électricité s'est arrêtée et la température de l'électrode à combustible a baissé jusqu'à une température prédéterminée égale ou inférieure à 300 °C, le gaz résiduel dans le passage de gaz combustible (88) est évacué en introduisant de l'air dans le passage de gaz combustible.

4. Pile à combustible à oxyde solide de l'une quelconque des revendications 1 à 3, dans laquelle le circuit de contrôle de rétention de pression exécute un contrôle de rétention de pression pour faire monter la pression dans le passage de gaz combustible (88) de telle sorte que la pression à l'intérieur du passage de gaz combustible (88) est maintenue à une pression égale ou supérieure à la pression à l'extérieur de l'unité de pile à combustible individuelle (16) quand la température de l'électrode à combustible (90) se situe dans une gamme de 380 °C ± 20 °C.

5. Pile à combustible à oxyde solide de l'une quelconque des revendications 1 à 4, dans laquelle le passage de gaz combustible/d'échappement (21 b) fonctionne comme un moyen de rétention de pression mécanique pour maintenir la pression à l'intérieur du passage de gaz combustible (88) de l'unité de pile à combustible individuelle (16) à un niveau supérieur à la pression à l'extérieur de l'unité de pile à combustible individuelle (16) dans le module de piles à combustible (2) jusqu'à ce que la température des électrodes à combustible (90) baisse jusqu'à 400 °C après que l'alimentation en eau et en combustible et la production d'électricité ont été arrêtées par le circuit d'arrêt (110a) ;
le circuit de contrôle de rétention de pression (110b) vaporise de l'eau et produit de la vapeur d'eau à l'intérieur du reformeur (20) en faisant fonctionner l'appareil d'alimentation en eau (28) après que la température de l'électrode à combustible a baissé jusqu'à 400 °C, et en utilisant la pression de vapeur pour contrôler la chute de pression à l'intérieur du passage de gaz combustible (88) de l'unité de pile à combustible individuelle (16), le flux entrant de gaz oxydant dans le passage de gaz combustible (88) est supprimé ; et
quand l'alimentation en eau par le circuit de contrôle de rétention de pression (110b) se termine et la température de l'électrode à combustible (90) a chuté jusqu'à une température prédéterminée égale ou inférieure à 300 °C, le contrôleur (110) introduit de l'air dans le passage de gaz combustible (88) afin d'évacuer le combustible restant dans le passage de gaz combustible (88) des unités de piles à combustible (16).

6. Pile à combustible à oxyde solide de l'une quelconque des revendications 1 à 5, dans laquelle le circuit d'arrêt (110a) exécute un arrêt en fonction d'un mode d'arrêt programmé pour arrêter l'alimentation en combustible et la production d'électricité à un moment planifié ;
le mode d'arrêt programmé comportant :
une première étape de réduction de température destinée à réduire la température à l'extérieur de l'unité de pile à combustible (16) à l'intérieur du module de piles à combustible (2) juste avant l'arrêt de l'alimentation en combustible et de la production d'électricité ;
une deuxième étape de réduction de température destinée à réduire la température à l'extérieur de l'unité de pile à combustible (16) à l'intérieur du module de piles à combustible (2) juste après l'arrêt de l'alimentation en combustible et de la production d'électricité ;
une étape dans laquelle le circuit de contrôle de rétention de pression (110b) vaporise de l'eau et produit de la vapeur d'eau à l'intérieur du reformeur (20) en faisant fonctionner l'appareil d'alimentation en eau après que la température de l'électrode à combustible a baissé jusqu'à 400 °C, en utilisant la pression de vapeur pour contrôler la chute de pression à l'intérieur du passage de gaz combustible (88) de l'unité de pile à combustible (16) et supprimer le flux entrant de gaz oxydant dans le passage de gaz combustible ; et
une étape dans laquelle, quand l'alimentation en eau par le circuit de contrôle de rétention de pression (110b) se termine et la température de l'électrode à combustible a chuté jusqu'à une température prédéterminée égale ou inférieure à 300 °C, le contrôleur (110) introduit de l'air dans le passage de gaz combustible (88) afin d'évacuer le combustible restant dans le passage de gaz combustible (88) de l'unité de pile à combustible (16).
